# EUROPEAN PATENT APPLICATION

(11) **EP 4 807 635 A1**
(43) Date of publication of application: **16.09.2026**
(21) Application number: 25163986.0
(22) Date of filing: 14.03.2025
(51) Int. Cl.: G06N 10/70, G06N 20/00

(54) **NOISE CHARACTERISATION IN QUANTUM DYNAMICAL PROCESSES**

(71) Applicant: Phasecraft Limited, London Greater London W1T 4PW (GB)
(72) Inventor: SEDDON, James Robert, London, W1T 4PW (GB); LIU, Yinchen, London, W1T 4PW (GB); KOHLER, Tamara, London, W1T 4PW (GB); ONORATI, Emilio, London, W1T 4PW (GB); CUBITT, Toby Stanley, London, W1T 4PW (GB)
(74) Representative: Mathys & Squire

(57) **Abstract**

The invention relates to methods for characterising noise in quantum dynamical processes. The method includes estimating a Lindbladian generator for a noise quantum channel. Eigenvalues of the transfer matrix representing the noisy channel are calculated and a logarithmic branch shift list is applied to explore other branches of the logarithm. An initial guess for the Lindbladian is provided and a fitting procedure is used to improve the best guess estimate of the Lindbladian. The invention also relates to gauge optimisation to characterise State Preparation and Measurement (SPAM) errors.

## Description

The invention relates to systems and methods for characterising noise in quantum dynamical processes in quantum computation.

### Background

Designing useful algorithms for noisy, intermediate scale, quantum (NISQ) devices requires a careful understanding of how noise processes affect computation. More generally, obtaining information on noise processes in any quantum dynamical process is important in understanding that dynamical process. A number of methods have been developed to assess noise in quantum gates and quantum channels.

For example, in previous work algorithms were developed to find the Lindbladian generator which best fits given experimental data. However, this earlier method does not take into account state preparation and measurement (SPAM) errors on the tomographic reconstruction. Tackling the effect of these SPAM errors is crucial to understand noise occurring in real devices, since SPAM errors can be on the same order of magnitude as gate noise. Quantum computers promise potential applications in the simulation of materials, quantum chemistry, optimisation and fundamental physics. While proof-of-concept experiments have increasingly provided evidence that real quantum hardware can yield results that are at least challenging to reproduce classically, to date there has been no demonstration of a real-world practical application of quantum computers that competes in accuracy and precision with the best classical methods, at a scale large enough that it could not be brute-force simulated by a conventional computer. The major roadblock to such large-scale demonstrations is the sensitivity of quantum devices to noise. This issue has been studied for a long time, and in principle is resolved by the theory of quantum error correction and fault tolerance.

However, fault-tolerant quantum computing is known to require very large overheads for meaningful applications, both in terms of the number of qubits and quantum operations required, and the huge throughput of classical data needed for online decoding of syndrome measurements. The upshot is that full fault tolerance requires technical capabilities far beyond that presently available on existing quantum hardware.

In the meantime, the question of whether quantum advantage can be gleaned from near-term noisy devices remains open. Since noise in quantum devices is an inevitability, any such demonstration must necessarily involve the successful deployment of techniques to suppress or mitigate errors. In the absence of generic error correction, it is likely that a detailed understanding of noise processes on real hardware will be invaluable in tailoring error mitigation and suppression techniques so as to maximise the performance of the device at hand. Indeed, a number of leading error mitigation methods depend on a noise characterisation step as an integral part of the protocol. A plethora of noise characterisation methods exist, ranging from fast benchmarking protocols that cheaply provide figures of merit for the current operating status of a quantum device, to more costly tomographic methods that provide fine-grained qualitative and quantitative information about the noise processes afflicting the device at the level of individual qubits and gates.

Quantum process tomography (QPT) is a standard technique that in principle yields a full description of the completely-positive trace-preserving (CPTP) map representing a noisy quantum channel. The quantum and classical computing cost of process tomography grows exponentially with system size, so it is tractable only for characterising few-qubit processes. It can nevertheless be a useful diagnostic tool on real devices, since typically the elementary operations available on present devices themselves act on at most two qubits at a time. One obstacle to the usefulness of QPT is that it is not robust against state preparation and measurement (SPAM) errors, since it implicitly assumes that the preparations and measurements available to the user are ideal. Gate set tomography (GST) is an extension of QPT designed to deal with this problem. Rather than analysing individual gates in isolation, it attempts to self-consistently estimate SPAM errors and gate errors at the same time. Ultimately, both QPT and GST output a set of numerically represented CPTP map estimates. These raw tomographic snapshots can be difficult to interpret and act on. It is often more useful to build a model of the underlying physical process that generates the CPTP map.

A number of methods have been proposed and demonstrated for fitting Lindbladian models to full or partial tomographic data. One approach is to begin by taking the logarithm of a matrix representation of the channel. These methods, first studied formally for non-degenerate channels and subsequently extended to the degenerate case, must contend with the fact that the matrix logarithm is non-unique, and is sensitive to statistical errors in estimating the tomographic data.

The initial theoretical works do not address SPAM or statistical errors at all. An implementable algorithm has been proposed for fitting Lindbladian models to noisy tomographic data. However, this did not fully address the problem of SPAM, and the run-time of the algorithm as stated was extremely long for the two-qubit case, making it somewhat impractical for use on real devices.

Previous work on the task of Lindbladian estimation can broadly be divided into three strands which we call (i) logarithm search methods, (ii) direct numerical optimisation methods, and (iii) ad-hoc methods tailored to particular experimental scenarios. Logarithm search methods attempt to certify or estimate a Lindbladian model by directly taking the matrix logarithm of an input channel. These techniques must directly confront the fact that the complex matrix logarithm is not unique; for a transfer matrix E with a non-degenerate spectrum, there is a countably infinite family of matrices that exponentiate to the given E. In the degenerate case, there is a continuous degree of freedom in the choice of eigenbasis, which leads to an uncountable infinity of matrix logarithms. Therefore, assessing whether a channel is compatible with a time-independent Markovian process means checking whether any branch of the matrix logarithm contains a matrix close to a Lindbladian. It has been shown that for channels with non-degenerate spectrum, this problem can be cast as a mixed-integer semidefinite program. In principle this can be solved efficiently for fixed Hilbert space dimension, though in practice search over a small number of branches is often sufficient. These works, however, did not explicitly deal with how to find the closest Markovian model for noisy tomographic data which possibly arises from a channel with degenerate spectrum.

The problem of statistical and experimental error has been studied (without being fully resolved, particularly from a tractability standpoint) where matrix perturbation theory was used to develop explicit algorithms for Lindbladian estimation from noisy tomographic data. This work also extended the method to deal with time series of tomographic snapshots, and time-dependent Lindbladians. In particular, it has been shown that failure to consider that a non-degenerate channel can result from perturbation of a degenerate channel can lead to a poor choice of matrix logarithm that is far from any Lindbladian. A counter to this is to cluster eigenvalues according to some chosen precision to assess whether the ground truth channel could be degenerate and construct a suitable eigenbasis accordingly. These algorithms then carry out convex optimisations to determine the closest Lindbladian over a finite number of branches of the matrix logarithm, constructed according to the chosen basis. However, in the degenerate case each choice of basis leads to a different set of matrix logarithms. Since the correct basis is not known a priori, the algorithm relies on repeated random sampling of bases. In principle, given enough random samples one should eventually cover the parameter space with sufficient granularity to find a good approximation to the global minimum. In practice the parameter space already becomes extremely large for the two-qubit case; for the example of a noisy ISWAP gate, in one known example this algorithm took around two weeks to run on a standard desktop computer. In fact, there exist certain important two-qubit cases where it is known that a good solution exists, but the optimisation landscape is particularly unforgiving, so that the algorithm is not able to find a close Markovian channel in any reasonable time, even allowing for heavy parallelisation. Another limitation of this method is that its only mechanism to deal with SPAM noise is via an error tolerance parameter. Failure to properly account for SPAM can lead to apparent non-Markovianity or time-dependence in the input channel, preventing a good fit to a Lindbladian model and overestimating gate infidelity. Logarithm search methods have as yet been untested on data collected from real quantum computing hardware.

Prior practical demonstrations of Lindbladian estimation from noisy experimental data have tended to fall under the heading of direct numerical optimisation. The general approach is to define the problem in terms of an objective function that compares a parameterised Markovian channel with the tomographic data, and pass this to an off-the-shelf numerical optimisation solver. Furthermore, gradients of the objective function can often be obtained mechanically via automatic differentiation, and in such cases, gradient-based solvers can also be used. Finally, a good initial guess required by the solvers is often available based on the experimenter's prior knowledge about the input. An early example of this approach estimated the Markovian evolution for a 2-qubit nuclear magnetic resonance (NMR) system by minimising a time-series generalisation of the objective using MATLAB to implement the classic Nelder-Mead simplex search algorithm. More recently, state-of-the-art demonstrations of Lindbladian tomography have used an objective function based on maximum-likelihood estimation (MLE). This has been applied to a 2-qubit idling process on a superconducting qubit device. Quantum process tomography is carried out for a series of different time delays, to build up a time series of tomographic snapshots. SPAM errors are filtered out by preparing a fiducial state and immediately measuring in the standard basis. The resulting SPAM-filtered channel estimates are then fit into a log-likelihood function that is maximised to extract the noisy Lindblad generator of the idling channel. Under the assumption of small noise the log-likelihood function is linearised to simplify the task into a convex-optimisation problem. The procedure is also combined with the compressed sensing technique to reduce the number of required measurements.

Approaches to Lindbladian estimation that fall outside these general methods tend to rely on some assumption about the system being investigated, so that the Lindbladian model is restricted in some way, and the number of parameters to estimate is reduced.

One restricted form of Lindbladian that has recently proved useful in the context of error mitigation on quantum computing devices with limited connectivity is the so-called sparse Pauli-Lindblad model. The method assumes that a single layer of two-qubit gates has an associated Markovian noise process generated solely by local Pauli operators, where the locality is with respect to the connectivity of the device. This yields a Lindbladian that can be specified by a number of parameters that grows only linearly with the system size. The parameters can then be estimated efficiently by fitting the decay of Pauli observables after repeated applications of the gate layer. The scalability of this method makes it appealing for practical implementation, and indeed it has been demonstrated successfully on intermediate-sized superconducting-qubit devices as a step in probabilistic error cancellation and zero noise extrapolation error mitigation protocols. It should be noted, however, that the assumption of a Pauli-Lindblad model is a rather strong one, resting on the assumption that the noisy gate layer can be well-modelled by the ideal gate layer composed with a stochastic Pauli channel with local generators. The stochastic Pauli channel assumption was justified by the fact that gate layers are implemented under a particular randomised compiling protocol known as Pauli twirling. This, as well as the noise characterisation step, in turn relied on the fact that the two-qubit gates being analysed were Clifford gates, and so preserve the Pauli group.

To summarise, prior theoretical work on the general problem of fitting a Lindbladian to tomographic data has tended to focus on logarithm search techniques. Meanwhile, all practical demonstrations of Lindbladian fitting on real experimental data have eschewed logarithm search, instead adopting either direct numerical optimisation, a restricted model tailored to a specific experimental scenario, or some combination of the two.

The present invention aims to overcome the above drawbacks, specifically with regard to logarithmic search approaches.

### Statement of the Invention

Here, the inventors consider an approach in which an attempt is made to understand the channel as a solution to a quantum master equation. In particular, it is often assumed that noisy processes on quantum devices (quantum dynamics, including but not limited to e.g. the execution of quantum computation gates) are well approximated by memoryless, or Markovian, dynamics. We say that a noisy quantum dynamical process is time-independent Markovian if it can be expressed as a master equation in Lindblad form: $\frac{dρ}{dt} = L \left(ρ\right)$ where *ρ* = exp(*t* )*ρ*₀ for some initial condition *ρ*₀ and where the Lindbladian generator *L* of the dynamics must satisfy certain conditions that are reviewed later. Extracting the Lindbladian generator 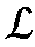 can yield qualitative information about the noise that is otherwise obscured when considering the process in the channel picture.

Moreover, whereas a numerical representation of a CPTP map *ε*_{*t*₀} gives a snapshot of a quantum process at a particular moment in time *t*₀, a time-independent Lindbladian generator can be exponentiated to yield the dynamics at *any* time, *εₜ* = exp( 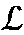 *t*).

This invention introduces algorithmic improvements to reduce the run-time and strengthen robustness to statistical perturbation in practical cases. Ideas from gate set tomography are then used to show that Lindbladian fitting techniques can also be made robust against realistic SPAM errors. The application of this approach to tomographic data collected from real noisy quantum computing hardware accessed via the cloud is demonstrated.

Specifically, the methods and systems disclosed herein tackle this specific issue, and provide improved Lindbladian-extraction algorithms by developing a separate procedure built on gate-set tomography to filter out SPAM errors.

Subsequently, using one or a few tomographic snapshots as input, a comprehensive alternating optimisation algorithm has been designed that alternates the Lindbladian-extraction scheme with the novel SPAM-filtering protocol in order to progressively approach the best approximation of the purely dynamical noise with a Markovian dynamics.

In this document, algorithmic improvements to logarithm search are introduced, demonstrating that it can be applied in practice to settings relevant for current quantum computing hardware. Additionally, the task of Lindbladian fitting is augmented with techniques from gate set tomography to improve robustness against state preparation and measurement (SPAM) errors, which can otherwise obfuscate estimates of the model underlying the process of interest.

Disclosed herein is a method of estimating a Lindbladian generator of a quantum channel representing a noisy implementation of a quantum dynamical processes on a system of dimension *d*, the method comprising:
(1) providing a *d*² × *d*² transfer matrix, *E*, representing the noisy quantum channel and computing a set of eigenvalues, *µⱼ*, and corresponding right and left unit eigenvectors *rⱼ* and *lⱼ* of E, where *j* ∈ {1, ..., *d*²};
(2) for each *µⱼ*, calculating *λⱼ* = ln(*µⱼ*), such that *e^{λ^{j}} = µⱼ* and |lm(*λⱼ*)| ≤ *π*;
(3) identifying a set of *n* ≤ *d*² distinct eigenvalues and computing an eigenspace projector Π*ₖ* for an eigenspace associated with each distinct eigenvalue, where *k* ∈ {1, ... ,*n*};
(4) providing a logarithmic branch shift list, M = {*mⱼ*}, indicating which logarithmic branch is to be considered for each *λⱼ* and modifying each *λⱼ* by adding its respective logarithmic branch shift to provide *λ̂ⱼ = λⱼ* + 2*πmⱼi,* wherein each *mⱼ* is an integer between -*mₘₐₓ* and *mₘₐₓ*;
(5) providing an initial guess of a Lindbladian, *L*₀ and randomly perturbing *L*₀ to provide *L̃*₀;
(6) computing eigenvalues *λ̃*₁ ... *λ̃*_{*d*₂} and corresponding eigenvectors *ṽ*₁ ... *ṽ*_{*d*₂} of *L̃*₀;
(7) noting the rank, *wₖ,* of each of the n projectors, Π*ₖ* and computing a cost, ∥*ṽⱼ* - Π*ₖṽⱼ*∥ II for each possible pairing of *j* and *k* and finding the lowest cost assignment of {*ṽⱼ* : *j* ∈ {1, ... , *d*²}} onto {Π*ₖ* : *k* ∈ {1, ... , *n*}};
(8) constructing a *d*² × *d*² matrix, *K* by, for each ik:
   (i) noting the set of eigenvectors ${{v}^{˜}}_{{i}_{k , 1}} … {{v}^{˜}}_{{i}_{k , {w}_{k}}}$ assigned to each Π*ₖ* in step (7)
   (ii) computing a cost |*λ̂_{i_{k,a}}* - *λ̂_{i_{k,b}}*| for each 1 ≤ *a* ≤ *wₖ* and 1 ≤ *b* ≤ *wₖ*;
   (iii) identifying a minimum cost perfect matching *Wₖ* between the sets $\left\{{\hat{λ}}_{{i}_{k , 1}},…,{\hat{λ}}_{{i}_{k , {w}_{k}}}\right\}$ and $\left\{{\hat{λ}}_{{i}_{k , 1}},…,{\hat{λ}}_{{i}_{k , {w}_{k}}}\right\}$; and
   (iv) for {*λ̂_{i_{k,a}},λ̂_{i_{k,b}}*} ∈ *Wₖ,* setting the *i_{k,a}*-th column of *K* to Π*ₖṽ_{i_{k,b}}*;
(9) Constructing a matrix *D̂* = Diag(*λ̂*₁ ... *λ̂*_{*d*₂}), computing *A̅ = KD̂K*^{*-*1}*,* and computing an optimal solution *L̅* to a convex optimisation problem by solving $\overline{L} = {min}_{L} \left‖L-\overline{A}\right‖$ subject to the constraint that *L* is a Lindbladian;
(10) checking whether ∥*e^{L̅}* - *E*∥ < ∥*e*^{*L*⁰} - E||; and
(11) if ∥*e^{L̅}* - *E*∥ < ∥*e*^{*L*⁰} - *E*∥ outputting *L̅* as the estimated Lindbladian generator.

In general in this document, unless otherwise specified the notation: ∥*x*∥ is used to refer to the vector 2-norm where *x* is a vector and the Frobenius norm where *x* is a matrix. |*x*| is used to represent the absolute value of a complex number, x.

Broadly, the above process starts with a characterisation of noise in a noisy channel (provided by *E*), and estimates a Lindbladian generator which heuristically generates that noise, thereby to provide a characterisation of the noise in the noisy channel. That is, the Lindbladian provided by this process is an estimated Lindbladian, and the terms "estimating a Lindbladian generator" and "[providing] the estimated Lindbladian" are used interchangeably.

In our work we use "quantum channel" synonymously with completely positive trace-preserving (CPTP) map, although more general scenarios do exist where the evolution cannot be represented by a CP-map. For the purpose of this document, if the instantaneous dynamics can be well modelled by a Lindbladian, then the evolution over time can be represented by a quantum channel. For real devices there are various effects that will distort the measured transfer matrix so that it may not exactly be a CPTP map. For this reason it is not a requirement that the input tomographic data be exactly CPTP. Nevertheless we tend to assume that the ground truth evolution is CPTP.

Repeated executions can be used (starting from the previously found Lindbladian generator) to iteratively improve the estimate. The matrix E is a square matrix of dimension *d*²*,* which is derived in essence from the number of qubits the quantum gate is to operate on. Since a 2-qubit gate is described by a 4 × 4 matrix, *d* is 4 in such an example, and *E* is a 16 × 16 matrix. In general, a ip-qubit gate leads to an *E* having dimension (2^{p})² = 2^{2p}.

Here, we use the terms "quantum channel" and "quantum dynamics" somewhat interchangeably. For the avoidance of doubt, "quantum dynamics" refers to any time evolution of a quantum system (for example the master equation of Equation 1 above), which in general is subject to noise processes, which the present invention seeks to characterise. A "quantum channel" refers to a completely positive trace-preserving (CPTP) map on the space of density matrices (for example, the time independent Lindbladian will exponentiate to the CPTP map *εₜ* = exp( 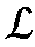 *t*)), and can be thought of as representing a snapshot of the quantum dynamics after some time interval *t*, and refers to the operation mapping *ρ*₀ → *ρ,* that is, *ρ = εₜρ*₀*.* In this disclosure, it will be the case that the dimensions of the input and output density matrices (say *ρ*₀ and *ρ* respectively) will have the same size, since the Lindbladian dynamics already pertain to a reduced system of interest, with a fixed Hilbert space.

In this document, we refer to general quantum dynamical processes to describe a general quantum system undergoing a time evolution that may be subject to environmental influences (noise). We note that subsets of general quantum dynamical processes may include, but are not limited to, evolution under: individual quantum gates, an *n*-qubit system comprising a sequence of quantum gates, an (*n* + *m*)-qubit circuit with tomography applied to n-qubits (described below), or idling processes (wherein a set of qubits are initialised and held before measuring, also described below). There are other instances of quantum dynamical processes that may wish to be described, for instance through the use of microwave pulses or lasers, where an experimenter may not have access to, or it may not be appropriate to use, a discrete set of quantum gates.

Therefore, while the discussions presented in this document may use quantum computational gates as specific examples, it is to be understood that the methods apply to the broader class of quantum dynamical processes. In this context, it should be noted that "quantum gate set tomography" is also to be understood as not limited to quantum computation gates as such. The term covers: sets of multiple gates, quantum channels, quantum dynamical processes, or anything else that can represent general quantum dynamics/time evolution processes.

The transfer matrix derived by the output of process tomography is a standard method for estimating channels using measurements on a quantum device. As noted in detail below this comprises implementing the same operation on a quantum device a number of times using different input states and measuring the output in different bases to build up a picture of the effects of noise in the process. Choosing the set of inputs has the effect of choosing a gauge for the process. The gauge itself can be optimised by making use of gauge optimisation (discussed below). In some cases, for example, L may be optimised (as set out above), fed into a second process to optimise the gauge, then these processes looped until convergence on a good estimate of a gauge-L pair.

In this document, a noisy implementation of a quantum dynamical process (for example, a sequence of gates) can be thought of in terms of an idealised (mathematically exact, noise free) quantum dynamical process being studied, where we seek to characterise the noise which is introduced when we actually try and implement that gate on a quantum computer. Note that the noise introduced is dependent on the specific quantum computation environment used. This link between the idealised quantum computation gate and the noisy implementation of that gate should be borne in mind throughout.

Once eigenvectors (e.g. right eigenvectors) have been obtained, a matrix can formed in which the columns are the right eigenvectors. Inverting this matrix results in a matrix where the rows are the left eigenvectors. The product |***r***〉〈***l***| has unit norm. In a world where noise didn't affect the measurement, the input would be a perfect gate constructed from a set of (linearly independent) right and left eigenvectors: *P* = Σ*ᵢ**λ**ᵢ*|***r**ᵢ*〉〈***l**ᵢ*|, having some distinct, and some degenerate eigenvalues (in general). However, noise and statistical errors can cause some degenerate eigenvalues to be shifted so that they appear distinct. One of the technical problems addressed by the present invention is to attempt to recover the true underlying degeneracy structure from the perturbed (i.e. noisy) gate tomography. From the measured tomography, we can infer an estimated transfer matrix, for example by linear inversion. From here we can use standard methods to extract the eigenvectors and eigenvalues.

In order to generate the eigenspace projector, Π*ₖ*, a sum over |***r***〉〈***l***| for fixed eigenvalue is calculated. Distinct eigenvalues result in respective projectors so where all are distinct, we have *d*² separate projectors of rank 1, when there is no degeneracy there is one projector of rank *d*² (this is just the identity channel). When *n < d*² (i.e. some eigenvalues are degenerate), the projectors have higher rank, equal to the multiplicity of the eigenvalues. All |***r***〉〈***l***| will be used in order to span the subspace. In any event, the sum of the ranks of all projectors found in this manner will add up to *d*²*.*

In step (4), a logarithmic branch shift list is provided. This has physical basis in the assumption that the ground truth Lindbladian is not too far away from the ideal Lindbladian. Physically this is related to the weak noise assumption. When we take the matrix logarithm of the noisy input, the imaginary part of the principal log of each eigenvalue always falls between -π and π. Noise can perturb the value such that we end up in a different logarithmic branch, although we cannot know which branch specifically for any given eigenvalue (and they are all different, in general). This step acts to perturb each eigenvalue into a different logarithmic branch (by shifting in a positive or negative value up to a maximum distance |*mₘₐₓ*|)*·*

We need to trial different values of *mⱼ* for each eigenvalue to attempt to recover the correct branch. The method therefore proceeds by selecting an assignment for each *λⱼ* such that each *λⱼ* is shifted independently by a value between -*mₘₐₓ* and *mₘₐₓ* where |*mₘₐₓ*| is an integer of value 1 or higher. These are randomly or intelligently chosen and then fixed for the following steps. We then optimise the search for a Lindbladian in that set of branches. This can involve repeating the process with additional perturbations, accepting better and better Lindbladians until either convergence or we reach a maximum allowed number of iterations (e.g. set by user based on time or resource constraints). At this stage we have the best form of that branch vector, *M.* Different forms of *M* can be used in further repetitions to try to improve the convergence of *L.* Where |*mₘₐₓ*| is finite, in principle all combinations of *M* can be tried.

The magnitude of *mₘₐₓ* is chosen to capture the expected shifts due to noise in the process being considered. This depends in some cases on the type of process we are trying to interrogate. If, for example, the true underlying noise process has coherent noise components with some high frequency *f*, but the shortest time at which we are able to "stop" the process is much larger than 1/*f*, then we will not be able to resolve the frequency *f* by looking at low lying branches of the logarithm. Higher branches must be considered in this case, to prevent the algorithm characterising that component as having a lower frequency (e.g. in an aliasing effect).

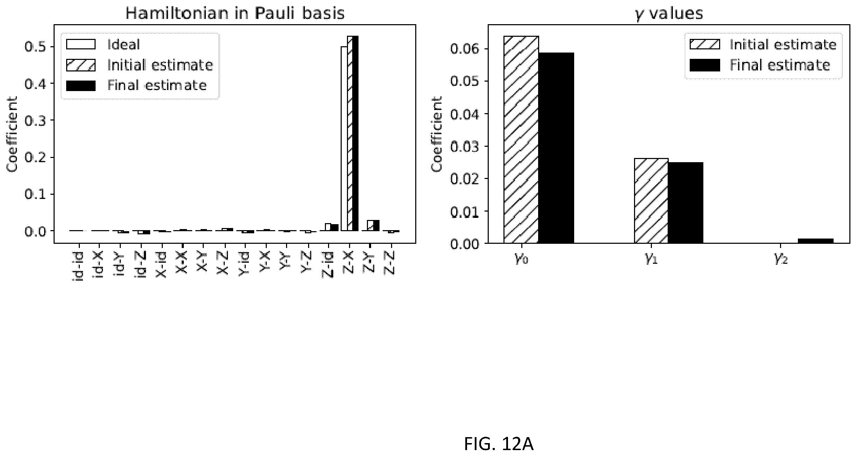

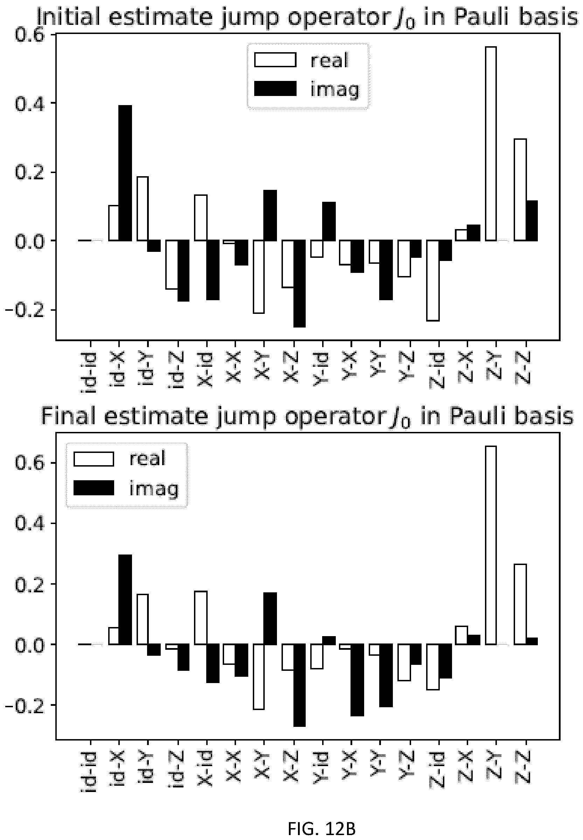

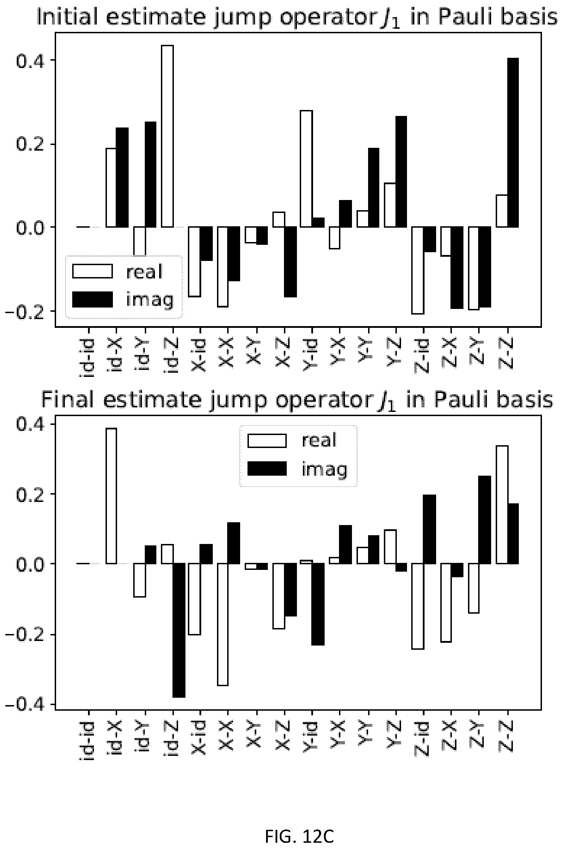

For example, if we are trying to characterise noisy gates from a discrete gate set, we cannot resolve noise components with period much smaller than the gate time. However, if the process has noise this strong then the process will typically be very far from the intended gate. In such cases, the extreme noise of the process may prevent accurate characterisation of that noise (although in these cases, the gate is performing so poorly that noise characterisation is unlikely to be the main problem in any event). Usually on current devices, coherent noise looks like a small perturbation to the ideal Hamiltonian, so the timescale of coherent errors is much longer than application of a single gate. As an example, in this document we look at cases where we repeat the application of a gate to amplify the noise (see detailed description, particularly Figures 12 to 14 and the associated discussion). The perturbations to the Hamiltonian in these examples are small compared to the main ZX component. Even after 5 repetitions of the gate, the noise is not strong enough to wrap around and require considering branches where |*mₘₐₓ*| > 1. The question is a bit more subtle when we have continuous time control (e.g. considering delays or pulse control). In this case care needs to be taken to choose the timing so that the noise is strong enough to be characterised, but not so strong that it overwhelms the ideal process.

The initial guess for *L* can be provided in many ways. For example a prior execution of this method can be fed back into the method. In other cases if the ideal gate under consideration is known, it is possible to compute a generating Hamiltonian, which can be used to construct the initial guess for the Lindbladian.

A random perturbation is applied to the initial guess for L in order to improve the estimate extracted in this process. Where there is no randomness in the initial guess, the algorithm suffers in that the same input data will always lead to a failure, if a first run through fails to converge on a suitable answer. This deadlock can be broken by introducing a random element. On the other hand, we observe that we typically do not need a very large number of random starts for the algorithm to succeed.

An intuition to understand this is as follows. It is often the case that the eigenvector structure of the initial guess does not exactly match that of the data (degeneracy can be broken by gate noise). For a degenerate subspace, the routine for finding eigenvalues/eigenvectors will make an arbitrary choice as to what the eigenvectors of the initial guess should be. The algorithm is inherently sensitive to this choice, because it determines the vectors available for the subspace/eigenvector matching problem in step (7), and a poor choice can take the algorithm off in a bad direction, causing it to fail to get a good estimate. If we do not perturb, we in effect surrender the choice of eigenvectors to the idiosyncrasies of whatever software package we use to solve the eigenvalue problem for *L₀.* By randomly perturbing, we give ourselves the ability to randomly choose a starting direction for the algorithm. Empirically this turns out to be a useful aspect to improve the operation of the algorithm.

In step (7), we aim to find the best overall mapping between (i.e. most alignment between) eigenvectors of the transfer matrix and those of L by considering all eigenvectors of the initial guess (or current best guess where the process is repeated) and seeing how much they change when projected (using Π*ₖ* projectors) onto the subspaces of the transfer matrix. Then search over all assignments in which each eigenvector *of L* is paired with a different projection from the set of projectors and select the one with the lowest total cost (i.e. smallest cumulative misalignment across all full assignments). This can be thought of as considering each Π*ₖ* as having a number, *n,* of slots to which we match exactly *n* eigenvectors of the perturbed *L* and then carry on assigning until all have been matched. This works because the Π*ₖ* is constructed from n-fold degenerate eigenvectors, so has rank *n,* and can therefore correspond to exactly n eigenvectors of *L.* Here a "best" overall mapping is one which ensures each eigenvector is paired with a projection, and where the overall cost for the aggregate arrangement is lowest, according to some metric. The specific metric is selectable by the user, but generally the idea is to find, for a given eigenvector, the best (closest) alignment between that eigenvector and the projection. The aggregate cost of all such pairings can be calculated and the best assignment is the one with the lowest such aggregate cost.

In step (8), the index *i* is used to track the specific mapping of the eigenvectors to each subspace, once the lowest cost assignment is found. Specifically, the form of this index, *i_{k,a}*, represents the index given to the *a*^{th} eigenvector assigned to the *k^{th}* subspace. For example, if the assignment is such that the k = 3 subspace has degeneracy *w*₃ = 2 and we happen to assign *v*₅ and *v*₈ to that subspace, then we have the indices *i*_{3,1} = 5 and *i*_{3,2} = 8, which represent both of the two (*a* = {1,2}) eigenvectors assigned to the k = 3 subspace in a compact and clear format.

By matching these up using a minimum cost approach, we are able to prepare the matrix *K*, which captures the pairings between eigenvectors and subspaces.

The method as defined doesn't make assumptions about the size of system, and can be applied to qubit gates of any size in principle. An assumption underlying the method is that the ground truth is well modelled by some Markovian process. Beyond this, the algorithm does not require any particular class of operation.

Optionally, the method further comprises, prior to executing step (11) performing steps (6) to (10) in order an additional *T* ≥ 1 times; wherein for each additional execution of steps (6) to (10):
in step (6) *L̃*₀ is replaced by *L̅* from the most recent execution of step (9); and
in step (9) a check is made as to whether ∥*e^{L̅t}* - *E*∥ < ∥*e*^{*L̅t-*1} - *E*∥, where 1 ≤ *t* ≤ *T* indexes the number of additional executions of steps (6) to (10). This process allows the improved Lindbladian found in one execution to be used as a better starting point for a subsequent execution.

Optionally, the method halts in the event that:
∥*e^{L̅t}* - *E*∥ ≥ ∥*e*^{*L̅t-*1} - *E*∥, in which case *L̅*_{*t*-1} is output as the Lindbladian generator; or
*t = T,* in which case *L̅ₜ = L̅_{T}* is output as the Lindbladian generator. Here *T* is a maximum time a user allows the process to continue, due e.g. to cost or time constraints. This allows for a stopping condition in which either the successive estimates are no longer getting better in successive loops, or convergence is taking longer than a user desires.

Optionally, the method further comprises repeating the entire method at least one further time using a different random perturbation in step (5); and wherein the Lindbladian generator having the lowest value of ∥*e^{L̅}* - *E*∥ across all executions is output as the Lindbladian generator. This allows the user to manipulate the perturbation to explore the space of possible solutions in a different manner.

The perturbation may have the form: ${{L}^{˜}}_{0} = {L}_{0} + R ;$ or ${{L}^{˜}}_{0} = {L}_{0} + {H}^{⊗ 2 n} {RH}^{⊗ 2 n} ;$ wherein the quantum dynamical process is associated with a system of *n* qubits, *R* is a random diagonal matrix with a small norm, and *H* is the Hadamard gate.

As examples of quantum dynamics beyond e.g. quantum computation gates, suppose an experimenter has access to a system of *n* spins, subject to a fixed system Hamiltonian, but weakly coupled to a bath which is at some finite temperature. Here the spins can act like an unconventional form of qubits (in the sense that they are not necessarily part of a formal quantum computing arrangement). Suppose the experimenter is able to address the system qubits sufficiently well that they can prepare any tensor product of single-qubit states on the system qubits, and measure in any single-qubit basis, but has no direct access to the physical system making up the bath. It is possible to perform quantum process tomography on the n system-qubits, obtaining an estimate for a transfer matrix of dimension *d*² × *d*² where d = 2*ⁿ*.

More generally, the dimension of the "system" in the sense used here is determined by how many qubits the experimenter prepares states and measures on. There is an element of choice to this. For example perhaps the user has access to a 50-qubit device, but they choose to study only a two-qubit subsystem, perhaps while turning some gates on elsewhere on the device. In such a case, the process being characterised would be the effective dynamics of the reduced two-qubit subsystem, rather than that of the full 50 qubit device, albeit the other 48 qubits would impact the noise characterisation of the two-qubit process.

These perturbations are typically chosen to have a tolerance in line with a user's preferences. The norm of the perturbation should be small compared to the distance between the ideal and ground truth Lindbladian. In general, this is not known a priori, but a reasonable guess is possible.

Optionally, in step (3) any two eigenvalues, *µⱼ,µₖ* are declared as degenerate when |*µⱼ* - *µₖ*| ≤ *β,* and otherwise are declared as distinct, where *β* is a predetermined precision parameter. Note that, as noted above, it is the susceptibility to noise which makes the identification of the correct degeneracy structure difficult (e.g. causes degenerate eigenvalues to appear distinct), so the parameter *β* can be thought of as a decision to be made by a user to seek only distinctions which are larger than *β*.

Optionally, the lowest cost assignment in step (7) is solved using a minimum cost, maximum flow optimisation procedure. This approach allows the assignment to be cast as a flow problem and existing techniques for finding optimal solutions can then be applied to the problem.

Optionally the minimum cost, maximum flow optimisation procedure includes: constructing a directed graph having 2 + *d*² + *n* vertices, wherein each eigenvector *ṽⱼ* : *j* ∈ {1, *..., d*²}*,* and each eigenspace projector Π*ₖ* : *k* ∈ {1, ... , *n*} is associated with a different vertex, the remaining two vertices being a source vertex, *s* and a sink vertex, *t*; joining each vertex associated with each eigenvector *ṽⱼ* to the source vertex, *s,* with edges each having capacity 1 and weight 0; joining each vertex associated with each eigenvector *ṽⱼ* to each vertex associated with each eigenspace projector Π*ₖ* with edges each having capacity 1 and weight proportional to ∥*ṽⱼ -* Π*ₖṽⱼ*∥ for the two vertices which that edge joins; joining each vertex associated with each eigenspace projector Π*ₖ* to the sink vertex, *t,* with edges each having capacity equal to the rank of the eigenspace projector Π*ₖ* to which each edge joins and weight 0.

This provides an explicit form for the flow problem, such that the flow problem encodes the constraints of the assignment problem. Specifically, there are d² source → eigenvector connections, each having capacity 1, so the full d² capacity for the problem is preserved (i.e. there are d² eigenvectors which must be paired with a projector). These have a weight (i.e. cost) of 0, since each must be a legitimate pathway because each of the d² eigenvectors must be associated with a projector, so these pathways have the lowest possible cost associated with them (i.e. 0).

The next set of connections (a set of edges linking each eigenvector vertex with each projector vertex - a total of *n* × *d*² edges) represents each possible pairing of an eigenvector with a projector. Each has capacity 1 indicating that each eigenvector is associated with a single projector (although the reverse is not necessarily true as projectors can have rank of one or more than one, meaning that a single projector may be associated with multiple eigenvectors). The edges in this set are weighted so as to apply a higher cost to edges where ∥*ṽⱼ* - Π*ₖṽⱼ*∥ is large. Note that all edges in this set are weighted proportional to ∥*ṽⱼ -* Π*ₖṽⱼ*∥, using the same proportionality constant. While a constant of 1 may be used, some algorithms for solving minimum cost, maximum flow problems need each weight to be an integer, so a large proportionality constant may be used to ensure that any decimal places in the weightings, which may lead the algorithm to fail, are removed.

The final set of edges links each projector to the sink vertex. These edges are weighted (costed) as 0, since paths from each projector must end at the sink to ensure that all eigenvectors have been associated with a projector. However, these edges are limited to a capacity equal to the rank of the projector which is at one end of the edge. This ensures that each projector is associated with the correct number of eigenvectors. The number of eigenvectors for each projector is set by the determination in step (3).

Having encoded the parameters of the problem in this way, it is possible to apply existing minimum cost, maximum flow algorithms to identify the optimal (i.e. lowest cost) pairing between eigenvalues and eigenspace projectors.

Optionally, |*mₘₐₓ*| ≤ 1. Given reasonable assumptions about the magnitude of the noise, logarithmic branch shifts beyond adjacent logarithmic branches are unlikely.

Also disclosed herein is a method of estimating state preparation and measurement, SPAM, errors in quantum gate set tomography, the method comprising:
(a) receiving an initial guess for a gauge matrix, *B*₀, a measured gram matrix *g,* a tomographic data matrix, *M,* encoding the measurement data for each possible state preparation and measurement setting in process tomography of a quantum dynamical process;
(b) computing an estimate of a channel representing the quantum dynamical process in the current gauge by computing *T = B*₀*g*^{*-*1}*MB*₀⁻¹;
(c) receiving a best guess Lindbladian L representative of the quantum dynamical process;
(d) using a gauge optimisation procedure using *e^{L}* as the target process and *B*₀ to obtain a new gauge, *Bᵢ*; and
(e) outputting *Bᵢ*.

This procedure can be thought of as complementary to the processes described above. Where those processes took a gauge as an assumption (via the matrix *E*) and worked to optimise a Lindbladian, this process assumes a Lindbladian and optimises the gauge. As above, quantum dynamical processes include quantum computation gates, but also refers to a wider set of processes.

The gram matrix is a matrix similar to *M,* but where *M* encodes the measurement data for each possible state preparation and measurement setting in process tomography of the quantum dynamical process being studied, the gram matrix stores this information for the case where the process is the identity matrix.

An assumption is made on the SPAM delay, in that we assume such delays are constant across a range of targeted quantum dynamical processes. In practice, such delays introduce their own noise into the system. Therefore, allowing such noise terms to be constant across a range of quantum dynamical processes means the method can incorporate delay noise reliably into the estimation of SPAM errors. Note that this applies to delays arising from both state preparation (e.g. during or after) as well as measurement (e.g. before or during). Optionally, the best guess Lindbladian *L* is provided by estimation or calculation based on tomographic data in a gauge characterised by the gauge matrix *B*₀. For example, as noted above, the best guess Lindbladian *L* may be derived by any of the methods discussed above. This may be achieved by using *Bᵢ* from step (e) to extract a transfer matrix E' and subsequently executing any of the methods set out above using the transfer matrix *E'* in place of the transfer matrix *E* in step (1) to output an improved *L̅*. This optimises both *B* and *L*.

The method may further include repeating the method of optimising *B* one or more additional times, to iteratively update the estimate for *Bᵢ* and *L̅*. This allows for a convergence of both *B* and *L* toward optimum forms.

Optionally, SPAM errors are estimated on a set of *k* quantum dynamical processes, and wherein the gauge optimisation procedure comprises:
optimising a function, *h,* across all *k* quantum dynamical processes, wherein *h* is of the form: $h = ln \left({\sum }_{i = 1}^{k} exp \left(\left‖{E}_{i}-{e}^{{L}_{i}}\right‖\right)\right)$
wherein *Lᵢ* is the current Lindbladian for the *i^{th}* quantum dynamical process, and *Eᵢ* is an estimated transfer matrix of the *i^{th}* quantum dynamical process. Here, the goal is to optimise the gauge matrix *B* which enters the optimisation function via the estimated transfer matrices, *Eᵢ*, for each process, by minimising the function, *h.*

We call this type of function LogSumExp (since it is the logarithm of the sum of exponentials), and the inventors have noted that this form of optimisation function addresses an issue that could arise if the simple sum of norm differences was instead used as the objective function for gauge optimisation (as is commonly seen in the literature). For the latter, the minimum value of the objective function could occur when most quantum dynamical processes are fit well but a small number are fit badly, since in that case it is the average over all quantum dynamical processes that matters. Instead, it may be preferable to look for a solution where all quantum dynamical processes are reasonably well fit. The LogSumExp function is a smooth approximation to the maximum function, and so using this form will tend to prefer solutions where the norm difference is not too large for any quantum dynamical process in the set.

In some cases, this is modified with a scaling factor t which depends on k and the tomographic data used in the fitting, to give an optimisation function of the form: $h = \frac{1}{t} ln \left({\sum }_{i = 1}^{k} exp \left(t⋅\left‖{E}_{i}-{e}^{{L}_{i}}\right‖\right)\right)$

This provides even finer control of exactly how badly fit individual quantum dynamical processes can be penalised in the overall calculation.

Also disclosed herein is a computer system operable to enact any of the methods discussed above.

Also disclosed herein is a computer program which when executed on a computer causes the computer to enact any of the methods discussed above.

### Brief description of the Figures

The invention will now be described with reference to the Figures, in which:
Figure 1A shows a flow chart of a method for estimating a Lindbladian characterising a noisy channel;
Figure 1B shows a flow chart of a method for optimising the gauge for a Lindbladian;
Figure 2 shows an iterative procedure switching between the process of Figures 1A and 1B to optimise the Lindbladian and the gauge, respectively;
Figure 3 shows a CNOT gate performance with coherent *ZI, IZ,* and *ZZ* errors and dissipative *ZI* error using convex solve on synthetic data with no statistical noise;
Figure 4 shows the same CNOT gate considered in Figure 3, at the level of statistical noise induced by 10⁴ shots using convex solve on synthetic data with statistical noise;
Figure 5 shows, the same CNOT gate considered in Figure 4, using alternating projections rather than simple convex solve on synthetic data with statistical noise;
Figure 6 shows a distribution of the ∥*e^{L} - E*∥ (top) and ∥*e^{L}* - *E*^{*}∥ (bottom) values for the 20 simulated instances of CNOT with coherent *X* and dephasing noise tested, using the same set up as in Figures 3 to 5, each instance having the same level of statistical noise;
Figures 7A, 7B and 7C show canonical decomposition of a CNOT with coherent *Z*, amplitude damping, and dephasing noise instance;
Figures 8A to 8D show CNOT with increasing strengths of 8A, 8B coherent *X,* amplitude damping, and dephasing gate noise and 8C, 8D overrotation and dephasing gate noise;
Figure 9 shows various noise models tested with 10 levels of increasing noise strengths;
Figure 10 shows synthetic test results for the Gate Set Flip-Flop algorithm on 1000 randomly generated test cases;
Figure 11 shows gate set Flip-Flop figures of merit for data collected from *ibm_perth*;
Figures 12A to 12C show a canonical decomposition of the fitted Lindbladian for the *R_{ZX}*(0.5) process applied to qubit pair (3,5) on *ibm_perth;*
Figures 13A to 13C show a canonical decomposition of the fitted Lindbladian for the *R_{ZX}*(0.5)³ = *R_{ZX}*(1.5) process applied to qubit pair (3,5) on *ibm_perth;*
Figures 14A to 14C show a canonical decomposition of the fitted Lindbladian for the *R_{ZX}*(0.5)⁵ = *R_{ZX}*(2.5) process applied to qubit pair (3,5) on *ibm_perth;*
Figure 15 shows a partial qubit layout on *ibm_cairo;*
Figure 16 shows gate set Flip-Flop figures of merit for data collected from *ibm_cairo,* tomographing qubits 13 and 14;
Figures 17A to 17C show a comparison the canonical decompositions of the ideal unitary CNOT gate with the fitted Lindbladians after Gate Set Flip-Flop for the noisy CNOT gate implemented on qubit pair (13,14) on *ibm_cairo;*
Figures 18A to 18C show the canonical decomposition of the estimated Lindbladian generators for the CNOT implemented on qubit pair (13,14) on *ibm_cairo;*
Figures 19A to 19C show the canonical decomposition of the estimated Lindbladian generators for the CNOT implemented on qubit pair (13,14) on *ibm_cairo;*
Figure 20 shows a qubit layout on *ibm_perth;*
Figure 21 shows a circuit decomposition for CNOT between qubits 0 and 5 on *ibm_perth;*
Figure 22 shows gate set Flip-Flop figures of merit for the idling experiment on qubits (0,1) from *ibm_perth;*
Figure 23 shows gate set Flip-Flop figures of merit for the idling experiment on qubits (0,5) from *ibm_perth;*
Figures 24A to 24D show the canonical decompositions of the estimated Lindbladian for three variants of the idling process on the adjacent qubit pair (0,1) on *ibm_perth;*
Figures 25A to 25D show the canonical decompositions of the estimated Lindbladian for the separated pair (0,5) on *ibm_perth;* and
Figure 26 shows a schematic of a minimum cost, maximum flow problem.

### Detailed description

In this document, we study and give practical algorithms for Lindbladian fitting in two settings: (i) characterisation of an individual noisy process, neglecting SPAM errors, and (ii) simultaneous and self-consistent characterisation of a set of processes, allowing for arbitrary SPAM errors. We focus on a subset of input instances relevant to near-term quantum computing devices (although, as noted above, this is for convenience, and the method itself is applicable to any quantum dynamical process, not just quantum computation gates). More specifically, we fit Lindbladian noise models to noisy 2-qubit quantum logic gates, where the noise is not arbitrarily strong, building on the logarithmic search methods discussed above in three main respects:
1. We clarify the conditions under which a good solution can be found by convex solve over a finite number of matrix logarithms, and show that this includes a large class of practically relevant quantum channels, including many with degenerate spectrum. We call this simple algorithm the Convex Solve method.
2. To tackle the case where the continuous degrees of freedom cannot be avoided, we develop a novel algorithm for fitting a Lindbladian to a noisy tomographic snapshot. The method leverages the fact that in practice, we can start with an initial best-guess for the Markovian channel - namely the ideal gate that we program the quantum computer to implement. Loosely, we use the eigendecomposition of the best-guess channel to guide the construction of the matrix logarithm, and iteratively improve this best guess by projecting back to the set of Lindbladians. This leads to run-time reduced by orders of magnitude compared to prior methods based on logarithm search, and makes the problem tractable for cases that were not previously possible for those methods. We call this the Alternating Projections method.
3. We propose a protocol that synthesises Lindbladian fitting and gate set tomography techniques by alternating between a SPAM estimation step and a Lindbladian fitting step. In our implementation, for the Lindbladian fitting step we use the methods of points 1 and 2 as subroutines in our implementation, but we note that the template for the protocol is generic and any method for fitting a Lindbladian to tomographic channel estimate could be substituted. We call this algorithm Gate Set Flip-Flop.

We benchmark the performance of the new methods extensively using synthetic data including realistic levels of statistical noise and a wide range of physically plausible noise types and strengths. Finally, we demonstrate application of the algorithms to data obtained from real superconducting-qubit hardware.

### Background and Notations

### Markovian Channels and Lindblad Generators

The noisy dynamics that we wish to understand can be described by a quantum channel *ε*, i.e. a completely positive trace-preserving (CPTP) map, acting on d × d density matrices: *ρ* → *ε*(*ρ*)*.* We can represent density matrices *ρ* as vectors using stacked density matrix notation: ${\left|\left.ρ\right〉\right〉}_{j , k} = \left〈\left〈{e}_{j}, {e}_{k}\right.\right| \left.\left.ρ\right〉\right〉 : = \left〈{e}_{j}\left|ρ\right|{e}_{k}\right〉$ **where** |*eⱼ*〉 = (0,···,0,1,0,···,0)*^{T}* with 1 in the j^{th} position. A quantum channel *ε* can then be represented by a *d*² × *d*² matrix as follows: ${E}_{\left(j, k\right) , \left(l, m\right)} = \left〈\left〈{e}_{j ,}{e}_{k}\left|E\right|{e}_{l},{e}_{m}\right〉\right〉 : = Tr \left[\left|{e}_{k}\right〉\left〈{e}_{j}\right|E\left(\left|{e}_{l}\right〉\left〈{e}_{m}\right|\right)\right]$

The matrix E is referred to as the *transfer matrix* of *ε* or the elementary basis representation of *ε*. For example, for *ε* representing a noisy 2-qubit quantum logic gate, d=4, so *E* is a 16 × 16 matrix. It is straightforward to verify using equations (2) and (3) that *E*|*ρ*〉〉 *=* |*ε*(*ρ*)〉〉*.* Thus, in this representation the action of the channel on the density matrix is given by matrix-vector multiplication, and composition of channels corresponds to matrix-matrix multiplication. In practice, whenever *ε* is expressed in the form: $E \left(ρ\right) = {\sum }_{k} {A}_{k} {ρB}_{k}$ for some complex matrices {*Aₖ*} and {*Bₖ*}*,* we have $E = {\sum }_{k} {A}_{k} ⊗ {B}_{k}^{T}$

In this picture, we can conveniently express the expectation value of Hermitian observable i0 on the state obtained by applying the channel *ε* to initial state *ρ*, as: $\left〈\left〈O\left|E\right|ρ\right〉\right〉 : = Tr \left[OE\left(ρ\right)\right]$ where the operator *O* is vectorised in the same way as in equation (2).

Throughout this work we are interested in Markovian channels. These are a subset of channels which are generated by Lindbladians, i.e. by generators of the form: $L \left(ρ\right) : = i \left[ρ, H\right] + {\sum }_{α} {γ}_{α} \left[{J}_{α}{ρJ}_{α}^{†}-\frac{1}{2}\left({J}_{α}^{†}{J}_{α}ρ+{ρJ}_{α}^{†}{J}_{α}\right)\right]$ where *H* is a Hamiltonian, each *J_{α}* is called a jump operator, and each *γ_{α}* is a real positive scalar. In this canonical form, *H* is traceless, all jump operators are traceless and normalized to Frobenius norm 1, and $Tr \left({J}_{α}^{†}{J}_{α ′}\right) = 0$ whenever *α* ≠ *α'.* The first term in the Lindblad form describes the unitary part of the evolution, while the second term represents the dissipative part of the process. We consider in particular time-independent Lindbladian generators for which the transfer matrix of the corresponding channel at time *t* is given by *e^{Lt}* where L is the elementary basis representation of *L.*

The set of all Lindbladians in the elementary basis representation forms a closed convex cone with a simple known characterisation through the Γ-involution, which is defined by linearly extending: ${\left(\left.\left|{e}_{j}, {e}_{k}\right〉\right〉\left〈\left〈{e}_{l}, {e}_{m}\right|\right.\right)}^{Γ} : = \left.\left|{e}_{j}, {e}_{l}\right〉\right〉 \left〈\left〈{e}_{k}, {e}_{m}\right|\right.$

A matrix *L* is a Lindbladian if and only if:
1. *L*^{Γ} is Hermitian, i.e. the Choi matrix *of L* is Hermitian;
2. *L*^{Γ} is *conditionally completely positive,* i.e. *ω*_{⊥}*L^{Γ}ω*_{⊥} ≽ 0 where ${ω}_{⊥} = \left(I-\left.\left|ω\right〉\right〉\left〈\left〈ω\right|\right.\right)$, where 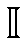 is the identity matrix and $\left.\left|ω\right〉\right〉 : = \frac{1}{\sqrt{d}} {\sum }_{j = 1}^{d} \left.\left|{e}_{j}, {e}_{j}\right〉\right〉$;
3. 〈〈*ω*|*L* = 0, corresponding to the trace-preserving property.

For a small Hilbert space dimension like the *d* = 4 case considered in this work, the problem of projecting a matrix to the set of all Lindbladians can be solved efficiently using convex optimisation. The projection problem is minimising ∥*X* - *L*∥*_{F}* subject to *L* is a Lindbladian with *X* being the input and *L* being the optimisation variable. In software, performing the projection amounts to setting up the problem using Python^{®} code for convex optimisation solving (e.g. CVXPY) then calling an off-the-shelf convex optimiser such as the SCS solver.

Given a Lindbladian *L* in the elementary basis representation, it is possible to solve for a canonical decomposition comprised of a Hamiltonian *H,* jump operators {*J_{α}*}*,* and real positive scalars {*y_{α}*} such that the elementary basis representation of the Lindbladian form (see equation (6)) defined by *H,* {*J_{α}*}*,* and {*γ_{α}*} is *L.*

A proof of this is as follows. Given a Lindbladian *L* in the elementary basis representation, it is possible to solve for a canonical decomposition comprised of a Hamiltonian *H*, jump operators {*J_{α}*}*,* and real positive scalars {*γ_{α}*} such that the elementary basis representation of the Lindbladian form is as above (see equation (6)). Let *n* = log₂ d and let *P*₁,...,*P*_{*d*_{2 -1}} denote the non-identity *n*-qubit Pauli operators. Since *H* is traceless, *H* is determined by its expansion in the Pauli basis: $H = {\sum }_{k = 1}^{{d}^{2} - 1} \frac{Tr \left({P}_{k}H\right)}{d} {P}_{k}$

Using formula (4), we get: $L = i \left(I⊗{H}^{T}-H⊗I\right) + {\sum }_{α} {γ}_{α} \left[{J}_{α}⊗\overline{{J}_{α}}-\frac{1}{2}\left({J}_{α}^{†}{J}_{α}⊗I+I⊗{J}_{α}^{T}\overline{{J}_{α}}\right)\right]$

By the fact that *H and* {*J_{α}*} are traceless, for every *k* ∈ {1,...,*d*² - 1}: $Tr \left(L\left({P}_{k}⊗I\right)\right) = - iTr \left({P}_{k}H\right) d - \frac{1}{2} {\sum }_{α} {γ}_{α} Tr \left({P}_{k}{J}_{α}^{†}{J}_{α}\right) d$

Thus: $\begin{matrix}Tr \left(L\left({P}_{k}⊗I\right)\right) - \overline{Tr \left(L\left({P}_{k}⊗I\right)\right)} = - 2 iTr \left({P}_{k}H\right) d \\ ⇒ Tr \left({P}_{k}H\right) = \frac{i \left(Tr\left(L\left({P}_{k}⊗I\right)\right)-\overline{Tr \left(L\left({P}_{k}⊗I\right)\right)}\right)}{2 d}\end{matrix}$

Similarly, for every *j, k* ∈ {1*,*...,*d*² - 1}: $Tr \left(L\left({P}_{j}⊗\overline{{Q}_{k}}\right)\right) = {\sum }_{α} {γ}_{α} Tr \left({P}_{j}{J}_{α}\right) Tr \left({Q}_{k}{J}_{α}^{†}\right)$ and we can organise these values into a (*d*² - 1) × (*d*² - 1) matrix: $C = \left[\begin{matrix}Tr \left(L\left({P}_{1}⊗\overline{{Q}_{1}}\right)\right) & ⋯ & Tr \left(L\left({P}_{1}⊗\overline{{Q}_{{d}^{2} - 1}}\right)\right) \\ ⋮ & ⋱ & ⋮ \\ Tr \left(L\left({P}_{{d}^{2} - 1}⊗\overline{{Q}_{1}}\right)\right) & ⋯ & Tr \left(L\left({P}_{{d}^{2} - 1}⊗\overline{{Q}_{{d}^{2} - 1}}\right)\right)\end{matrix}\right]$

Since the jump operators are orthonormal, $C = {\sum }_{α} {γ}_{α} \left[\begin{matrix}Tr \left({P}_{1}{J}_{α}\right) \\ ⋮ \\ Tr \left({P}_{{d}^{2} - 1}{J}_{α}\right)\end{matrix}\right] \left[Tr\left({P}_{1}{J}_{α}^{†}\right) ⋯ Tr\left({P}_{{d}^{2} - 1}{J}_{α}^{†}\right)\right]$ is a spectral decomposition of *C*. Thus, the positive scalars {*γ_{α}*} and the jump operators {*J_{α}*} can be retrieved by computing a spectral decomposition of C.

Returning to the discussion of Markovian Channels and Lindblad Generators, we note that for *E = e^{L}, L* is a matrix logarithm of *E*. The set of logarithms of E is defined as log(*E*) = {*A*: *e^{A} = E},* and log *E* has infinite cardinality even for 1 × 1 matrices since for every $λ ∈ ℂ , λ +$ 2*πki* is a logarithm of *e^{λ}* for every integer *k.* Assume E is diagonalisable with not necessarily unique complex eigenvalues *µ*₁,...,*µ*_{*d*₂}. For every *j* ∈ {1,...,*d*²}*,* we can fix a logarithm *λⱼ* of *µⱼ* so that *e^{λⱼ}* = *µⱼ* and |*Im*(*λⱼ*)| ≤ *π*. If *µⱼ* is not real negative, then the choice of *λⱼ* is unique. Then every *A* ∈ log *E* can be written in the form: $A = {\sum }_{j = 1}^{{d}^{2}} \left({λ}_{j}+2{m}_{j}πi\right) \left.\left|{r}_{j}\right〉\right〉 \left〈\left〈{l}_{j}\right|\right.$ where $m = \left({m}_{1},…,{m}_{{d}^{2}}\right) ∈ {ℤ}^{{d}^{2}}$ is an integer vector, used in this invention to implement what is referred to as a branch shift, i.e. shifting the logarithm of each eigenvalue by an integer multiplied by 2*πi* so that it exponentiates to the same value, but shift each logarithm of an eigenvalue independently to a logarithmic branch. Where *mᵢ* is 0, no shift is applied, but for nonzero *mᵢ,* we shift to a different branch. In equation (8), |*rⱼ*〉〉 and |*lⱼ*〉〉 are unit right and left eigenvectors, respectively, of *E* corresponding to the eigenvalue *µⱼ*. Choosing an $m ∈ {ℤ}^{{d}^{2}}$ corresponds to choosing a branch of the matrix logarithm. We call a branch satisfying |*Im*(*λⱼ*) *+* 2*mⱼπ*| ≤ *π* for every *j* ∈ {1,...,*d*²} principal branch, and it is uniquely specified by *m* = (0,...,0) if *E* has no real negative eigenvalues. When *µ*₁,...,*µ*_{*d*₂} are all distinct, *E* has *d*² unique eigenspace projectors |*r*₁〉〉〈〈*l*₁|,...,|*r*_{*d*₂}〉〉〈〈*l*_{*d*₂}|, so log *E* is a countably infinite set whose discrete degrees of freedom are fully parameterised by the choice of m. The story is different when *E* has degenerate eigenvalues, which for example, always occurs if *E* corresponds to a unitary gate. In this case, a degenerate eigenspace of *E* could split into different eigenspaces of *A*, and we call this phenomenon eigenspace splitting. For instance, if *µⱼ = µₖ* for some *j* ≠ *k,* then in specifying an *A* ∈ logE, |*rⱼ*〉〉 and |*rₖ*〉〉 could be any of uncountably many unit eigenvectors of *E* corresponding to the eigenvalue *µⱼ = µₖ* while *λⱼ +* 2*mⱼπi* ≠ *λₖ +* 2*mₖπi* is possible. Therefore, there are continuous degrees of freedom in choosing an *A* ∈ log *E* if E has degenerate eigenvalues. It can be shown that for a Lindbladian *L*, the condition *L*^{Γ} is Hermitian (see equation (7)) implies that all the complex eigenvalues of *L* come in complex conjugate pairs. As a result, the quintessential example of this eigenspace splitting phenomenon occurs for us when -1 is a 2-fold degenerate eigenvalue of *E*, and this 2-dimensional eigenspace gets split into two 1-dimensional eigenspaces of *A* corresponding to the eigenvalues *πi* and *-πi.*

### Linear Inversion Quantum Process Tomography

In quantum process tomography, a quantum channel is estimated by implementing the same process on a quantum device a large number of times on different input states, and measuring each resulting output state in different bases. More concretely, let the d² × *d*² transfer matrix for the process of interest be denoted *E*^{*}, and let {|*ρⱼ*〉〉 : *j =* 1,...,*d*²} and {〈〈*Fᵢ*| : *i =* 1*,...,d*²} be the chosen tomographically complete set of preparation states and measurement operators, respectively. Typically, *E*^{*} is assumed to be the noisy implementation of some ideal process *E^{ideal}.* Without loss of generality, we assume each *Fᵢ* represents one outcome of a two-outcome positive operator valued measure (POVM) $\left\{{F}_{i},I-{F}_{i}\right\}$. The quantum circuit that prepares state *ρⱼ,* implements the target process and then carries out the measurement corresponding to *Fᵢ* is executed many times to obtain sufficient statistics to estimate the value of 〈〈*Fᵢ*|*E^{*}*|*ρⱼ*〉〉 *= Tr*[*Fᵢε^{*}*(*ρⱼ*)]*,* which is repeated for each pairing of measurement setting *Fᵢ* with preparation *ρⱼ.* We can organise the chosen state preparations and measurements into matrices. The measurement matrix is given by a matrix in which each row is the effect of a possible measurement outcome: ${A}^{ideal} = \left(\begin{matrix}\left〈\left〈{F}_{1}\right|\right. \\ \left〈\left〈{F}_{2}\right|\right. \\ ⋮ \\ \left〈\left〈{F}_{i}\right|\right. \\ ⋮ \\ \left〈\left〈{F}_{{d}^{2}}\right|\right.\end{matrix}\right)$ while the state preparation matrix is given by a matrix in which each column is one of the possible input states: ${B}^{ideal} = \left(\left.\left|{ρ}_{1}\right〉\right〉 \left.\left|{ρ}_{2}\right〉\right〉 ⋯ \left.\left|{ρ}_{j}\right〉\right〉 ⋯ \left.\left|{ρ}_{{d}^{2}}\right〉\right〉\right)$

In the case of an ideal process *E^{ideal},* the probabilities of obtaining outcome *Fᵢ* after preparing in state *ρⱼ* can be collected into a matrix: ${P}^{ideal} = {A}^{ideal} {E}^{ideal} {B}^{ideal}$

Note that *A^{ideal}, E^{ideal},* and *B^{ideal}* are all matrices chosen by the experimenter, so *P^{ideal}* is known. However, in reality, the circuit elements used to implement *A^{ideal}, E^{ideal},* and *B^{ideal}* will be noisy. Thus, the true probabilities being estimated in quantum process tomography will be: $P * = A * E * B *$ for some unknown *P^{*}, A^{*}, E^{*},* and *B** different from *P^{ideal}, A^{ideal}, E^{ideal},* and *B^{ideal}* respectively. In quantum process tomography, it is assumed that the state preparation and measurement settings are implemented exactly, whereas the true process *E*^{*} is not known. Namely, *A^{*} = A^{ideal}* and *B^{*} = B^{ideal}.* Then, the task is to estimate *E*^{*} from *P*^{*}. There are a number of ways of doing this. In linear inversion tomography, *A^{ideal}* and *B^{ideal}* are chosen to be square and invertible, so under the assumption that *A* = A^{ideal}* and *B = B^{ideal}, E^{*}* can be estimated via the identity: ${E}^{ideal} = {\left({A}^{ideal}\right)}^{- 1} P * {\left({B}^{ideal}\right)}^{- 1}$

There are a number of more refined methods to estimate *E*^{*} in standard quantum process tomography -- a feature they all share is the assumption that *A^{*} = A^{ideal}* and *B = B^{ideal}.*

In this document, we focus on *E^{ideal},* being a 2-qubit quantum logic gate, so *A^{ideal}* and *B^{ideal}* will each contain 16 measurement and state preparation settings respectively. Measuring each setting independently therefore requires a suite of 16²=256 different circuits to estimate P*. In practice the circuit overhead can be reduced by parallelising measurement of compatible observables. For example, by measuring both qubits in the Z basis, we can infer mean values for $Z ⊗ I , I ⊗ Z$ and *Z* ⊗ *Z* using the same circuit. Using this scheme and measuring in the Pauli basis, the number of circuits can be reduced to 144. In a real experiment, since each matrix element ${P}_{ij}^{∗} = \left〈\left〈{F}_{i}\left|E*\right|{ρ}_{j}\right〉\right〉$ of P* is estimated by collecting statistics from a finite number of circuit executions (called tomographic shots), the experimental estimate for *P*^{*} (and in turn the estimate for *E*^{*}) will inevitably differ from its true value, even when preparations and measurements are ideal. The amount of statistical error can be reduced by increasing the number of tomographic shots; however, doing so to a significant extent may be prohibitive on current quantum computing hardware. The practicality of taking a large number of shots is limited not just by the overall resource cost, but by the instability of noise processes on the device. In other words, the duration of the experiment increases with the number of shots taken, increasing the risk that *E*^{*} can drift while data is being taken. The number of shots can be tuned between low-precision tomography that captures a snapshot of the noise within a particular time window, or higher-precision tomography that characterises the long-term average behaviour of the device. We note that since the set of Markovian channels is non-convex, the latter approach may yield non-Markovian channel estimates, even if the noise process at some particular time can be well-modelled by a time-independent Lindbladian. Statistical error can also be reduced by projecting the output of process tomography to CPTP and there are known algorithms for doing so.

### Gate Set Tomography

In this section we give a brief overview of the standard gate set tomography (GST) protocol - note that the naming convention here is historical and in fact the concepts apply to tomography of any quantum dynamical process on systems of finite dimension, and are not limited to the case of single quantum gates. In quantum process tomography (whether linear inversion tomography, or some more sophisticated method), assuming *A^{*} = A^{ideal}* and *B^{*} = B^{ideal}* **is** a prerequisite to computing an estimate of *E*^{*}. Operationally, this corresponds to the assumption that there are no SPAM errors in the tomography experiment, and the experimenter knows the *A^{ideal}* and *B^{ideal}* matrices because they are chosen by the experimenter. This is a strong assumption that will never be satisfied exactly, and may not even be approximately satisfied in near term devices.

In GST this assumption is replaced by two weaker assumptions:
- When we try to implement the (known) informationally complete state preparations *B^{ideal}* and measurements *A^{ideal},* the state preparations *B** and measurements *A** that are actually implemented (due to SPAM errors) are still informationally complete;
- The SPAM errors are independent of which quantum process is being implemented, and remain fixed for a given preparation or measurement setting.

With these two assumptions, the GST method is as follows:
Choose a set of *k* distinct quantum dynamical processes (e.g. comprising quantum computation gates, which will be used in this example to illustrate the procedure, ${E}_{1}^{ideal} , … , {E}_{k}^{ideal}$ (here each ${E}_{i}^{ideal}$ is the transfer matrix of a unitary gate) and together with the (instantaneous) identity gate, form a gate set: $G = \left\{I,{E}_{1}^{ideal},…,{E}_{k}^{ideal}\right\}$

Then carry out quantum process tomography for every gate in 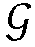 *.* For each gate *i* ∈ {1,*...*,*k*}, let ${E}_{i}^{∗}$ denote the actual noisy gate implemented by the quantum device. This enables the construction of the matrices: ${P}_{i}^{∗} = A * {E}_{i}^{∗} B *$

Since *A** and *B** are unknown, it is not possible to reconstruct ${E}_{i}^{∗}$ from ${P}_{i}^{∗}$. However, by implementing the identity gate instantaneously, we can construct what is known as the *Gram matrix*: $g * = A * B * .$

We can therefore construct an estimate: ${E}_{i} = B {\left(g*\right)}^{- 1} {P}_{i}^{∗} {B}^{- 1} = B {\left(B*\right)}^{- 1} {E}_{i}^{*} B * {B}^{- 1}$ for ${E}_{i}^{∗}$ up to some *similarity transform B.*

We do not yet know B, so it may appear impossible to construct an estimate of ${E}_{i}^{∗}$ from here. Note that it is only ever possible to reconstruct each ${E}_{i}^{∗}$ up to some similarity transform since these similarity transforms are unobservable. Thus, equation (17) is the best we can hope to achieve for each gate. To see this, notice that for every invertible *B* and *A = g^{*}B*⁻¹: $A * B * = g * = AB$ and for every gate i: $A * {E}_{i}^{∗} B * = A \left(B{\left(B*\right)}^{- 1}{E}_{i}^{∗}B*{B}^{- 1}\right) B = {AE}_{i} B$

**Therefore,** assuming *A, B,* and every *Eᵢ* are all physical, it is impossible to distinguish whether the true quantum process tomography experiments have occurred with measurement, preparation, and noisy gates being *A^{*}, B^{*},* and ${E}_{i}^{∗}$ respectively or *A, B,* and *Eᵢ* respectively since they both lead to identical Gram and probability matrices. This implies that the similarity transform *B* is in fact just picking out a particular gauge. The different choices of gauge give equivalent gate sets, so when considering the entire gate set any invertible (and physical) choice of matrix is as good as any other for *B*. However, the choice of gauge clearly has a significant effect when we are interested in characterising the individual gates within the gate set. If, for example, we take a perfect set of gates (with no errors) but choose a gauge that rotates between the different gates in the set then this will imply that the gate fidelities are all very low, and there are large coherent errors in the device. However, this is merely an artefact of the chosen gauge.

In gate set tomography the gauge is chosen to be the one that minimises the distance to the ideal gate set (in some metric). More precisely, in GST the gauge is chosen to be a minimiser of the optimisation problem: ${min}_{B} \left({\sum }_{i = 1}^{k} {a}_{i} \left‖B{\left(g*\right)}^{- 1}{P}_{i}^{∗}{B}^{- 1}-{E}_{i}^{ideal}\left‖+{\sum }_{j = 1}^{{d}^{2}} {b}_{j} \left‖{B}_{j}-\left.\left|{ρ}_{j}\right〉\right〉\right‖+{\sum }_{m = 1}^{{d}^{2}} {c}_{m} \left‖{A}_{m}-\left〈\left〈{F}_{m}\right|\right.\right‖\right.\right.\right)$ where *A = gB*^{*-*1}*, Bⱼ* denotes the *j*^{th} column of *B, Aᵢ* denotes the *i*^{th} row of *A,* and {*aᵢ*}*,* {*bᵢ*} and {*cᵢ*} are non-negative weights. Intuitively, the weights should be chosen to be proportional to the believed fidelity of a gate, preparation, or measurement setting. For example, if |*ρ*₁〉〉 corresponds to preparing a known high-fidelity |0〉 state and the |*ρⱼ*〉〉 for *j* ≠ 1 are prepared from |0) by applying a short-depth circuit, it may be sensible to choose *b*₁ = 1 and all other (*j* ≠ *1) bⱼ* = 1. The simplest choices for the weights are *aᵢ* = 1 for all *i* ∈ {1,...,*k*} and *bⱼ = cⱼ* = 0 for all *j* ∈ {1,...*,d*²}*,* hence simplifying the gauge optimisation problem to: ${min}_{B} {\sum }_{i = 1}^{k} \left‖B{\left(g*\right)}^{- 1}{P}_{i}^{∗}{B}^{- 1}-{E}_{i}^{ideal}\right‖$

In summary, in its simplest form, the input to GST is a set of matrices: $\left\{g*,{P}_{1}^{∗},…,{P}_{k}^{∗}\right\} = \left\{A*B*,A*{E}_{1}^{∗}B*,…,A*{E}_{k}^{∗}B*\right\}$ obtained from *k* + 1 runs of quantum process tomography, and the desired output is a matrix *B* that minimises equation (19). Note that *B** may not be an optimal solution for equation 19 if ${E}^{ideal} \neq {E}_{i}^{∗}$ for at least one gate *i*.

Algorithms for enacting these ideas are now presented. The input to the Lindbladian fitting problem is the transfer matrix E of a CPTP map (see equation (3)), and the goal is to fit a Lindbladian model to *E*. More concretely, we wish to find a Lindbladian *L* that minimises ∥*e^{L}* - *E*∥.

In this disclosure, we restrict to special cases of the Lindbladian fitting problem that satisfy two additional assumptions. Firstly, it is assumed the input *E* is close to some unknown Markovian channel *E*^{*} = *e^{L^{*}}.* That is, ∥*E* - E^{*}∥ ≤ *c*₁, for some small constant *c*₁. We further assume *E*^{*} is not far away from a known Markovian channel *E^{ideal}, = e^{L^{ideal}}.* In fact, we assume ∥*L^{*} - L^{ideal}*∥ ≤ *c*₂ for some small constant *c*₂ which is a stronger assumption than assuming *E^{*}* is not far away from *E^{ideal}.* As an example, suppose *L* is a Lindbladian generator for the 1-qubit Pauli Z gate, then 3L would be a Lindbladian generator for Z³, which is identical to Z as a unitary gate, but ∥*L* - 3*L*∥ is large. The algorithms we consider will search over the branches of the complex matrix logarithm log(*E*) *=* {*A*: *e^{A} = E*} in the outermost. Throughout this disclosure, we assume *E* and *E^{ideal}* are both diagonalisable. The bound ∥*L*^{*} *- L^{ideal}*∥ ≤ *c*₂ implies a bound on the differences between the imaginary parts of the eigenvalues of L* and *L^{ideal},* which in turn limits the number of physically-relevant branches of log(E) to search over. The assumption ∥L*^{*}* - L^{ideal}∥ ≤ *c*₂ is also intended to rule out cases like *L^{ideal} =* 0, which generates the identity gate, while *L** generates a far away unitary gate such as *X* ⊗ *I.* In an experiment, *E* would be the output of quantum process tomography (optionally projected to CPTP), *E^{ideal}* would correspond to an ideal gate, with a known Lindbladian generator *L^{ideal}* that the experimenter has chosen to execute, and *E*^{*} would be the Markovian channel closest to the true noisy gate being implemented in place of *E^{ideal}.* The difference between *E*^{*} and *E^{ideal}* captures the total amount of time-independent Markovian gate noise while the discrepancy between *E* and *E*^{*} accounts for possible non-Markovian or time-dependent Markovian gate noise as well as inevitable statistical error from performing process tomography. The two assumptions translate to the physical assumptions that the gate noise is approximately time-independent Markovian and not too strong (a noise turning Z into Z³ is considered very strong in terms of the principles set out in this document). The weak approximately Markovian gate noise assumption made above is satisfied when running process tomography on individual gates on today's quantum computing hardware.

To set the stage for the Alternating Projections algorithm and emphasise the effect of statistical error, we first describe the simpler Convex Solve method. Due to statistical error, the eigenvalues of E are (almost surely) all distinct (regardless of what *E^{ideal},* or *E*^{*} are). This implies log(*E*) *=* {*A*: *e^{A} = E*} is a countably infinite set which we can enumerate over. The Convex Solve method then simply enumerates over each *A* ∈ log(*E*) and finds the Lindbladian *L* closest to *A.* The latter task can be accomplished by solving a positive semidefinite program (see discussion above on Markovian Channels and Lindblad Generators). If ∥*e^{L}* - *E*∥ is small enough, then the algorithm returns *L.* Again, by the assumption ∥*L^{*} - L^{ideal}*∥ ≤ *c*₂*,* we can terminate the search over the branches of log(*E*) as soon as ∥*A - L^{ideal}*∥ becomes too large (recall the Z vs. Z³ example, above).

The simplest special case of the Convex Solve method simply returns the Lindbladian closest to a principal branch of log(*E*), which is unique as long as *E* does not have real negative eigenvalues even when *E* has degenerate eigenvalues. We prove below (see "Analysing the Convex Solve Method for the Lindbladian Fitting Problem Without Statistical Error) that under the weak noise assumption even when *E*^{*} contains degenerate eigenvalues, the simplest special case of the Convex Solve method already solves the problem if the gate noise is truly time-independent Markovian, statistical error is absent (i.e. E *= E^{*}*), and |*Im*(*λ*)| *< π* for every eigenvalue *λ of L^{ideal}.* The last condition holds with a meaningful gap for many important gates including $\sqrt{X} ⊗ I$, *T* ⊗ *I,* and most notably, the identity gate *I* ⊗ *I.* In addition, and surprisingly, our numerics shown later suggest that the Convex Solve method also already works at the level of statistical noise induced by 10⁴ tomographic shots for these gates.

### Analysing the Convex Solve Method for the Lindbladian Fitting Problem Without Statistical Error

Recall that the input to the Lindbladian fitting problem is a *d*² × *d*² transfer matrix *E*, and the goal is to search for an *L* ∈ 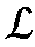 that minimises ∥*e^{L}* - *E*∥ where 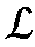 is the set of all Lindbladians. We have restricted ourselves to special cases of the problem satisfying two additional assumptions. Namely, we assume there exists an unknown Lindbladian *L*^{*} such that for *E*^{*} *= e^{L^{*}},* ∥*E* - *E*^{*}∥ ≤ *c*₁ for some small constant *c*₁, and there exists a known Lindbladian *L^{ideal}* such that ∥*L*^{*} *- L^{ideal}*∥ ≤ *c*₂ for some small constant *c*₂. In this analysis, we further assume *E = E^{*}* (i.e. *c*₁ = 0), so the goal becomes outputting an *L* ∈ 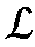 ∩ log(*E*) which need not necessarily be *L** and where log(*E*) *=* {*A*: *e^{A} = E*}*.*

We first establish a key lemma. For every diagonalisable matrix *A,* let *ρ*(*A*) *=* max{|*λ*|: *λ* is an eigenvalue of *A*} denote its spectral radius. For every invertible matrix *B*, let *κ*(*B*) = ∥*B*∥∥*B*⁻¹∥ denote its condition number.

The lemma is as follows:
Write *L^{ideal} = VDV*⁻¹ for some diagonal matrix *D* and invertible matrix *V*. If ∥*L*^{*} *- L^{ideal}*∥ *<* $\frac{π - ρ \left({L}^{ideal}\right)}{κ \left(V\right)}$, then for every eigenvalue *µ* of *L^{*},* |*Im*(*µ*)| *< π.*

This is true for the following reasons:
Let *µ* be an eigenvalue of *L*.* By the Bauer-Fike theorem, there exists an eigenvalue *λ* of *L^{ideal}* such that: $\left|μ\right| - \left|λ\right| \leq \left|μ-λ\right| \leq κ \left(V\right) \left‖L*-{L}^{ideal}\right‖ < π - ρ \left({L}^{ideal}\right)$

Thus: $\left|Im\left(μ\right)\right| \leq \left|μ\right| < π - ρ \left({L}^{ideal}\right) + \left|λ\right| \leq π$

Note that for *L^{ideal}* generating a unitary gate, all the eigenvalues of the ideal transfer matrix *E^{ideal}, = e^{L^{ideal}}* have modulus 1, which implies *ρ*(*L^{ideal}*) ≤ *π* for *L^{ideal}* **in** the principal branch. It is worth emphasising that this lemma is not asymptotic in nature, and its assumption, which only depends on *L^{ideal},* holds for realistic values of *c*₂ for many practically relevant *L^{ideal}.*

For example, for the identity gate with *L^{ideal}* = 0, we have *ρ*(*L^{ideal}*) *=* 0 and *κ*(*V*) = 1, so *c*₂ < *π* suffices. As another example, for the *T* ⊗ *I* gate, we have $ρ \left({L}^{ideal}\right) = \frac{π}{4}$ and *κ*(*V*) = 1, so we can choose ${c}_{2} \leq \frac{3}{4}$. Unfortunately, for both CNOT and ISWAP, we have *ρ*(*L^{ideal}*) = *π,* so the above lemma does not apply.

When *E* has degenerate eigenvalues, a degenerate eigenspace of *E* could split into different eigenspace of *L*^{*} due to the non-uniqueness of complex logarithms, which induces continuous degrees of freedom in specifying an *A* ∈ log *E*. We call this phenomenon eigenspace splitting. It should be clear that conditioned on eigenspace splitting not occurring for *L*^{*}, the Convex Solve method will eventually locate *L*^{*} in log *E* since in this case, the Convex Solve method correctly enumerates over the remaining discrete degrees of freedom. Our main observation states that if the assumption of this lemma holds, then eigenspace splitting cannot occur for *L*.*

We present a further theorem on this point:
If *E* = *E*^{*}and $\left‖L*-{L}^{ideal}\right‖ < \frac{π - ρ \left({L}^{ideal}\right)}{κ \left(V\right)}$, then the Convex Solve method outputs an *L* ∈ 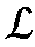 ∩ log(*E*)*.*

First consider the case where *E* has *d*² distinct eigenvalues. Then the above lemma directly implies *L*^{*} is the principal branch of log*E*.

Now suppose *E* = *E*^{*} contains degenerate eigenvalues. Suppose there exist $a , b ∈ ℝ$ and integer *k* with |*k*| ≥ 1 such that *L** has two eigenvalues *a + bi* and *a + bi +* 2*πki* which both exponentiate to the eigenvalue *e*^{*a*+*bi*} for *E*. Then either |*b*| ≥ *π* or |*b +* 2*πk*| ≥ *π,* which contradicts the above lemma. Therefore, *L*^{*} and *E* have the same set of eigenspace projectors and *L*^{*} is the principal branch of log*E*.

Although the above theorem does not apply if *E^{ideal},* has real negative eigenvalues, it remains true that if eigenspace splitting does not occur for *L*^{*}, then the Convex Solve method succeeds on *E*. Next, we describe two mechanisms by which eigenspace splitting could occur for *E^{ideal},* containing real negative eigenvalues for arbitrarily small ∥*L*^{*} *- L^{ideal}*∥*.*

Consider a situation where -1 is a degenerate eigenvalue of *E^{ideal}* with degeneracy at least 4 (for example, the ideal transfer matrix of CNOT has a 6-dimensional degenerate -1 eigenspace). Then *πi* and *-πi* are eigenvalues of *L^{ideal}* each with degeneracy at least 2. Then for every *ε* > 0, it is possible for *L** to have eigenvalues (*π + ε*)*i,* (*-π* - *ε*)*i,* (*π - ε*)*i,* and (*-π + ε*)*i.* Now, (*π + ε*)*i* and (*-π* + *ε*)*i* exponentiate to the same eigenvalue for E* and similarly for (*-π - ε*)*i* and (*π - ε*)*i.* Thus, a degenerate eigenspace of E* corresponding to the eigenvalue *e*^{(*π+ε*)*i*} gets split into different eigenspaces for *L** corresponding to the eigenvalues (*π* + *ε*)*i* and (*-π + ε*)*i*. Note that since *ε* is arbitrary, this can happen for arbitrary ∥*L^{*} - L^{ideal}*∥*,* so no condition on ∥*L^{*} - L^{ideal}*∥ alone can guarantee eigenspace splitting does not occur for noisy CNOT gates. We note that the behaviour described in this paragraph has never been observed in practice during our numerical testing.

Another failure mode for the Convex Solve method occurs when *E* persists to have real negative eigenvalues. This can happen when precisely one out of the two qubits is noisy. We view such scenarios to be highly non-generic.

In the real world, the input *E* obtained from quantum process tomography suffers from finite statistical error controlled by the number of sampling shots. In particular, *E* ≠ *E*^{*} and *E* will almost never correspond to a Markovian channel. At best, we can assume *E* is the transfer matrix of a CPTP channel since it is cheap to project *E* to be CPTP. Hence, the actual input *E* to our problem is always the transfer matrix of a non-Markovian channel, and the goal is to find a Lindbladian *L* that best fits *E* with the promise that *E* is close to some unknown Markovian channel *E*^{*}. The presence of statistical noise in the input *E* is necessary for the Lindbladian fitting problem to be non-trivial for the family of Markovian channels we consider as statistical noise causes the input to be non-Markovian.

The Convex Solve method is not the whole story because the transfer matrices *E^{ideal},* of an important family of gates that we would like to characterise do contain real negative eigenvalues, so under the weak noise assumption, *E*^{*} and *E* will have eigenvalues close to being real negative. This family includes CNOT, ISWAP, and the tensor product of Pauli and Hadamard gates. Under a realistic level of statistical noise induced by 10⁴ tomographic shots, we observe that for gates from this family, both ∥*L - A*∥ and ∥*e^{L}* - *E*∥ could be significantly larger than ∥*E* - *E*^{*}∥ for every closest Lindbladian L to every *A* ∈ log(*E*) (see results below for a CNOT example). Hence, the Convex Solve method fails on these inputs, and these cases require other methods described herein to tackle, since a naïve assumption to take the principal logarithmic branch will return an incorrect eigenvalue structure, leading to a poor estimate when projecting onto the set of Lindbladians.

Now, we are ready to describe the Alternating Projections algorithm. In this work, we give a new algorithm that has significantly better performance in terms of both accuracy and runtime than any known logarithmic-search-based approach. The insight in the new algorithm is that we don't have to solve the Lindbladian fitting problem "blind" -- we have knowledge about what a "good" initial guess is (because we know what gate we tried to implement). As an example, we can start from the Lindbladian generator of the ideal gate L^{ideal}.

Here, we sketch the main idea of the algorithm and defer a complete description to later in this document. The input to the algorithm is E and an initial best-guess Lindbladian *L*₀. The default choice sets *L*₀ *= L^{ideal},* but a better estimate, if available, could be used instead. Let 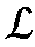 denote the set of all Lindbladians and define log(*E*) *=* {*A*: *e^{A} = E*}*.* The goal is to compute: ${min}_{L ϵ L} \left‖{e}^{L}-E\right‖ = {min}_{L ϵ L , A ϵlog \left(E\right)} \left‖{e}^{L}-{e}^{A}\right‖$ and output an optimal Lindbladian *L*. We approximate the latter minimisation problem by the problem: ${min}_{L ϵ L , A ϵlog \left(E\right)} \left‖L-A\right‖$

Note that if *E* is Markovian, i.e. *E* = *E*^{*}, then the optimal values of equations (21) and (22) are both zero, and the solution set is precisely 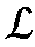 ∩ log(*E*)*.* If both 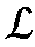 and log(*E*) were closed convex sets, then the problem in equation (22) can be solved using alternating projections which starts from a given starting point and alternatingly projects onto each of the two sets until convergence. In our case, 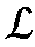 is a closed convex cone and projecting onto it can be accomplished by solving a positive semidefinite program in the manner set out above.

However, the set log(*E*) is not convex, and we do not know how to solve the problem min∥*A* - L₀∥ subject to *A* ∈ log(*E*) directly. To this end, we devise a procedure to construct an *A* ∈ log(*E*) that approximately minimises min∥*A* - L₀∥, inspired by the assumption that ∥*E* - *e*^{*L*⁰}∥ is small to begin with.

Suppose *E* has *n* ≤ *d*² distinct eigenvalues associated with *n* unique eigenspace projectors Π₁,...,Π*ₖ*. Let *v*₁*,...,v*_{*d*²} be a set of eigenvectors of L₀. For every pair of eigenvector *vⱼ* and projector Π*ₖ*, we compute the cost ∥*vⱼ* - Π*ₖvⱼ*∥*.* We then assign each eigenvector to a projector, finding the lowest cost arrangement. This can be achieved for example by solving a minimum cost maximum flow problem to assign each eigenvector *vⱼ* to a best-fit eigenspace Π*ₖ*. As noted above, this can be kept track of by using an index *i*, once the lowest cost assignment is found. This index, *i_{k,a}*, represents the index given to the *a^{th}* eigenvector assigned to the *k^{th}* subspace.

A matrix *A̅* ∈ log(*E*) is reassembled by pairing up the log of the eigenvalues of *E* (in some branch) and the eigenvectors Π*ₖvⱼ.* The algorithm then projects *A̅* onto 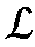 to get a Lindbladian *L̅* and checks whether: $\left‖{e}^{\overline{L}}-E\right‖ < \left‖{e}^{{L}_{0}}-E\right‖$

If yes, then we update the current best-guess Lindbladian to be *L̅*. The process may then repeat using *L̅* as the best-guess Lindbladian.

Since the eigenvectors of *E* tend to differ non-trivially from the eigenvectors of E^{*} under realistic levels of statistical error, we adopt an eigenvalue clustering preprocessing step. That is, the user needs to specify a precision parameter *β* so that the eigenvalues of E differing by less than *β* are treated as being identical and their eigenspaces are merged into a single degenerate eigenspace. Note that this causes the matrix *A̅* constructed during the algorithm to belong to some enlarged set ${log}^{˜} \left(E\right) = \left\{A:{e}^{A}\approx E\right\}$ as opposed to log(*E*) where the quality of the approximation is controlled by the precision parameter *β*. Note that if *β*=0, then ${log}^{˜} \left(E\right) =$ log(*E*)*.* Also, notice that our Alternating Projections algorithm reduces to the Convex Solve method if we set the precision parameter *β*=0. Hence, the Alternating Projections algorithm includes the Convex Solve method as a special case.

Consider a case where L^{ideal} has a *k*-fold degenerate eigenspace Π that gets split into two (possibly still degenerate) eigenspaces Π₁ and Π₂ of *L*^{*} due to gate noise. When our algorithm computes a set of eigenvectors *v*₁*,...,vₖ* for Π, there is no guarantee which vectors in Π will the eigen-solver return. Indeed, L^{ideal} is indifferent to the choices of *v*₁*,...*,*vₖ* as all of them lead to the same eigenspace projector. However, it is possible that *v*₁,...,*vₖ* are all far away from Π₁ or Π₂.

For example, consider $\prod = {ℂ}^{2}$, *v*₁ = |0), *v*₂ = |1) Π₁ = span{|+〉}, and Π₂ = span{|-)}. This will not cause trouble if ∥*E* - *E*^{*}∥ is sufficiently small to allow us to choose *β* small enough so that the eigenvalues of *E* corresponding to Π₁ and Π₂ are treated as distinct. However, in the parameter regimes feasible today, it is likely that the algorithm would need to choose a large *β*, which results in the merging of Π₁ and Π₂, so that the matrix $\overline{A} ∈ {log}^{˜} \left(E\right)$ constructed is not too far away from *L.* In other words, choosing a large *β* blurs the goal of finding vectors close to Π₁ and Π₂.

To address this issue, instead of initialising at precisely *L^{ideal},* the algorithm tries to roughly guess the correct "directions" by starting at random perturbations *L̃^{ideal}* of *L^{ideal}.* We empirically observe that for the 1-qubit case, a handful of uniformly random perturbed starts would suffice. However, for the 2-qubit case, the search space becomes too vast to cover by a small number of uniformly random perturbations. As a heuristic solution, we perturb diagonally: ${{L}^{˜}}^{ideal} = {L}^{ideal} + D$ and diagonally "along the X-axis" ${{L}^{˜}}^{ideal} = {L}^{ideal} + {H}^{⊗ 4} {DH}^{⊗ 4}$ for random diagonal matrices *D* with small norms.

Due to the mismatch between equations (21) and (22) and the fact that log(*E*) (or for that matter $\left.{log}^{˜}\left(E\right)\right)$ is non-convex, standard convergence guarantees for the alternating projections method do not apply to our algorithm. For the Markovian *E* = *E*^{*} case, the arguments given above directly translate to the Alternating Projections algorithm when choosing the precision parameter *β*=0.

We have implemented our algorithm in software and tested extensively on synthetic data obtained using simulated quantum process tomography. We focus on the case where the gate noise is Markovian, so E^{*} corresponds to the ground truth channel while *E* differs from E^{*} solely due to statistical error. In this case, on the one hand, it is almost certain that: ${min}_{L ϵ L} \left‖{e}^{L}-E\right‖ < \left‖E*-E\right‖$ while on the other hand, it is pointless to search for a Lindbladian *L* whose objective value ∥*e^{L}* - *E*∥ is much smaller than ∥*E*^{*} - *E*∥. Hence, in our testing, we consider a run of the algorithm to be successful if the output Lindbladian *L* satisfies ∥*e^{L} - E*∥ ≤ ∥*E* - *E*^{*}∥, and we call this success criterion Success 1. We also consider a more stringent success criterion, called Success 2, which checks for ∥*e^{L}* - *E*^{*}∥ ≤ ∥*E* - *E*^{*}∥, i.e. whether the output Lindbladian *L* closely fits the ground truth transfer matrix E*. We view passing Success 2 as a bonus since the algorithm is not intended to remove statistical error from *E*. Instead, we would realistically expect ∥*e^{L} - E*^{*}∥ ≈ ∥*E* - *E*^{*}∥ and passing Success 1 guarantees at a bare minimum that ∥*e^{L} - E^{*}*∥ ≤ ∥*e^{L}* - *E*∥ + ∥*E* - *E*^{*}∥ ≤ 2∥*E* - *E*^{*}∥. We tested our Alternating Projections algorithm on 600 test cases split across 30 different gate and gate noise combinations, all under a realistic level of statistical error induced by 10⁴ tomographic shots. Our algorithm achieved success rates of 100% and 61.4% w.r.t Success 1 and Success 2 respectively. See below for more detail and for additional test results.

### The Gate Set Lindbladian Fitting Problem

We first describe the gate set Lindbladian fitting problem in the theoretical setting where there is no statistical error and all gate noises are Markovian. In this case, the input to the gate set Lindbladian fitting problem consists of a set of k + 1 matrices: $\left\{g*,{P}_{1}^{∗},…,{P}_{k}^{∗}\right\} = \left\{A*B*,A*{E}_{1}^{∗}B*,…,A*{E}_{k}^{∗}B*\right\}$ where each ${E}_{i}^{∗} = {e}^{{L}_{i}^{∗}}$ is the transfer matrix of a Markovian channel representing a chosen unitary gate ${E}_{i}^{ideal} = {e}^{{L}_{i}^{ideal}}$ perturbed by some small gate noise, each row of *A^{*}* encodes a 2-outcome POVM, and each column of *B** is a vectorised density matrix. It is assumed that *A^{*}* and *B*^{*} originate from effecting some SPAM errors to some chosen ideal measurement (2-outcome POVMs) settings *A^{ideal}* and preparation (density matrices) settings *B^{ideal}* respectively. Note that the SPAM errors are not assumed to be Markovian. The Gram matrix *g^{*} = A^{*}B^{*}* is assumed to be invertible. By left multiplying (*g*^{*})⁻¹ to each ${P}_{i}^{∗}$, we obtain a set of matrices: $\left\{{\left(B*\right)}^{- 1}{E}_{1}^{∗}B*,…,{\left(B*\right)}^{- 1}{E}_{k}^{∗}B*\right\}$ one for each gate in the gate set. A solution to the gate set Lindbladian fitting problem consists of, and hence the goal is to find, a physical *B* and Lindbladians *L*₁*,...,Lₖ* such that: $B {\left(g*\right)}^{- 1} {P}_{i}^{∗} {B}^{- 1} = B {\left(B*\right)}^{- 1} {E}_{j}^{∗} B * {B}^{- 1}$ for every gate *i* ∈ {1,...,*k*} and *A* = *g^{*}B*^{*-*1} is physical. We define *A* to be physical if every row of *A* encodes a 2-outcome POVM while *B* is physical if *B* is invertible and every column of *B* is a vectorised density matrix. Let (*B,L*₁*,...,Lₖ*) be a solution and for every gate *i*, define *Eᵢ = e^{Lⁱ}.* While it is clear that ( $B * , {L}_{1}^{∗} , … , {L}_{k}^{∗}$) is a solution, it is important to note that (*B,L*₁*,...,Lₖ*) need not be equal to ( $B * , {L}_{1}^{∗} , … , {L}_{k}^{∗}$). In fact, given the input: $\left\{A*B*,A*{E}_{1}^{∗}B*,…,A*{E}_{k}^{∗}B*\right\}$ it is impossible to distinguish whether the underlying physical process is generated by ( $A * , B * , {L}_{1}^{∗} , … , {L}_{k}^{∗}$) or (*A, B, L₁*,..., *Lₖ*) since *AB = A^{*}B^{*}* and for every gate i ∈ {1*,...,k*}: ${AE}_{i} B = A \left(B{\left(B*\right)}^{- 1}{E}_{i}^{∗}B*{B}^{- 1}\right) B = A * {E}_{i}^{∗} B *$

In other words, ( $A * , B * , {L}_{1}^{∗} , … , {L}_{k}^{∗}$) and (*A, B, L*₁*,..., Lₖ*) generate the same input. Nevertheless, under the same weak noise assumptions that we made above, *B** is not far away from *B^{ideal}* and ${E}_{i}^{∗}$ is not far away from ${E}_{i}^{ideal}$ for every gate *i*. Thus, we would prefer solutions closer to ( ${B}^{ideal} , {L}_{1}^{ideal} , … , {L}_{k}^{ideal}$).

The Lindbladian fitting problem is precisely captured by the optimisation problem of minimising the objective function: $f \left(B,{L}_{1},…,{L}_{k}\right) = {\sum }_{i = 1}^{k} \left‖B{\left(g*\right)}^{- 1}{P}_{i}^{∗}{B}^{- 1}-{e}^{{L}_{i}}\right‖$ subject to the constraints that *L*₁*,...,Lₖ* are Lindbladians, *B* is physical, and *A = g*^{*}*B*^{*-*1} is physical. Clearly, (*B,L*₁*,...,Lₖ*) is a solution to the gate set Lindbladian fitting problem if and only if (*B,L₁,*...,*Lₖ*) is feasible and *f*(*B,L*₁*,...,Lₖ*) *=* 0. Comparing to standard gauge optimisation in GST, note that the objective function in equation (32) is similar to equation (19), except replacing each ${E}_{i}^{ideal}$ with *Eᵢ* = *e^{Lⁱ}*, and that *B^{*} is* an optimal gauge for equation (32).

Now consider the realistic scenario where the input matrices are not precisely: $\left\{g*,{P}_{1}^{∗},…,{P}_{k}^{∗}\right\}$ but are some nearby matrices: $\left\{{g}^{˜},{{P}^{˜}}_{1},…,{{P}^{˜}}_{k}\right\}$ due to the inevitable statistical error in performing quantum process tomography. In this case, there is unlikely to be a physical *B* that makes *Bg̃*⁻¹*P̃ᵢB*⁻¹ exactly Markovian for any gate *i*. Thus, the goal of the gate set Lindbladian fitting problem needs to be relaxed to accommodate statistical error. To this end, we relax the goal to finding a near-physical *B* such that *A = g̃B*^{*-*1} is near-physical and *Bg̃*^{*-*1}*P̃ᵢB*^{*-*1} is close to being Markovian for every gate *i*. The amount of slack allowed for the physical constraints is an input parameter selected by the user and should be chosen based on the number of tomographic shots used to estimate the Gram matrix *g̃*. We model this problem by the optimisation problem minimise: ${f}_{max} \left(B,{L}_{1},…,{L}_{k}\right) = {max}_{i = 1 , … , k} \left‖B{{g}^{˜}}^{- 1}{{P}^{˜}}_{i}{B}^{- 1}-{e}^{{L}_{i}}\right‖$ subject to the constraints that *L*₁*,...,Lₖ* are Lindbladians, *B* is near-physical, and *A = g̃B*^{*-*1} is near-physical. We minimise the max over the gate set in the definition of *fₘₐₓ* as opposed to the sum in *f* to enforce the requirement of finding a single gauge *B* that simultaneous fits all gates in the gate set. Under the sum formulation, a gauge *B* that fits some of the gates in the gate set extremely well but the remaining gates poorly may have a small objective value. Such a *B* clearly does not explain the true physical process and hence is undesirable. Adding more gates to the gate set may alleviate this problem. However, in a real experiment, it is common for the experimenter to want to characterise only a particular gate, for example CNOT, but GST is performed on a gate set consisting of CNOT and other auxiliary gates chosen solely for the purpose of fitting the SPAM errors. Thus, it is also undesirable to require a large gate set. The max formulation in equation (35) tries to address this trade-off.

Applying gradient-based local minimisation algorithms to optimise equation (35) is tricky since the max function is not differentiable everywhere. One common workaround is to approximate the max function by a smooth approximation, and this is the approach we take. The LogSumExp (LSE) function is defined as $LSE \left\{{x}_{1},…,{x}_{k}\right\} = ln \left({e}^{{x}_{1}}+⋯+{e}^{{x}_{k}}\right)$ and it is easy to show that for every *t* > 0, $max \left\{{x}_{1},…,{x}_{k}\right\} \leq \frac{1}{t} LSE \left\{{tx}_{1},…,{tx}_{k}\right\} \leq max \left\{{x}_{1},…,{x}_{k}\right\} + \frac{ln \left(k\right)}{t}$

Moreover, the LSE function is monotonically increasing in all of its inputs. We fix the scaling factor *t* to be some constant that depends on *k* and the number of tomographic shots. Our final objective function for the gate set Lindbladian fitting problem is the following approximation of equation (35) based on the LSE function: $h \left(B,{L}_{1},…,{L}_{k}\right) = \frac{1}{t} LSE \left\{t\left‖B{{g}^{˜}}^{- 1}{{P}^{˜}}_{1}{B}^{- 1}-{e}^{{L}_{1}}\right‖,…,t\left‖B{{g}^{˜}}^{- 1}{{P}^{˜}}_{k}{B}^{- 1}-{e}^{{L}_{k}}\right‖\right\}$

Next, we describe our approach for minimising the objective function of equation (38) subject to Lindbladian and physical constraints. We call our algorithm Gate Set Flip-Flop. The idea is to minimise equation (38) via alternating local minimisation. The initial guess used to seed the optimisation is ( ${B}^{ideal} , {L}_{1}^{ideal} , … , {L}_{k}^{ideal}$). This is a sensible choice since we seek solutions in the vicinity of ( ${B}^{ideal} , {L}_{1}^{ideal} , … , {L}_{k}^{ideal}$) in accordance with the weak noise assumption. The strategy is to minimise *h*(*B,L*₁*,...,Lₖ*) by alternating between minimising with respect to *B* with *L*₁*,...,Lₖ* fixed and minimising with respect to *L*₁*,...,Lₖ* with *B* fixed. When *L*₁*,...,Lₖ* are fixed, we minimise the (restricted) objective function over *B* subject to physical constraints on *A* and *B* using gradient-based methods. When *B* is fixed, minimising with respect to *L*₁*,...,Lₖ* amounts to fitting a Lindbladian to each *Eᵢ = Bg̃*^{*-*1}*P̃ᵢB*^{*-*1}*,* which we can handle using either the Convex Solve or the Alternating Projections algorithms described above. Note that we adopt *Lᵢ* at the current iteration of Gate Set Flip-Flop as the input best-guess Lindbladian for the next run of Alternating Projections. Since *Eᵢ* being Markovian for all *i* ∈ {1,...,*k*} correspond to a solution with objective value zero, which is essentially impossible in the presence of statistical error, the *Eᵢ*'s will be non-Markovian throughout the algorithm.

In Gate Set Flip-Flop, we need to choose between starting by minimising with respect to *B* or *L*₁*,...,Lₖ.* Minimising with respect to *B* first against the ideal gates ${E}_{i}^{ideal}$ is similar to gauge optimisation in standard GST, except with physical constraints on *B* and a different objective function. For each gate i, minimising with respect to *Lᵢ* first against *B^{ideal}g̃*^{*-*1}*P̃ᵢ*(*B^{ideal}*)^{*-*1} resembles linear inversion process tomography where SPAM errors are assumed to be non-existent. Which choice is more preferable depends on whether we have prior knowledge about the noise characteristics in the input. If we believe state preparation errors are stronger than gate noises, then minimising with respect to *B* first could perform the best. Conversely, if we have the prior knowledge that state preparation errors are considerably weaker than gate noises, then minimising with respect to the Lindbladians first could be preferable.

Recall the fact that the LSE function is monotonically increasing in each of its inputs. Thus, by design, the objective values of the iterates generated by Gate Set Flip-Flop form a monotonically non-increasing sequence that is bounded from below. Thus, the sequence of objective values necessarily converges to a fixed point. However, by the nature of local minimisation, the Gate Set Flip-Flop algorithm is not guaranteed to find an optimal solution.

The main difference between the gate set Lindbladian fitting problem and standard gauge optimisation in GST (see equation (19)) lies in replacing each ${E}_{i}^{ideal}$ with *e^{Lⁱ}* in the objective function. Operationally speaking, during each iteration of Gate Set Flip-Flop, the gauge *B* is minimised with respect to a set of more accurate estimates of the noisy gates than the ideal gates ${E}_{i}^{ideal}$. This can improve the accuracy of the estimated SPAM errors encoded in *B* by reducing the amount of gate noises erroneously pulled into SPAM errors.

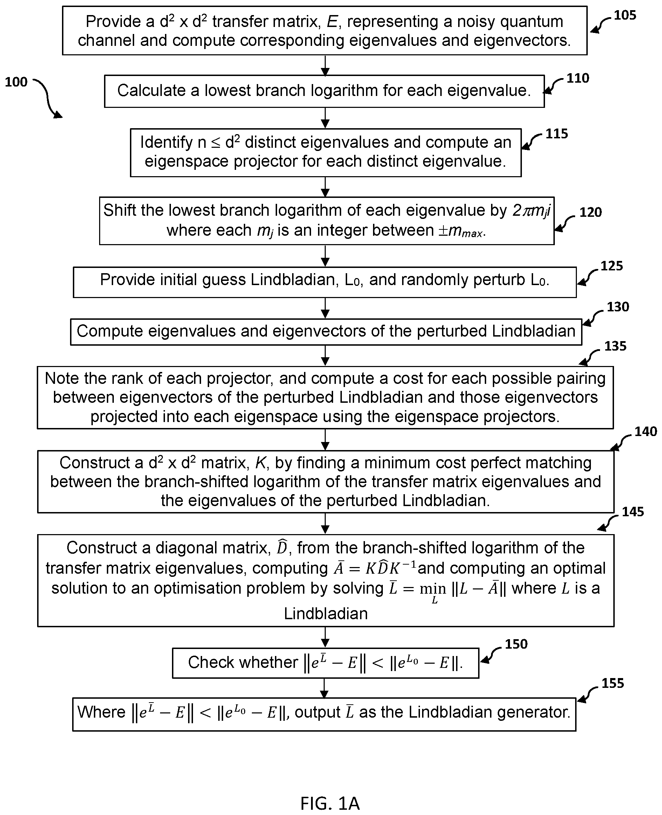

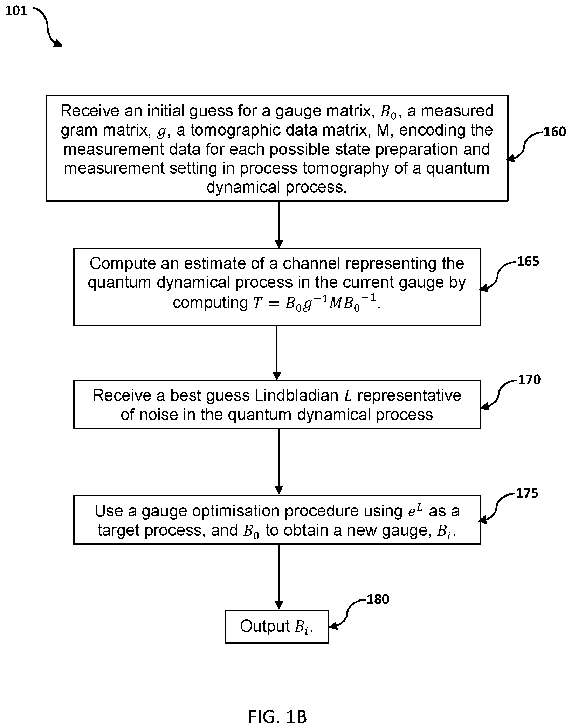

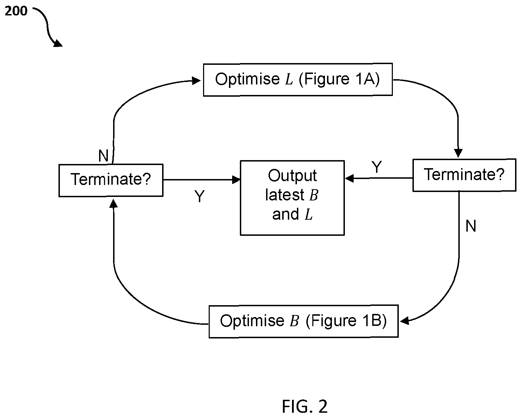

The principles of the methods discussed above are set out in Figures 1A, 1B and 2.

In Figure 1A, a flow chart 100 is shown for improving an estimate of *L*, in line with the above discussion. Broadly, the process 100 starts with a characterisation of noise in a noisy channel (provided by E), and estimates a Lindbladian generator which heuristically generates that noise, thereby to provide a characterisation of the noise in the noisy channel. For the avoidance of doubt, the noisy quantum channel characterises the time evolution of the quantum dynamical process(es) being studied. Repeated executions of the process 100 can be used (starting from the previously found Lindbladian generator) to iteratively improve the estimate. The matrix E is a square matrix of dimension *d*², which is derived in essence from the number of qubits on which the tomography is being performed. Since a 2-qubit gate is described by a 4 x 4 matrix, d is 4 in such an example, and E is a 16 x 16 matrix. In general, a p-qubit gate leads to an E having dimension (2^{p})² = 2^{2p}. Note that the principles discussed herein can be applied to matrices of any size, albeit with an increase in the classical compute power needed to execute the steps.

As shown, the method includes a first step 105 in which the transfer matrix E is provided. This is derived by the output of process tomography as discussed above in detail using the specific inputs to select a gauge. The gauge itself can be optimised by making use of gauge optimisation (discussed below - see Figure 1B). From the received matrix *E*, left- and right-eigenvectors and corresponding eigenvalues are calculated. Once eigenvalues (e.g. right eigenvectors) have been obtained, the matrix E can be inverted to obtain corresponding left eigenvectors. The product |***r*〉〈*l***| has unit norm.

Next, in step 110, the lowest branch logarithm is calculated for each eigenvalue. For each distinct eigenvalue, an eigenspace projector Π*ₖ* is calculated in step 115. In order to generate the eigenspace projector, Π*ₖ*, a sum over |***r*〉〈*l***| for fixed eigenvalue is calculated. Distinct eigenvalues result in respective projectors so where all are distinguishable, we have *d*² separate projectors of rank 1, where all are indistinguishable there is one projector of rank *d*². When n < *d*² (i.e. some eigenvalues are indistinguishable, some are distinct), the projectors have higher rank, equal to the multiplicity of the eigenvalues. All |***r*〉〈*l***| will be used in order to span the subspace.

In determining the distinctness of two eigenvalues in step 115, any two *µⱼ,µₖ* may be declared as degenerate when |*µⱼ - µₖ*| ≤ *β*, and otherwise are declared as distinct, where *β* is a predetermined precision parameter, as discussed above.

In step 120, a logarithmic branch shift list is provided, which operates in the manner described in detail above to perturb each eigenvalue into a different logarithmic branch (by shifting in a positive or negative value up to a maximum distance |*mₘₐₓ*|).

We need to trial different values of *mⱼ* for each eigenvalue to attempt to recover the correct branch. The method therefore proceeds by selecting an assignment for each *λⱼ* such that each *λ*ⱼ is shifted independently by a value between -*mₘₐₓ* and *mₘₐₓ* where |*mₘₐₓ*| is an integer of value 1 or higher. These are randomly or intelligently chosen and then fixed for the following steps. We then optimise the search for a Lindbladian in that set of branches. The method may operate by repeating the process with additional perturbations, accepting better and better Lindbladians (and rejecting worse ones) until either convergence or we reach a maximum allowed number of iterations (e.g. set by user based on time or resource constraints). At this stage we have the best form of that branch vector, *M*. Different forms of *M* can be used in further repetitions to try to improve the convergence of *L*. Where |*mₘₐₓ*| is finite, in principle all combinations of *M* can be tried. In some cases, |*mₘₐₓ*| ≤ 1. Given reasonable assumptions about the magnitude of the noise, logarithmic branch shifts beyond adjacent logarithmic branches are unlikely.

At step 125 an initial guess Lindbladian *L* is provided. Note that where this method is executed multiple times, this *L* may be the most recent improved Lindbladian output from the process. In other cases if the ideal gate under consideration is known, it is possible to compute a generating Hamiltonian, which can be used to construct the initial guess for the Lindbladian.

Note that although this is the fifth step, the input Lindbladian can be provided at any time in the method up until now.

Step 125 also includes a random perturbation being applied to *L*. As noted above this can be used to ensure that the eigenspace projectors remain distinct. Note that if the method is repeated, different perturbations may be used to create a new family of Lindbladians. Between the different branch list, *M* and the different perturbations, already there are two degrees of freedom which a user can exploit to explore how different factors affect the procedure and find ever better Lindbladians, since each repetition allows the Lindbladian generator having the lowest value of ∥*e^{L̅}* - *E*∥ across all executions to be output as the Lindbladian generator.

An example perturbation may have the form: ${{L}^{˜}}_{0} = {L}_{0} + R ;$ or ${{L}^{˜}}_{0} = {L}_{0} + {H}^{⊗ 2 n} {RH}^{⊗ 2 n} ;$ wherein the quantum dynamical process is associated with a system of *n* qubits, *R* is a random diagonal matrix with a small norm, and *H* is the Hadamard gate.

These perturbations are typically chosen to have a tolerance in line with a user's preferences. The norm of the perturbation should be small compared to the distance between the ideal and ground truth Lindbladian. In general this is not known a priori, but a reasonable guess is possible.

In step 130 the eigenvalues and eigenvectors of the perturbed Lindbladian are calculated. This will allow later steps to compare these eigenvalues and eigenvectors with those of the noisy channel matrix *E* to try to identify the best match.

In step 135, the best available mapping of the eigenvectors of the transfer matrix *E* and those of *L* is identified by considering all eigenvectors of the initial guess (or current best guess where the process is repeated) and seeing how much they change when projected (using Π*ₖ* projectors) onto the subspaces of the transfer matrix. We then search over all assignments in which each eigenvector of *L* is paired with a different projection from the set of projectors and select the one with the lowest total cost (i.e. smallest cumulative misalignment across all full assignments). This can be thought of as considering each Π*ₖ* as having a number, *n,* of slots to which we match exactly *n* eigenvectors of the perturbed *L* and then carry on assigning until all have been matched. This works because the Π*ₖ* is constructed from *n-*fold degenerate eigenvectors, so has rank *n,* and can therefore correspond to exactly *n* eigenvectors of *L.*

This lowest cost assignment in step (7) may be found using a minimum cost, maximum flow optimisation procedure. This approach allows the assignment to be cast as a flow problem and existing techniques for finding optimal solutions can then be applied to the problem.

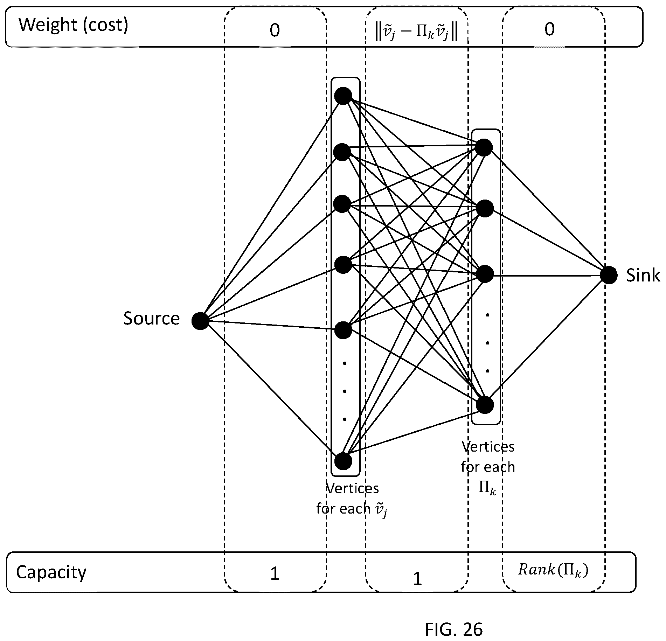

This procedure is highlighted in Figure 26. Here, the minimum cost, maximum flow optimisation procedure includes constructing a directed graph having 2 + *d*² + *n* vertices, wherein each eigenvector *ṽⱼ* : *j* ∈ {1, ... , *d*²}, and each eigenspace projector Π*ₖ* : *k* ∈ {1, ... ,*n*} is associated with a different vertex. The remaining two vertices are a source vertex, *s* and a sink vertex, *t.*

Each vertex associated with each eigenvector *ṽⱼ* is joined to the source vertex, *s,* with edges each having capacity 1 and weight 0. Each vertex associated with each eigenvector *ṽⱼ* is joined to each vertex associated with each eigenspace projector Π*ₖ* with edges each having capacity 1 and weight proportional to ∥*ṽⱼ* - Π*ₖṽⱼ*∥ for the two vertices which that edge joins. Finally, each vertex associated with each eigenspace projector Π*ₖ* is joined to the sink vertex, *t,* with edges each having capacity equal to the rank of the eigenspace projector Π*ₖ* to which each edge joins and weight 0.

This provides an explicit form for the flow problem, such that the flow problem encodes the constraints of the assignment problem. Specifically, there are d² source -> eigenvector connections, each having capacity 1, so the full d² capacity for the problem is preserved (i.e. there are d² eigenvectors which must be paired with a projector). These have a weight (i.e. cost) of 0, since each must be a legitimate pathway because each of the d² eigenvectors must be associated with a projector, so these pathways have the lowest possible cost associated with them (i.e. 0).

The next set of connections (a set of edges linking each eigenvector vertex with each projector vertex - a total of *n* × *d*² edges) represents each possible pairing of an eigenvector with a projector. Each has capacity 1 indicating that each eigenvector is associated with a single projector (although the reverse is not necessarily true as projectors can have rank of one or more than one, meaning that a single projector may be associated with multiple eigenvectors). The edges in this set are weighted so as to apply a higher cost to edges where ∥*ṽⱼ -* Π*ₖṽⱼ*∥ is large. Note that all edges in this set are proportional to ∥*ṽⱼ -* Π*ₖṽⱼ*∥, using the same proportionality constant. While a constant of 1 may be used, some algorithms for solving minimum cost, maximum flow problems need each weight to be an integer, so a large proportionality constant may be used to ensure that any decimal places in the weightings, which may lead the algorithm to fail, are removed.

The final set of edges link each projector to the sink vertex. These edges are weighted (costed) as 0, since paths from each projector must end at the sink to ensure that all eigenvectors have been associated with a projector. However, these edges are limited to a capacity equal to the rank of the projector which is at one end of the edge. This ensures that each projector is associated with the correct number of eigenvectors. The number of eigenvectors for each projector is set by the determination in step (3).

Having encoded the parameters of the problem in this way, it is possible to apply existing minimum cost, maximum flow algorithms to identify the optimal (i.e. lowest cost) pairing between eigenvalues and eigenspace projectors.

In step 140, a *d*² × *d*² matrix, K, is constructed by finding a minimum cost perfect matching between the branch-shifted logarithm of the transfer matrix eigenvalues and the eigenvalues of the perturbed Lindbladian.

Once the matrix K has been constructed, the method proceeds to step 145 where a diagonal matrix is constructed from the branch-shifted logarithm of the transfer matrix eigenvalues, computing *A̅ = KD̂K*⁻¹, and computing an optimal solution *L̅* to a convex optimisation problem by solving $\overline{L} = {min}_{L} \left‖L-\overline{A}\right‖$ subject to the constraint that *L* is a Lindbladian. This extracts the estimated Lindbladian best approximating the matrix *E,* subject to the branch shifting, perturbations, etc. used in the calculation.

At step 150 a check is performed as to whether the estimated Lindbladian is actually better than the initial guess at making this approximation. That is whether ∥*e^{L̅}* - *E*∥ < ∥*e*^{*L*⁰} - *E*∥*.* If so, then at step 155, the improved estimated Lindbladian is output. If not, the process may be repeated with different branch shifts and/or perturbations.

In any case, the method 100 may include, prior to executing step 155 performing steps 130 to 150 in order an additional *T* ≥ 1 times, using the most recent best Lindbladian found from a previous execution, and assessing whether the Lindbladian so found outperforms the most recent best Lindbladian found so far.

The method may halt for various reasons, for example if no improvement is found on a given iteration (this may indicate that a new starting point should be chosen, for example). In other cases, there may be an allocated number of iterations or time available, and the method may halt when the number has been reached or the time limit expires.

In Figure 1B, a flowchart 101 is shown, illustrating a method of estimating state preparation and measurement, SPAM, errors in quantum gate set tomography. This procedure can be thought of as complementary to the process described above in Figure 1A. Where those processes took a gauge as an assumption (via the matrix *E*) and worked to optimise a Lindbladian, this process assumes a Lindbladian and optimises the gauge.

The method begins at step 160, in which an initial guess for a gauge matrix, *B*₀, is received along with a measured gram matrix *g*, a tomographic data matrix, *M,* encoding the measurement data for each possible state preparation and measurement setting in process tomography of a quantum dynamical process.

Next, at step 165 an estimate of a channel representing the quantum dynamical process is computed in the current gauge by computing *T = B*₀*g*⁻¹*MB*₀⁻¹.

At step 170, the method continues to receive a best guess Lindbladian *L* representative of the quantum dynamical process. This best guess Lindbladian *L* may be provided by estimation or calculation based on tomographic data in a gauge characterised by the gauge matrix *B*₀. For example, as noted above, the best guess Lindbladian *L* may be derived by any of the methods discussed above. This may be achieved by using *Bᵢ* from step 180 to extract a transfer matrix *E'* and subsequently executing any of the methods set out above using the transfer matrix *E'* in place of the transfer matrix *E* in step 105 to output an improved *L̅*. This optimises both *B* and *L.*

Next, at step 175 a gauge optimisation procedure is applied using *e^{L}* as the target process and *B*₀ to obtain a new gauge, *Bᵢ*. Gauge optimisation is a standard procedure in gate set tomography.

The result of this procedure is a new estimate for the gauge, which is then output at step 180.

SPAM errors may be estimated on a set of *k* quantum dynamical processes. In such cases the gauge optimisation procedure can include optimising a function, *h,* across all *k* quantum dynamical processes, wherein h is of the form: $h = ln \left({\sum }_{i = 1}^{k} exp\left(\left‖{E}_{i}-{e}^{{L}_{i}}\right‖\right)\right)$ with *Lᵢ* being the current Lindbladian for the *i^{th}* quantum dynamical process, and *Eᵢ* is a transfer matrix for the same process estimated from tomographic data in the current gauge. This LogSumExp form addresses an issue that could arise if the simple sum of norm differences was instead used as the objective function for gauge optimisation (as is commonly seen in the literature). For the latter, the minimum value of the objective function could occur when most quantum dynamical processes are fit well but a small number are fit badly, since in that case it is the average over all quantum dynamical processes that matters. Instead, it may be preferable to look for a solution where all quantum dynamical processes are reasonably well fit. The LogSumExp function is a smooth approximation to the maximum function, and so using this form will tend to prefer solutions where the norm difference is not too large for any quantum dynamical process in the set.

In some cases, this is modified with a scaling factor *t* which depends on *k* and the tomographic data used in the fitting, to give an optimisation function of the form: $h = \frac{1}{t} ln \left({\sum }_{i = 1}^{k} exp\left(t⋅\left‖{E}_{i}-{e}^{{L}_{i}}\right‖\right)\right)$

This scaling factor provides even finer control of exactly how badly fit individual quantum dynamical process can be penalised in the overall calculation.

Turning now to Figure 2, in which a looping arrangement 200 is shown. This loop may begin at any point and continue until a termination condition is met (usually based on time, resource usage, or convergence). In essence the arrangement 200 in Figure 2 illustrates the power of the methods of Figures 1A and 1B when used together. As noted above, the optimisation of *L* (Figure 1A) can be fed into the *B* optimisation process (Figure 1B), and similarly the *B* optimisation process (Figure 1B) can be used as an input into the method in Figure 1A to optimise *L.* This is the Gate Set Flip-Flop procedure, and it allows the co-optimisation of these two important parameters by alternating between the two methods. Despite referring to gates in the procedure's name, the Gate Set Flip-Flop procedure can in fact be applied to any set of quantum dynamical processes, provided one has access to a complete basis of tomographic preparation/measurement settings to optimise both *B* and *L* for that set of dynamics.

In Figures 1B and 2, it is usually beneficial to perform the gauge optimisation procedure using a set of quantum dynamical processes, rather than just a single quantum dynamical process. This is because with only a single quantum dynamical process, there is too much freedom in the gauge and it is difficult to get meaningful results from the gauge optimisation. We have a gram matrix *g = AB* and tomographic data *M = ATB* where *T* is the unknown transfer matrix. We invert the gram matrix and multiply with *M* to obtain *B*⁻¹*TB.* Now we have *T* up to an unknown similarity transform. Without any constraint on *B*, we would be allowed to choose any invertible *B.* If we then optimise to find *B* such that *T* is as close as possible to the ideal, then we may overfit and attribute too much noise to SPAM and fail to characterise the quantum dynamical process error correctly. Using multiple gates helps to prevent this overfitting and gives a more realistic estimation of both quantum dynamical processes and SPAM error, since the choice of gauge must be consistent over all quantum dynamical processes, and we cannot just choose *B* to nicely fit one quantum dynamical process in the set.

The disclosure extends to computers or computer systems configured to enact the method steps set out above, as well as software to cause a computer to enact the method steps, when run on the computer. In particular, implementing the methods above may benefit from control parameters (e.g. hyperparameters) which allow the user to adapt the detail of the operation of the software or computer to achieve the desired results.

Examples of hyperparameters for Lindbladian fitting using Convex Solve or Alternating Projections include the following:
- *α*: used to control the magnitude of the perturbation of the Lindbladian in method 100.
- *β*: controls precision for eigenvalue clustering.
- *cores:* Controls the number of CPU cores used for parallelisation.
- *mₘₐₓ*: determines the number of logarithmic branches to search over.
- maxeval: The number of randomly perturbed Lindbladians to try.
- *max_depth:* The maximum number of iterations for Alternating Projections for each randomly perturbed starting Lindbladian.
- *convex_optimiser*: which convex optimiser to use, e.g. SCS or Mosek.
- *eps:* eps (a tolerance parameter) for the SCS solver.
- *perturbation_type:* Which types of perturbations to try - diagonal in the X-basis, both, or none.
- *principal_branch_only:* whether to try just one logarithmic branch (the principal branch).
- *convex_solve_only*: whether to only use the Convex Solve method.

Examples of hyperparameters for gauge optimisation in Gate Set Flip-Flop include the following:
- *psd_constraint*: whether to impose the PSD (positive semi-definite) constraints on *A* and *B*.
- tr_constraint: Whether to impose trace constraints on *B*.
- *slack*: slack for imposing the physical constraints.
- *algorithm*: which NLOPT optimiser to use.
- *tol*: NLOPT tolerance for checking trace and PSD constraints.
- *xtol, f tol, max*_*evaluations*: stopping criteria for NLOPT opitimiser.

Examples of hyperparameters for Gate-Set Flip Flop include the following:
- *max_iter*: the number of flip flop operations to run.
- *optimise_B_first*: whether to optimise *B* first or optimise the Lindbladians first.

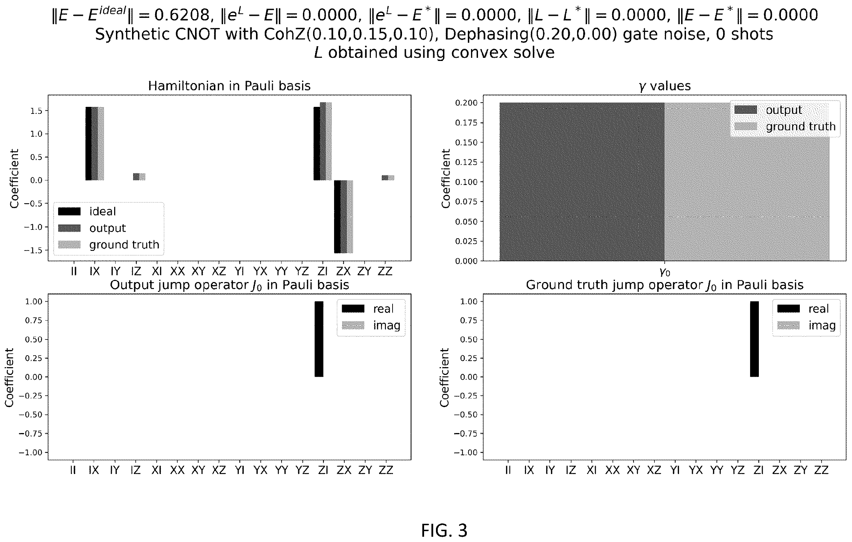

We now turn to the results of the methods discussed above, with reference to Figures 3 to 25D.

We first describe how we generate our test cases. We choose a 2-qubit gate and Markovian gate noise combination, for example, CNOT with amplitude damping noise. This specifies the ideal and ground truth transfer matrices *E^{ideal}* and *E** respectively. We then feed *E** through simulated quantum process tomography to obtain a matrix *Ẽ*. Finally, *Ẽ* is projected to CPTP to generate an input transfer matrix *E.* Multiple runs of process tomography on the same *E** will generate different *Ẽ* and E instances since the instantiation of statistical error in each run will be different. Since the gate noise is Markovian, the difference between *E* and *E** is solely due to statistical error. In this section, all inputs are generated using 10⁴ tomographic shots which is also the setting we use for our tests on real quantum hardware. We emphasise that during synthetic testing, both *E^{ideal}* and *E** are chosen and known.

For example for the CNOT gate, we observe that at the level of statistical error induced by 10⁴ tomographic shots and under weak gate noises, the closest Lindbladian to every physically relevant *A* ∈ log(E) = {*A: e^{A} = E*} tends to exponentiate to a channel very far away from *E.* See Figures 3, 4 and 5 for a synthetic noisy CNOT gate example where (1) the Lindbladian fitting problem can be solved exactly "trivially'" when there is no statistical error in the input transfer matrix, (2) the Convex Solve method estimates none of the Hamiltonian, the *γ*, or the jump operator accurately when the input suffers from a realistic level of statistical error, and (3) our algorithm outputs a Lindbladian that estimates all of the Hamiltonian, the *γ,* and the jump operator accurately for the same statistically noisy input. For the Alternating Projections algorithm to work for this example, it is necessary to choose the precision parameter *β* > 0 to merge all the eigenvalues of *E* close to being real negative into one degenerate eigenspace, hence projecting to an enlarged search space ${log}^{˜} \left(E\right)$. All Lindbladian canonical decompositions are computed using the procedure described above.

**Table 1: Each gate and noise model combination is tested on 20 input instances generated using simulated quantum process tomography with 10⁴ shots. Each entry records the number of runs (out of 20) that passed the Success 1, 2 criteria ∥e^{L} - E∥ ≤ ∥E - E*∥, ∥e^{L} - E*∥ ≤ ∥E - E*∥. When using Alternating Projections, the algorithm tries 500 perturbed starts. The Alternating Projections algorithm consistently succeeds with respect to the Success 1 criterion for all the gate and noise combinations tested. The combined success rates are 600/600 = 100% and 385/600 = 61.4% for Success criteria 1 and 2 respectively. The Convex Solve method also consistently succeeds for all the cases tested, in particular the idling gate I ⊗ I. The noise strengths ∥L* - L^{ideal}∥ range from 0.089 to 0.355.**

| Synthetic testing of the Alternating Projections algorithm | | | | | |
|---|---|---|---|---|---|
| Success 1, 2 | Overrotation | Coh*X* | Bitflip | Coh*X* Dephasing | Coh*X* AmpDamp Bitflip |
| CNOT | 20, 12 | 20, 20 | 20, 20 | 20, 0 | 20, 2 |
| ISWAP | 20, 8 | 20, 16 | 20, 17 | 20,8 | 20, 2 |
| *X* ⊗ *H* | 20, 13 | 20, 18 | 20, 19 | 20, 16 | 20, 20 |

| Success 1, 2 | AmpDamp | Coh*Z* | Dephasing | Coh*Z* Bitflip | Coh*Z* AmpDamp Dephasing |
|---|---|---|---|---|---|
| CNOT | 20, 6 | 20, 20 | 20, 19 | 20, 5 | 20, 8 |
| ISWAP | 20, 10 | 20, 17 | 20, 20 | 20, 9 | 20, 20 |
| *X* ⊗ *H* | 20, 20 | 20, 17 | 20, 16 | 20, 1 | 20, 6 |

| Synthetic testing of the Convex Solve method | | | | | |
|---|---|---|---|---|---|
| Success 1, 2 | Overrotation | *CohX* | Bitflip | Coh*X* Dephasing | Coh*X* AmpDamp Bitflip |
| $\sqrt{X} ⊗ I$ | 20, 16 | 20, 18 | 20, 12 | 20, 20 | 20, 20 |
| *T* ⊗ *I* | 20, 20 | 20, 20 | 20, 20 | 20, 20 | 20, 20 |
| *I* ⊗ *I* | /, / | 20, 20 | 20, 20 | 20, 20 | 20, 20 |

| Success 1, 2 | AmpDamp | Coh*Z* | Dephasing | Coh*Z* Bitflip | Coh*Z* AmpDamp Dephasing |
|---|---|---|---|---|---|
| $\sqrt{X} ⊗ I$ | 20, 20 | 20, 19 | 20, 20 | 20, 19 | 20, 20 |
| *T* ⊗ *I* | 20, 20 | 20, 20 | 20, 20 | 20, 20 | 20, 20 |
| *I* ⊗ *I* | 20, 20 | 20, 20 | 20, 20 | 20, 20 | 20, 20 |

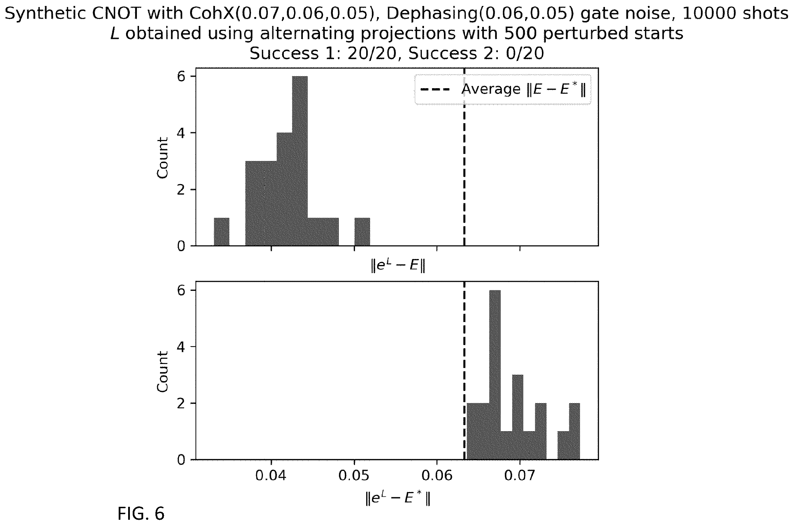

We tested our algorithm extensively on synthetic noisy 2-qubit gate data. For our synthetic benchmark, we focus on two success criteria. We say a test run passes Success 1 if ∥*e^{L} - E*∥ ≤ ∥*E - E**∥ holds, i.e. whether the output Lindbladian *L* closely fits the input transfer matrix E. Recall that ∥*e^{L}* - *E*∥ is the objective function the algorithm explicitly seeks to minimise, so ∥*E* - *E**∥ is the objective value attained by the ground truth Lindbladian *L** while also quantifying the amount of statistical error in the input. Success 2, the second more stringent success criterion, checks for ∥*e^{L} - E**∥ ≤ ∥*E* - *E**∥, i.e. whether the output Lindbladian *L* closely fits the ground truth transfer matrix E*. We view passing Success 2 as a bonus since the algorithm is not intended to remove statistical error from *E.* Instead, we would realistically expect ∥*e^{L}* - *E**∥ ≈ ∥*E* - *E**∥ while passing Success 1 guarantees at a bare minimum that ∥*e^{L}* - *E**∥ ≤ ∥*e^{L} - E*∥ + ∥*E* - *E**∥ ≤ 2∥*E* - *E**∥. Table 1, below shows aggregate results, and see Figure 6 for a histogram of the distribution of the ∥*e^{L}* - *E*∥ and ∥*e^{L}* - *E**∥ values for the 20 instances of CNOT gate with coherent X and dephasing noise tested.

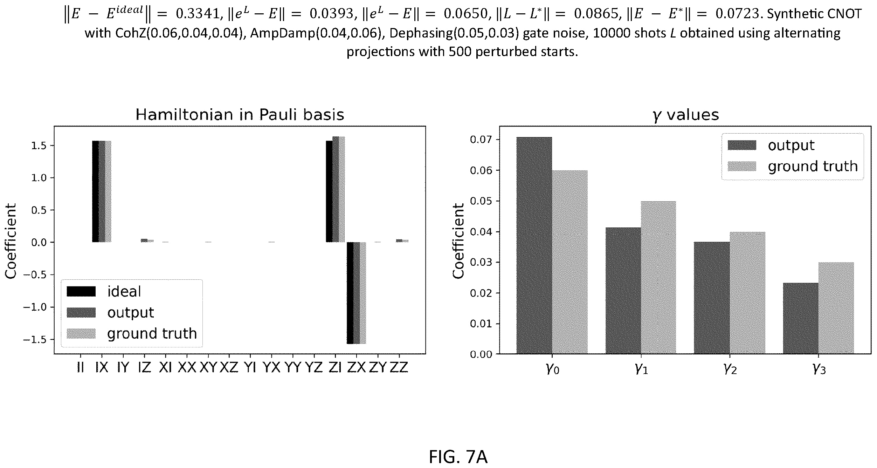

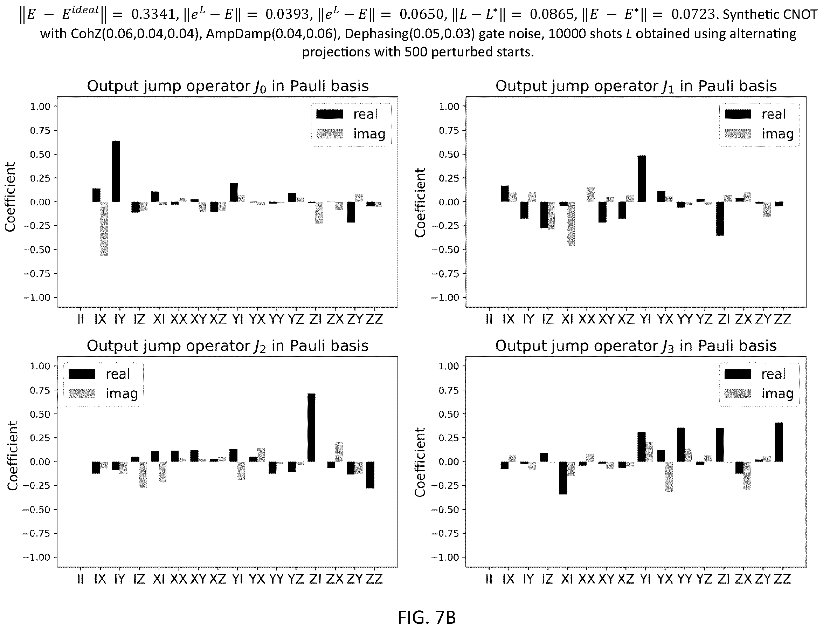

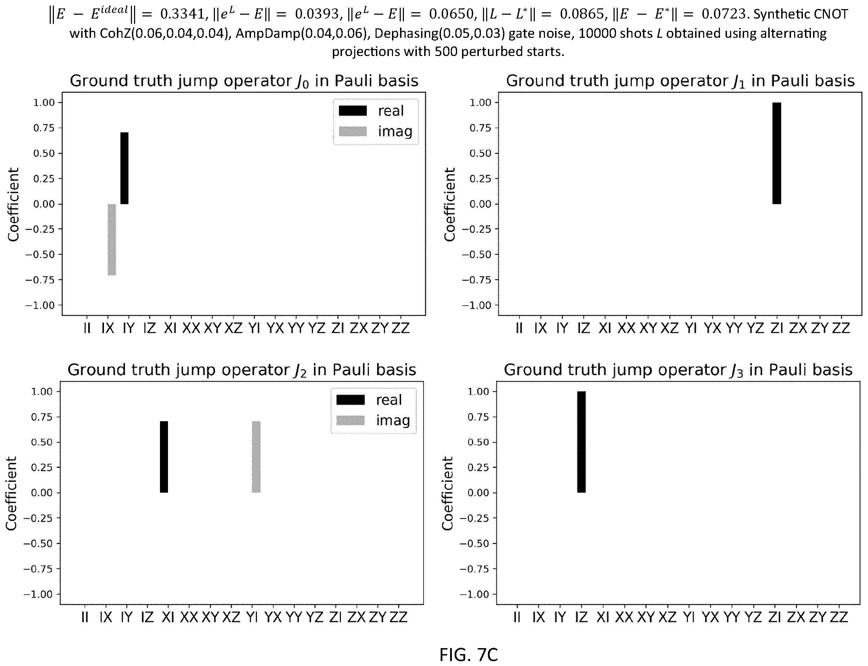

By examining the canonical decompositions of Lindbladians returned by our algorithm, we found cases where our algorithm's predicted jump operators visibly differed from the ground truth jump operators even when the output passed Success 2 (see Figure 7 for an example). Strictly speaking, this does not mean the algorithm has failed since the algorithm's goal is to find *a* Lindbladian that approximately generates the input dynamics, and the output Lindbladian L does enjoy a small ∥*e^{L}* - *E*∥ value.

Figure 3 illustrates a CNOT gate with coherent ZI, IZ, and ZZ errors and dissipative ZI error. *E^{ideal}* is the transfer matrix of the ideal noiseless CNOT gate, and ∥*E* - *E^{ideal}*∥ quantifies the total amount of gate and statistical noises in the input. In this example, there is no statistical error in the input E, so ∥*E* - *E**∥ = 0. An exhaustive search over the branches of log *E* finds a Lindbladian L satisfying ∥*e^{L}* - *E*∥ = ∥*E - E**∥ = 0 up to numerical errors. The canonical decompositions are computed using the procedure described above.

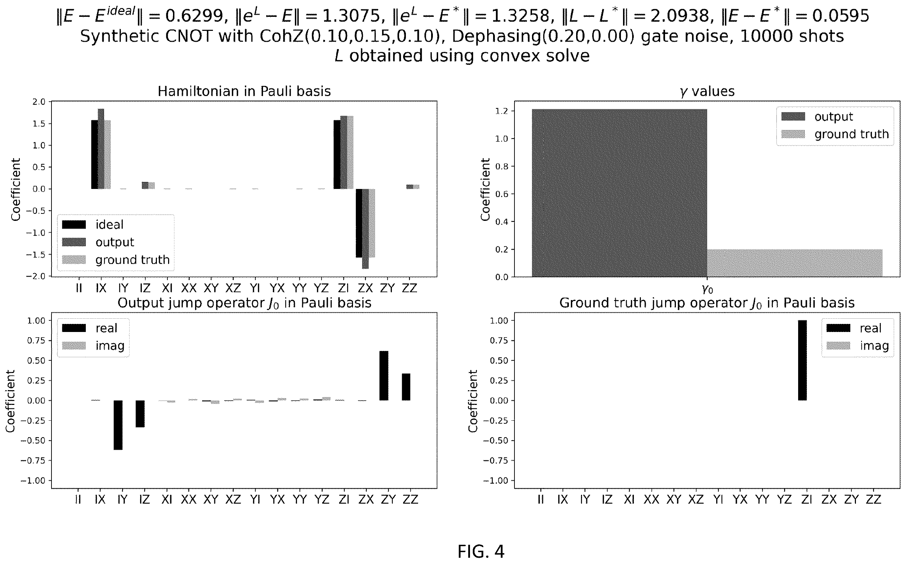

Figure 4 shows, for the same noisy CNOT gate considered in Figure 3, at the level of statistical noise induced by 10⁴ shots, an exhaustive search over the branches of log *E* is no longer able to find a Lindbladian that exponentiates closely to the input. The output Lindbladian *L* fails to capture accurately any of the Hamiltonian, the *γ,* or the jump operator, *J*₀. Notice that *e^{L}* is further away from the input E than the zero-knowledge estimate *E^{ideal}*, being the transfer matrix of the ideal noiseless CNOT gate.

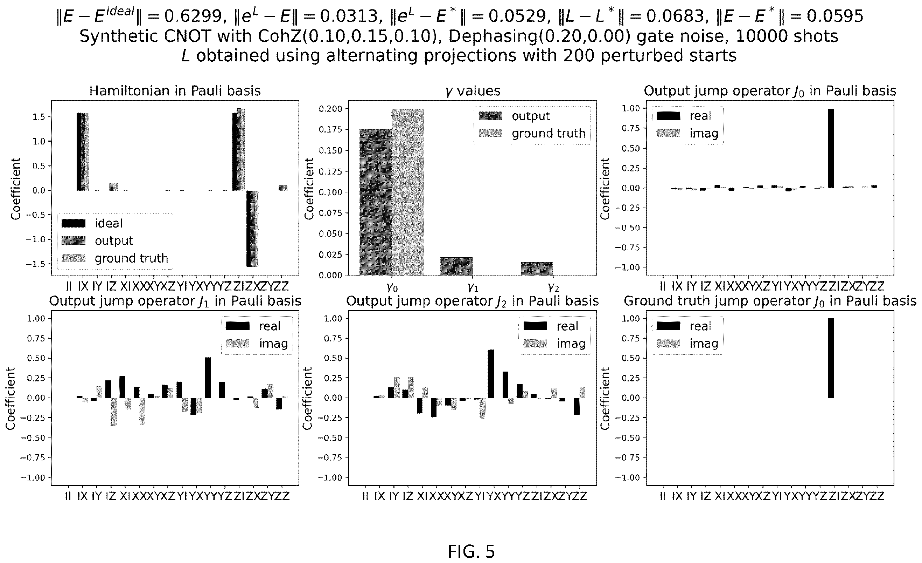

In Figure 5, the same input *E* is considered as in Figure 4. The presently disclosed algorithm finds a Lindbladian that exponentiates very closely to the input. The output Lindbladian *L* captures all of the Hamiltonian, *γ*₀, and the jump operator *J*₀ accurately. While the algorithm erroneously predicts the jump operators *J*₁ and *J*₂ due to statistical error, their corresponding *γ*₁ and *γ*₂ coefficients are small.

Figure 6 shows the distribution of the ∥*e^{L} - E*∥ (top) and ∥*e^{L}* - *E**∥ (bottom) values for the 20 instances of CNOT with coherent X and dephasing noise tested.

Figures 7A to 7C show a canonical decomposition of a CNOT with coherent Z, amplitude damping, and dephasing noise instance. The algorithm succeeded on the input according to both of our success criteria. The Lindbladian found by the algorithm matches the ground truth Hamiltonian accurately and the *γ* values are well-estimated.

Next, we investigate the weak noise assumption ∥*L** *- L^{ideal}*∥ ≤ *c*₂, specifically to identify how small *c*₂ should be to ensure that the Alternating Projections algorithm succeeds. To put the ∥*L** *- L^{ideal}*∥ values in perspective, we can evaluate the average gate fidelity between *E^{ideal}* (which corresponds to a unitary gate) and *E** using the formula: ${F}_{avg} \left({E}^{ideal},E*\right) = \frac{\frac{1}{d} Tr \left[{\left({E}^{ideal}\right)}^{†}E*\right] + 1}{d + 1}$ for transfer matrices where *d* = 4 is the dimension of the system.

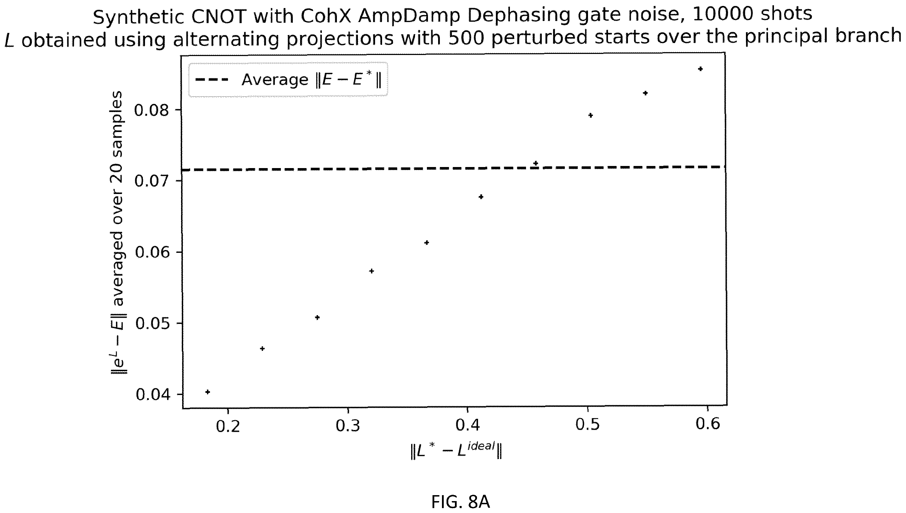

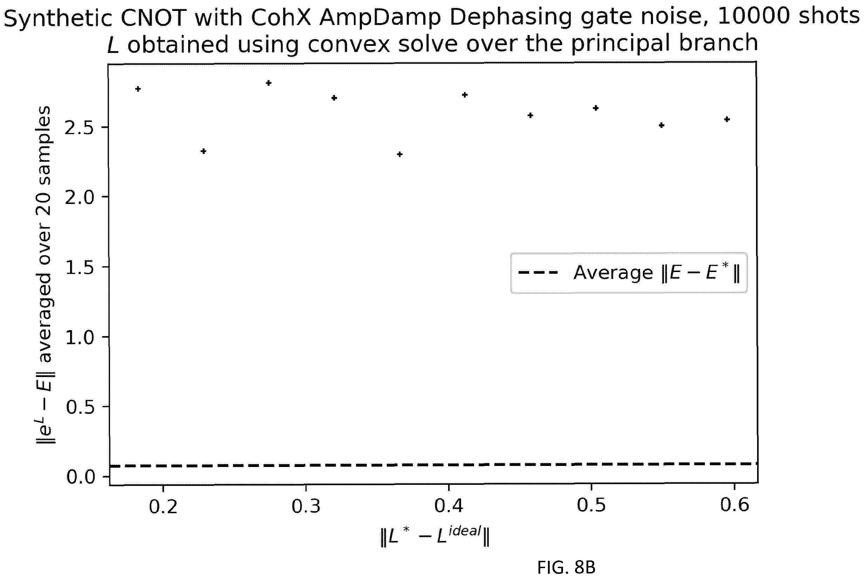

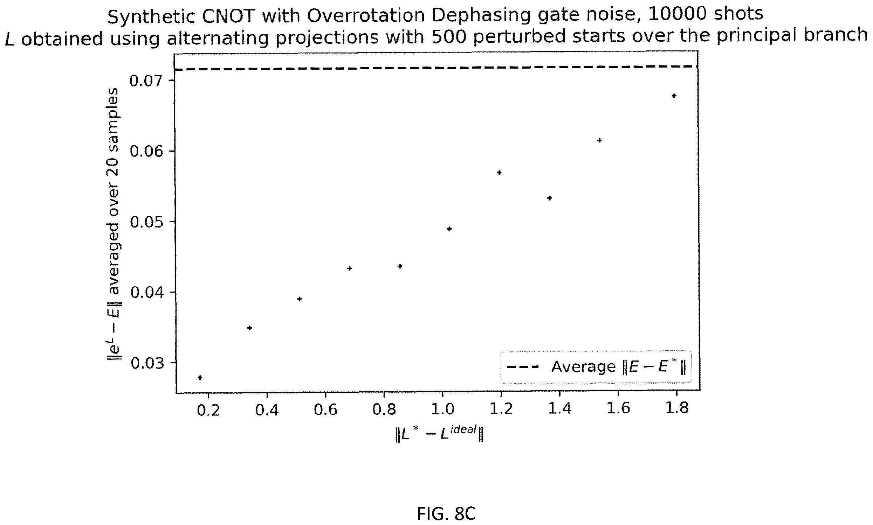

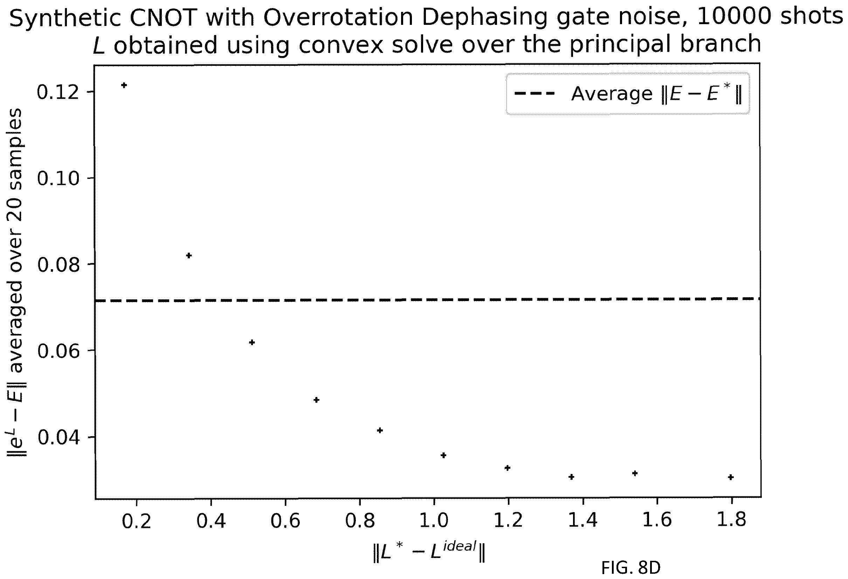

Figures 8A and 8B show CNOT with increasing strengths of coherent X, amplitude damping, and dephasing gate noise and Figures 8C and 8D show overrotation and dephasing gate noise. In Figure 8A the Alternating Projections algorithm passes Success 1 for this test case until ∥*L** *- L^{ideal}*∥ reaches roughly 0.45, at which point *F_{avg}*(*E^{ideal}, E*)* is roughly 94%. For this gate and noise model combination, the inputs E always have eigenvalues close to being real negative. Hence, we expect the Convex Solve method to fail on this test case, which is confirmed in Figure 8B. Even as the noise becomes stronger as in Figure 8B, the inputs *E* always have eigenvalues close to being real negative, and the Convex Solve method consistently fails.

In Figures 8C and 8D, we repeat the same experiment on CNOT with overrotation and dephasing noise. For this noise model, the Alternating Projections algorithm succeeds (Figure 8C) for the entire range of noise strengths tested. Figure 8D shows that as the noise becomes stronger, *E* stops having eigenvalues close to being real negative, and the Convex Solve method starts working. The Alternating Projections algorithm's performance is less sensitive to the noise strength in this case, and it succeeds even when ∥*L** *- L^{ideal}*∥ = 1.8, which translates to an average gate fidelity of 83.5% between *E^{ideal}* and E*. For CNOT with overrotation and dephasing noise, the -1 eigenvalues of *E^{ideal}* steadily rotate away from the real negative axis as the noise strength increases, and the Convex Solve method begins working when the average gate fidelity between *E^{ideal}* and *E** dips below roughly 96%.

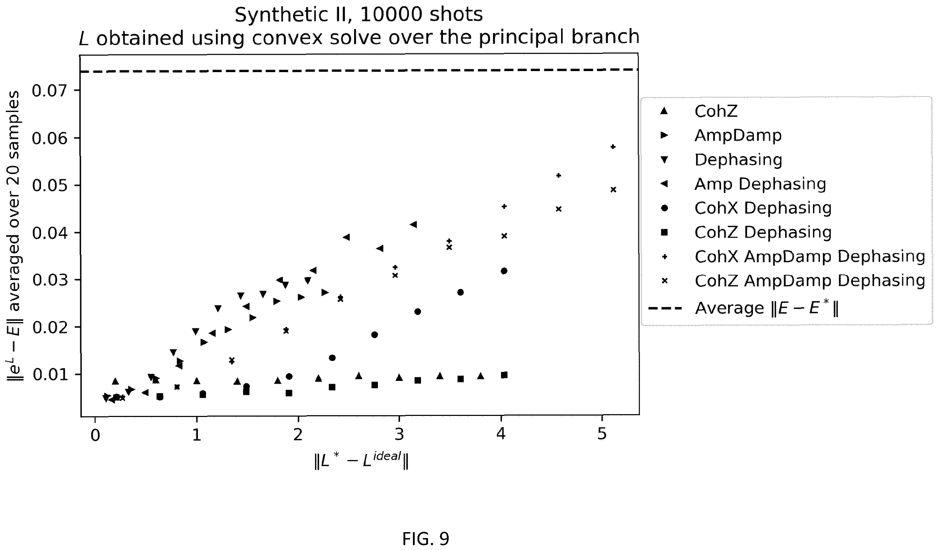

Lastly, we examine to what extent does the Convex Solve method solve the Lindbladian fitting problem with statistical error when *E^{ideal}* corresponds to the identity gate *I* ⊗ *I.* In Figure 9, we plot the results of running the Convex Solve method on noisy identity gates with statistical error with various noise models and increasing noise strengths. Each noise model is tested with 10 levels of increasing noise strengths. Each data point corresponds to the average ∥*e^{L}* - *E*∥ value of 20 input instances. The average gate fidelities between *E^{ideal}* and E* range from 99.9% to 44.6%. For each noise model and noise strength combination, we run the Convex Solve method on 20 input instances generated using the procedure described at the beginning of this section. The obtained ∥*e^{L}* - *E*∥ values are averaged to calculate each data point. Our results indicate that the Convex Solve method succeeds consistently in the parameter regimes tested.

Our implementation runs significantly faster than previous logarithm-search-based algorithms. As a comparison, a prior ISWAP analysis, which took two weeks to run, can be performed in under two minutes using our implementation. The speedups mainly come from parallelising the search over the branches of complex logarithm, skipping over clearly unphysical branches entirely, and while in a correct branch, the Alternating Projections algorithm requiring fewer calls to the convex optimiser to find a good fitting Lindbladian. We use the SCS package to solve the convex optimisation problem of projecting a matrix to a Lindbladian. Our current implementation spends by far the most CPU time in the convex optimisation step in the inner most loop.

### Synthetic Testing of Gate Set Flip-Flop

In this section, we report synthetic test results for the Gate Set Flip-Flop algorithm. We first describe how we generate our test cases. The gate set consists of the six 2-qubit gates $\left\{CNOT,\sqrt{X}⊗I,I⊗\sqrt{X},T⊗I,I⊗T,ISW AP\right\}$. A SPAM error is chosen randomly from amplitude damping, bitflip, incoherent Y, and dephasing for each of the 16 state preparation settings and 16 measurement settings. For state preparation errors, the noise strength coefficient *γ* for each jump operator (see equation (6)) is drawn from the normal distribution with mean 0.07 and standard deviation 0.007. For measurement errors, the *γ* value for each jump operator is sampled randomly from the normal distribution with mean 0.12 and standard deviation 0.012. In effect, we try to model a quantum device whose measurements are noisier than state preparations. For each gate in the gate set, a gate noise with normally distributed noise strengths is randomly chosen from overrotation with bitflip, overrotation with dephasing, coherent Z with amplitude damping and dephasing, coherent Z with bitflip, and coherent X with dephasing. For every gate in the gate set, a simulated quantum process tomography experiment is carried out with 10⁴ shots while the Gram matrix is estimated using 10⁵ shots. We randomly generated 1000 test cases using the settings described above.

For each test case, the Gate Set Flip-Flop algorithm is run for three iterations on the objective function of equation (38). We start by minimising with respect to the Lindbladians first since the state preparations errors are weaker than the gate noises. The Lindbladian fitting problem is solved using the Alternating Projections algorithm for the CNOT and ISWAP gates and the Convex Solve method for the other gates. Each Alternating Projections run tries 400 perturbed starts. The constrained minimisation with respect to B is performed using the SLSQP algorithm implemented in NLopt. The physical constraints on the eigenvalues and trace of each column of *B* and the eigenvalues of each row of *A* are enforced with a slack of 0.001.

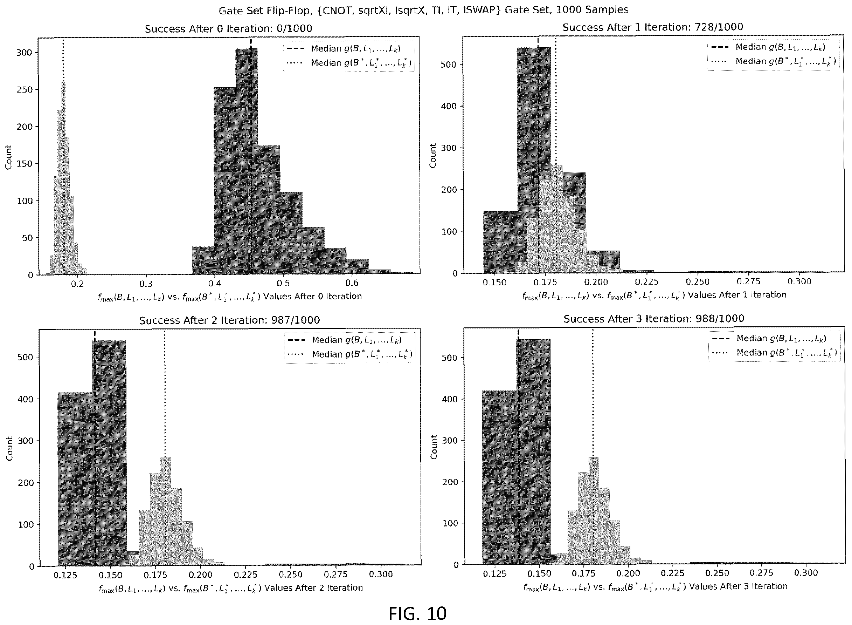

Analogous to the Success 1 criterion defined for the Lindbladian fitting problem, we define a run of the Gate Set Flip-Flop algorithm to be successful if the algorithm's output (*B,L*₁,...,*Lₖ*) satisfies ${f}_{max} \left(B,{L}_{1},…,{L}_{k}\right) \leq {f}_{max} \left(B*,{L}_{1}^{∗},…,{L}_{k}^{∗}\right)$ (see equation (35)) where *B** encodes the ground truth state preparation settings and ${L}_{1}^{∗} , … , {L}_{k}^{∗}$ are the ground truth Lindbladians for the noisy gates. In Figure 10, we plot the distributions of *fₘₐₓ*(*B,L*₁,...,*Lₖ*) versus ${f}_{max} \left(B*,{L}_{1}^{∗},…,{L}_{k}^{∗}\right)$ values for the 1000 randomly generated test cases after the zeroth, first, second, and third iterations. Note that *fₘₐₓ*(*B,L*₁,...,*Lₖ*) after the zeroth iteration is just ${f}_{max} \left({B}^{ideal},{L}_{1}^{ideal},…,{L}_{k}^{ideal}\right)$. Each flip-flop iteration consists of one round of gauge optimisation and one round of Lindbladian fitting. We observe that our algorithm succeeds consistently after three iterations. The reason Gate Set Flip-Flop failed on a handful of test cases was because the slack for the physical constraints was too tight for these inputs, causing the SLSQP optimiser to get stuck at *B^{ideal}.* Raising the slack to a larger value such as 0.005 resolves the issue.

In Figure 10, synthetic test results for the Gate Set Flip-Flop algorithm on 1000 randomly generated test cases are shown. The dark histograms plot the *fₘₐₓ*(*B,L*₁,...,*Lₖ*) values while the light histograms plot the ${f}_{max} \left(B*,{L}_{1}^{∗},…,{L}_{k}^{∗}\right)$ values. A run of the algorithm is deemed successful if ${f}_{max} \left(B,{L}_{1},…,{L}_{k}\right) \leq {f}_{max} \left(B*,{L}_{1}^{∗},…,{L}_{k}^{∗}\right)$.

### Analysis of Experimental Data

In this section we present example results produced by our algorithms when run on data obtained from real quantum computing hardware. The tomography circuits were executed on devices available via the cloud-based IBM Quantum platform using the *Qiskit* software development kit. Before describing the demonstration in detail, we note that in general there are several reasons why noisy gates implemented might not be exactly generated by a time-independent Lindbladian. The process may be more accurately modelled by a time-dependent Lindbladian, since some gates, particularly those involving two-qubit interactions, may be implemented via a composite pulse sequence. Even for simple pulses, the amplitude must be ramped on and off in some finite time, so the true Lindbladian of the process must be time-dependent. Drift in the relative strength of noise components can also lead to apparent non-Markovianity in tomographic data, since this can lead to a distortion in the eigenvalue structure of the process. Finally, there may of course be genuine non-Markovian noise effects, for example if there is an unwanted coupling to a defect acting as two-level system. Nevertheless, a noiseless unitary operation is always compatible with a time-independent Lindbladian, so in the case where noise is relatively weak, an effective time-independent Lindbladian may be useful as a model for quantitatively and qualitatively understanding the noise profile for a given target process. Moreover, if our algorithm does not return a Lindbladian that exponentiates close to the tomographic data, it provides evidence of possible non-Markovian noise effects present in the device.

### Gate Set Analysis on ibm_perth

We first show results obtained from the 7-qubit device known as *ibm_perth.* Gate set tomography was carried out for the set: $G = \left\{I⊗I,CNOT,{R}_{ZX}\left(0.5\right),{R}_{ZX}{\left(0.5\right)}^{3},{R}_{ZX}{\left(0.5\right)}^{5},\right.$ $\left.{R}_{ZZ}\left(0.5\right),{R}_{ZZ}{\left(0.5\right)}^{3},{R}_{ZZ}{\left(0.5\right)}^{5},T⊗I,I⊗T,\sqrt{X}⊗I,I⊗\sqrt{X}\right\}$ implemented on the connected qubits labelled 3 and 5 using IBM's indexing. As suggested above, there are several reasons why we might expect the ground truth to depart from a time-independent Markovian process, and we exemplify this with this gate set. On this device, the CNOT gate was implemented as an echoed cross-resonance gate, composed with shorter single-qubit pulses. The echoed cross-resonance gate is in effect an *R_{ZX}*(*π*/2) gate with an internal dynamical decoupling sequence to reduce coherent error and uncontrolled couplings with other subsystems, where: ${R}_{ZX} \left(θ\right) = exp \left[-i\frac{θ}{2}Z⊗X\right]$

The CNOT was provided as a native gate on *ibm_perth,* meaning that the device has been calibrated to maximise the fidelity of this gate. However, *Qiskit* also allows implementation of custom pulse sequences, and an *R_{ZX}* gate can be implemented for arbitrary angles by extracting the pulse sequence calibrated for the *R_{ZX}*(*θ*) rotation underlying the CNOT gate and modifying the pulse duration (or amplitude) accordingly. In the gate set 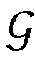 , we contrast this with ${R}_{ZZ} \left(θ\right) = exp \left[-i\frac{θ}{2}Z⊗Z\right]$ gates which we decompose as a Z-rotation sandwiched by two CNOT gates. The single-qubit $\sqrt{X}$ and *T* gates are implemented by a simple pulse and a change of frame respectively, and are mainly included in the set to assist with gauge optimisation. In each case, the noiseless process is unitary, and can therefore be generated by a time-independent Lindbladian with no dissipative part. In reality, the tomographed channel could depart from this model to varying degrees depending on the gate. We may consider this a stress test of our algorithms, as it can be the case that there is no time-independent Lindbladian model that exponentiates close to the data. For our tomographically complete set of initial states, we prepare all two-qubit tensor products of four of the single-qubit Pauli eigenstates {|0〉, |1〉, |+〉, |+*ᵢ*〉}, defined in the ideal case as: $\left|0\right〉 = \left[\begin{matrix}1 \\ 0\end{matrix}\right] , \left|1\right〉 = \left[\begin{matrix}0 \\ 1\end{matrix}\right] , \left|+\right〉 = \frac{1}{\sqrt{2}} \left[\begin{matrix}1 \\ 1\end{matrix}\right] , \left|{+}_{i}\right〉 = \frac{1}{\sqrt{2}} \left[\begin{matrix}1 \\ i\end{matrix}\right]$

In practice, on the IBM devices studied, the standard fiducial state on all qubits is |0〉, prepared via a non-unitary process. The other states in our set can then be prepared by a sequence of single-qubit gates. For our measurement settings, we measure all two-qubit Pauli observables, and take our measurement operators to be the projector onto the +1 eigenspace of each Pauli operator. The standard measurement on IBM devices is the Z measurement, so to measure other Pauli operators we use single-qubit gates to rotate into the appropriate frame. To collect the tomographic data, we parallelise Pauli measurements, so we run 144 independent circuits per gate in the set, at 10⁴ shots per circuit. All circuits are shuffled together in a random order, to average out any drift and avoid correlations with real time within the data. After initial processing, the tomographic snapshot for the *R_{ZZ}*(0.5)⁵ process was found to have an eigenvalue structure incompatible with a time-independent Markovian process, so was excluded from subsequent analysis. No further error mitigation is applied to the data, and the raw tomographic matrices are taken as input for the Gate Set Flip-Flop algorithm. Recall that in the absence of statistical error, when gate noise is sufficiently weak, and the ideal Lindbladian has no eigenvalues close to the real negative axis, a good solution can always be found by Convex Solve in the principal branch alone. This principle was also borne out in our numerical testing of synthetic data with simulated shot noise discussed above (see e.g. Figure 9). To illustrate that this principle also works in practice, during the Lindbladian fitting step, we use this simple method for all gates except CNOT and *R_{ZX}*(0.5)⁵ = *R_{ZX}*(2.5). The latter two gates respectively have -1 eigenvalues and eigenvalues close to the real negative axis, so for these we use the Alternating Projections method.

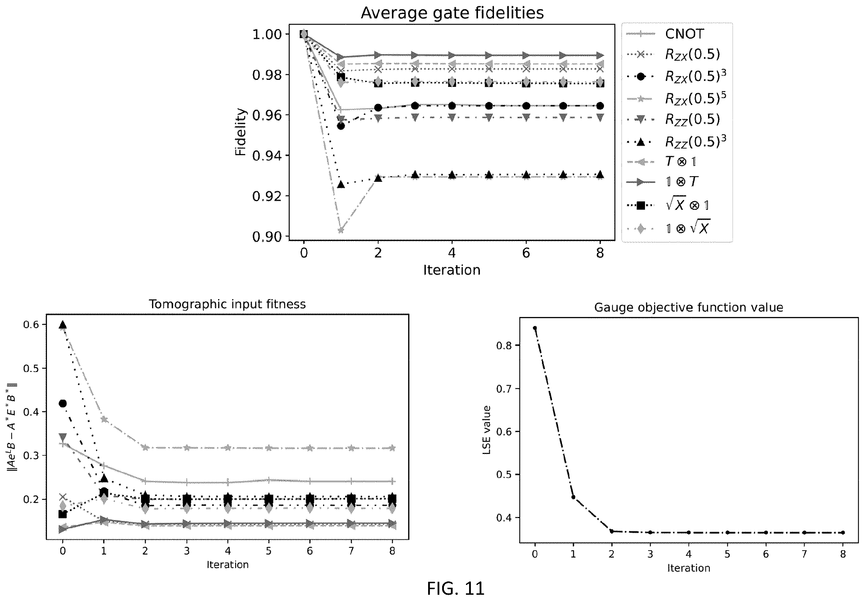

In Figure 11, we show figures of merit for the full gate set, except *R_{ZZ}*(0.5)⁵ over iterations of the flip-flop algorithm for data collected from *ibm_perth.* (Top panel) The average gate fidelity between the ideal gate and the estimated Markovian process at each iteration, computed using equation (44). (Bottom left panel) Distance between raw tomographic data and the equivalent data for the estimated Markovian process assuming the current gauge. (Bottom right panel) Gauge objective function as defined in equation (38). In this case, Gate Set Flip-Flop was initialised by first running the Lindbladian fit before any gauge optimisation. The solution is seen to be well converged by 8 iterations.

We compare the distances between the data E, as evaluated in the final gauge, and the ideal transfer matrices *E*^{ideal} and the Markovian estimate exp(L) respectively. In all cases the estimated Lindbladian gives at least as good a fit as assuming the ideal, and we find the fit to be significantly improved for processes where we expect the most gate noise, namely those involving repeated application of two-qubit gates. In contrast, the single-qubit gates only show a slightly improved fit, in keeping with the belief that single-qubit gates have good fidelity on modern superconducting-qubit devices. The remaining distance ∥*E* - exp(*L*)∥ between the data and the estimated process is likely at least in part due to statistical noise and residual SPAM errors that were not filtered by the algorithm.

Since the ideal process *E^{ideal}* for each gate is unitary, we can use the following formula to evaluate the average gate fidelity for the estimated noisy Markovian process at each iteration: ${F}_{avg} \left({E}^{ideal}, {e}^{L}\right) = \frac{\frac{1}{d} Tr \left[{\left({E}^{ideal}\right)}^{†}{e}^{L}\right] + 1}{d + 1}$ where *d* = 4 is the dimension of the system.

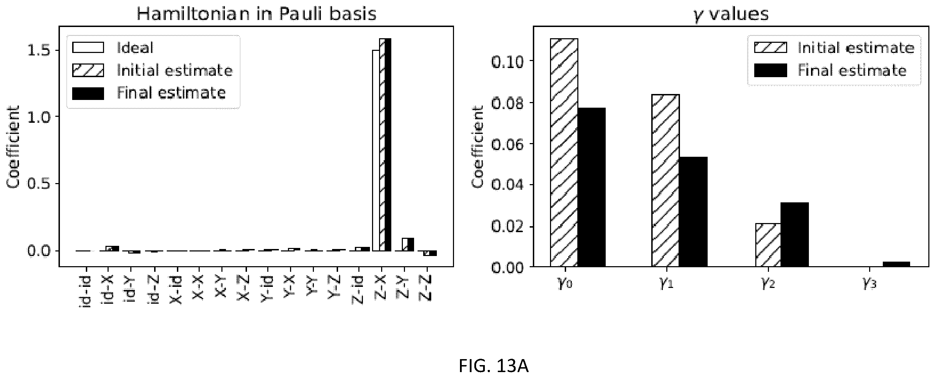

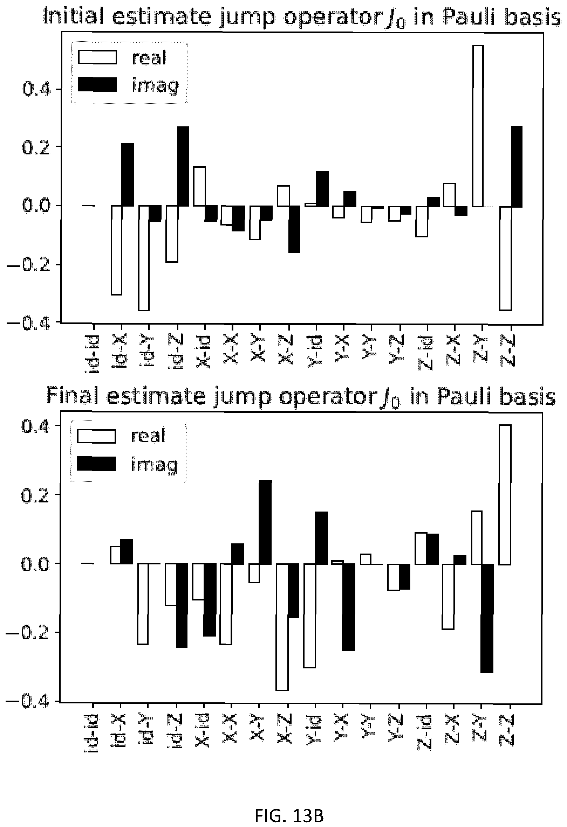

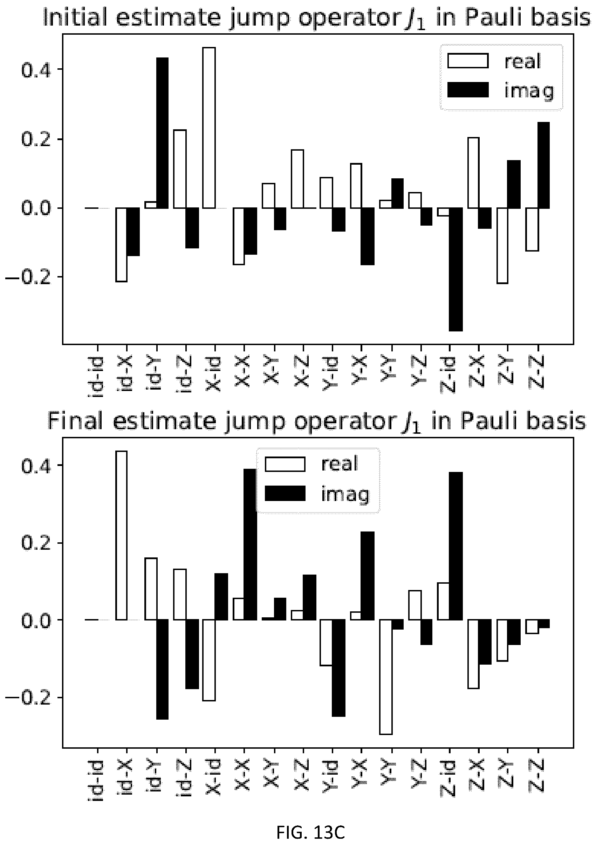

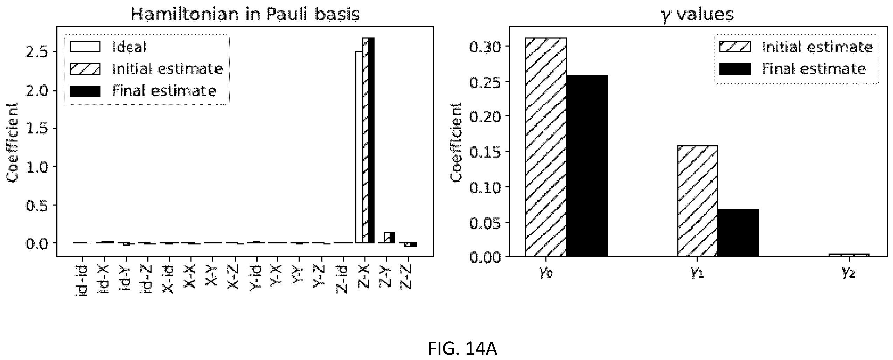

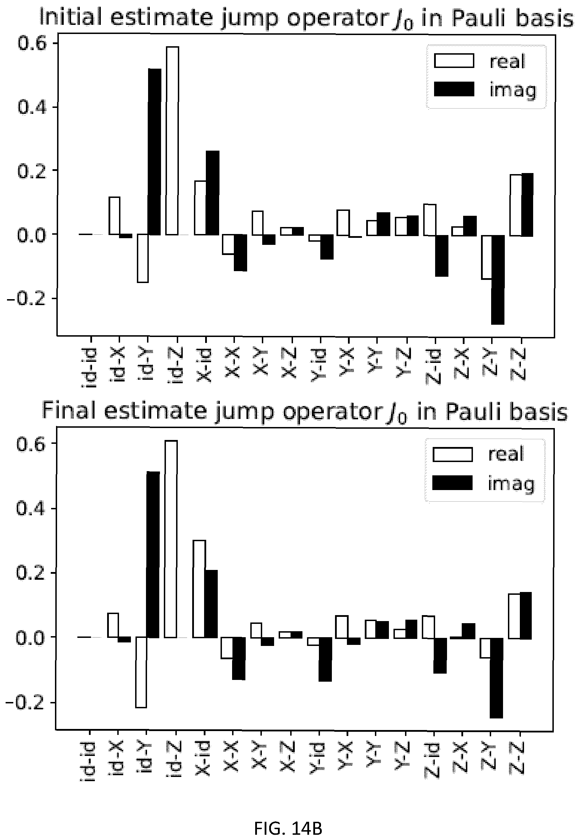

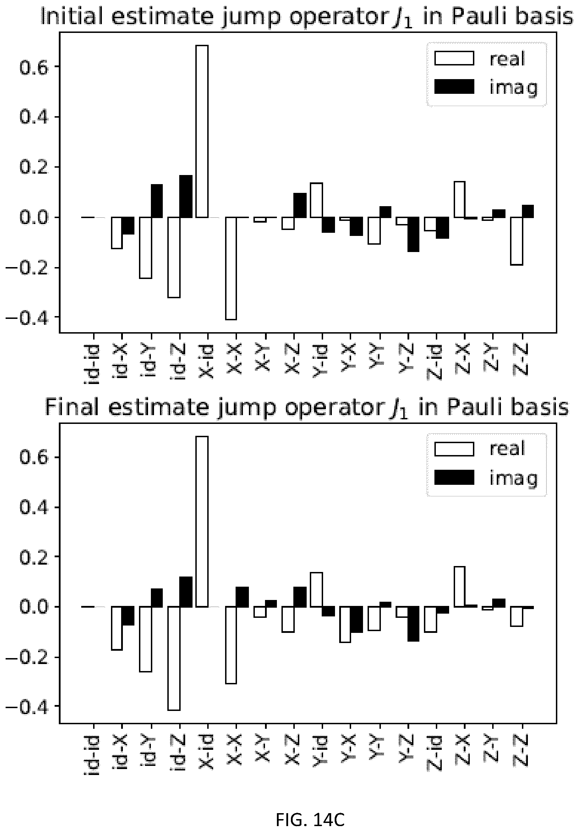

In Figures 12A to 14C we show the estimated Lindbladian decomposition for the *R_{ZX}*(0.5)*^{k}* process for *k* ∈ {1,3,5}, comparing initial and final estimates. Specifically, Figures 12A to 12C shows a canonical decomposition of the fitted Lindbladian for the *R_{ZX}*(0.5) process applied to qubit pair (3,5) on *ibm_perth.* We compare the ideal unitary process with the initial estimate prior to any gauge optimisation, and the final estimate after convergence of the Gate Set Flip-Flop algorithm. Figures 13A to 13C show the canonical decomposition of the fitted Lindbladian for the *R_{ZX}*(0.5)³ = *R_{ZX}*(1.5) process applied to qubit pair (3,5) on *ibm_perth.* The ideal process is compared with the initial estimate before gauge optimisation, and the final fitted Lindbladian after convergence of Gate Set Flip-Flop. Finally, Figures 14A to 14C show the canonical decomposition of the fitted Lindbladian for the *R_{ZX}*(0.5)⁵ *= R_{ZX}*(2.5) process applied to qubit pair (3,5) on *ibm_perth.* We compare the ideal unitary process with fitted estimates before and after running the Gate Set Flip-Flop routine until converged. In each of Figures 12B, 12C, 13B, 13C, 14B and 14C, Pauli decompositions are presented only for the two dominant jump operators.

Note that for an ideal gate we would have *R_{ZX}*(0.5)*^{k} = R_{ZX}*(*k*/2), and in the channel picture (*exp*(*L*))*^{k} = exp*(*kL*) for any time-independent Lindbladian *L.* By normalising the Lindbladians with respect to the number of applications of the gate, we can test the consistency of the estimated Markovian process for each sequence. In Table 3 we compare the distances between the data, *E,* as evaluated in the final gauge and the ideal transfer matrices *E^{ideal}* and the Markovian estimate, *exp*(*L*), respectively. In all cases the estimated Lindbladian gives at least as good a fit as assuming the ideal and we find the fit to be significantly improved for processes where we expect the most gate noise, namely those involving repeated application of two-qubit gates. In contrast, the single-qubit gates show only a slightly improved fit, in keeping with the belief that single-qubit gates have good fidelity on modern superconducting qubit devices. The remaining distance ∥*E* - *exp*(*L*)∥ between the data and the estimated process is likely at least in part due to statistical noise and residual SPAM errors that are not filtered by the algorithm. The time-normalised Lindbladians for each pair of processes, as well as the distances between the exponentiated transfer matrices. We also note that the Hamiltonians in Figures 10 to 12 consistently show an overrotation about the ZX axis. Table 2, below, summarises further results relating to gate set analysis.

**Table 2: Distances between time-normalised Lindbladians and the exponentiated transfer matrices, where Lₖ is the estimated Lindbladian for the noisy implementation of the pulse gate sequence R_{ZX}(0.5)^{k} on ibm_perth.**

| *j* | *k* | $\left‖\frac{{L}_{j}}{j}-\frac{{L}_{k}}{k}\right‖$ | $\left‖exp\left(\frac{{L}_{j}}{j}\right)-exp\left(\frac{{L}_{k}}{k}\right)\right‖$ |
|---|---|---|---|
| 1 | 3 | 0.097 | 0.094 |
| 1 | 5 | 0.12 | 0.12 |
| 3 | 5 | 0.081 | 0.079 |

**Table 3: Distances between the tomographic data and corresponding ideal transfer matrices E^{ideal} and estimated Markovian channels e^{L}, respectively, from gate set analysis on ibm_perth qubits 3 and 5. For each process P*, the tomographically estimated transfer matrix estimate E = B(g*)⁻¹P*B⁻¹ is evaluated in the final gauge B obtained from the flip-flop algorithm. We find that in all cases, the Markovian channel estimate gives a better fit to the data than assuming the gate is ideal.**

| Process | ∥*E - E^{idea**l**}*∥ | ∥*E* - *e^{L}*∥ |
|---|---|---|
| CNOT | 0.42 | 0.33 |
| *R_{ZX}*(0.5) | 0.31 | 0.25 |
| *R_{ZX}*((0.5)³ | 0.51 | 0.30 |
| *R_{ZX}*(0-5)⁵ | 0.66 | 0.36 |
| *R_{ZZ}*(0.5) | 0.44 | 0.28 |
| *R_{ZZ}*(0.5)³ | 0.79 | 0.34 |
| $T ⊗ I$ | 0.25 | 0.22 |
| $I ⊗ T$ | 0.29 | 0.26 |
| $\sqrt{X} ⊗ I$ | 0.38 | 0.31 |
| $I ⊗ \sqrt{X}$ | 0.34 | 0.29 |

### Parallel Gate Cross-talk Experiment on ibm_cairo

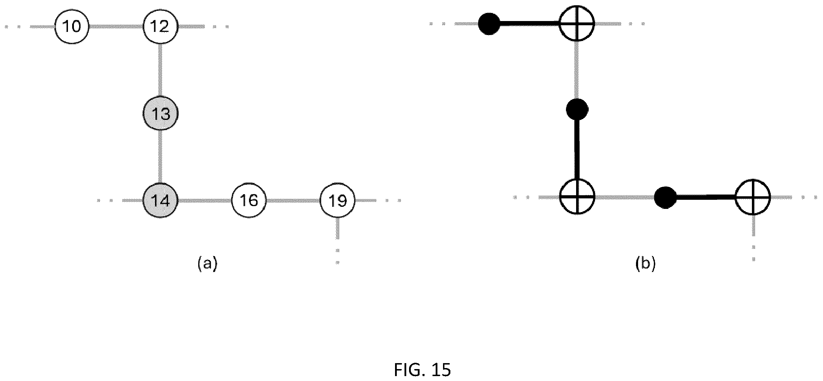

For this second set of data, we focus on the analysis of a particular gate, and in particular consider its susceptibility to cross-talk. We perform gate set tomography of the set: $G = \left\{{CNOT}_{single},{CNOT}_{parallel},T⊗I,I⊗T,\sqrt{X}⊗I,I⊗\sqrt{X}\right\}$ where *CNOT_{single}* and *CNOTₚₐᵣₐₗₗₑₗ* are CNOT gates executed either in isolation or in parallel with CNOT gates executed on other qubit pairs. The data was collected from IBM's 27-qubit device *ibm_cairo.* Topology of the six-qubit patch used for the tomography is shown in Figure 15, along with placement of two-qubit gates for the *CNOTₚₐᵣₐₗₗₑₗ* process. Specifically, the numbered vertices show qubit locations, edges show connections where CNOT gates are available. Dashed lines show connections to qubits not used in the experiment. The qubit pair targeted for gate set tomography is 13 and 14 in the left Figure. In the right hand part of Figure 15, the placement of CNOT gates during tomography of the *CNOTₚₐᵣₐₗₗₑₗ* process is shown.

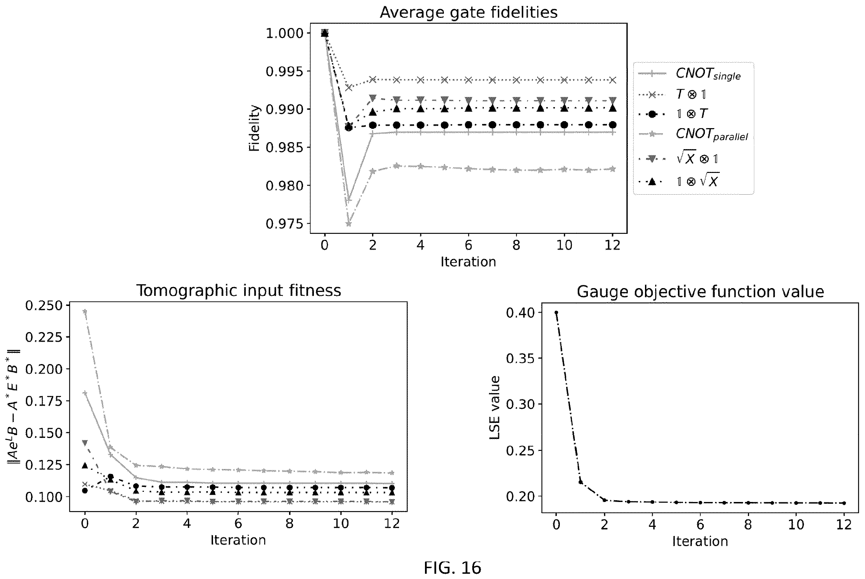

As in the previous demonstration, the single-qubit gates are provided to aid gauge optimisation, shots were taken at a rate of 10⁴ per setting, circuits were executed in random order, and readout mitigation was not applied to the data before running the algorithm. For this gate set, Convex Solve on the principal branch was again used to fit Lindbladians for all processes except the two CNOT processes, for which Alternating Projections was used. We illustrate the convergence of the solution in Figure 16, which shows Gate Set Flip-Flop figures for data collected from tomography of qubits 13 and 14 on *ibm_cairo.* The top panel shows the average gate fidelity between the ideal gate and the estimated Markovian process at each iteration, computed using equation (44). The lower left panel shows the distance between raw tomographic data and the equivalent data for the estimated Markovian process assuming the current gauge. The lower right panel shows the gauge objective function as defined in equation (38). Again we observe good convergence within around 10 iterations. Key results are summarised below in Table 4.

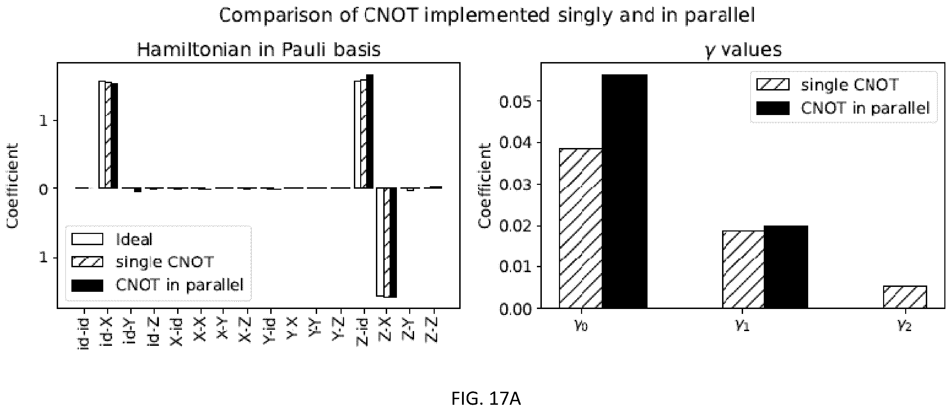

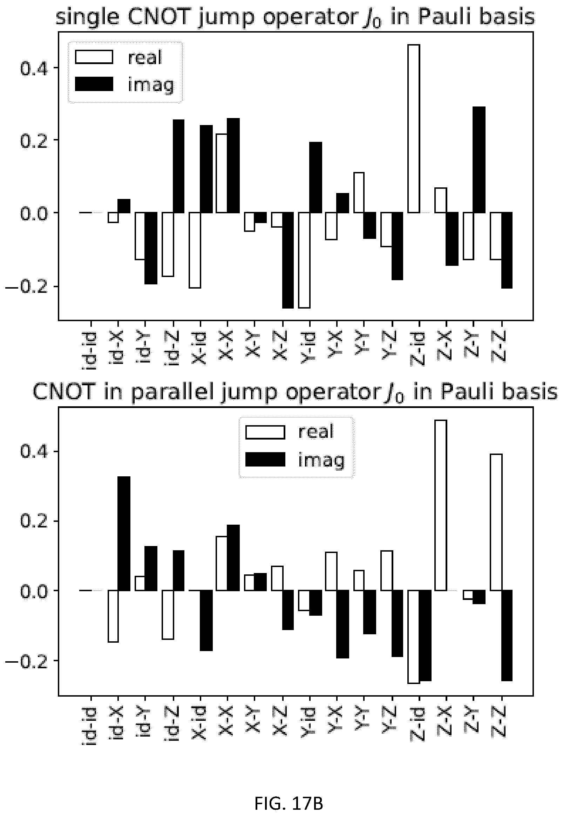

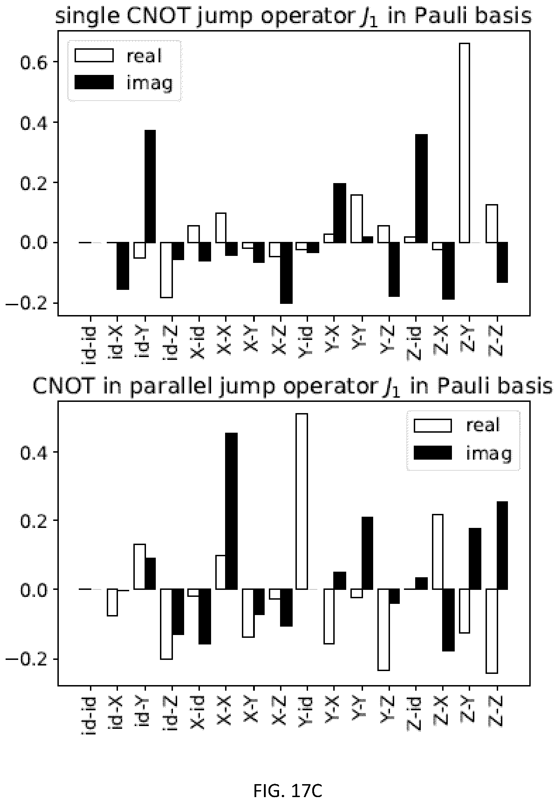

Comparing these results with Figure 11 we see that we are able to obtain a closer fit to a set of time-independent Lindbladians, and the estimated Markovian processes generally have better fidelity. Final distances from the data are shown in Table 4, where again we see only minimal improvement in fit for single-qubit gates, which are expected to already be close to ideal, with more significant improvement for the noisy two-qubit processes. We note that the difference between the tomographic input fitness for the converged solutions for single and parallel CNOTs is relatively small, suggesting that in this scenario cross-talk does not induce a dramatic increase in apparent non-Markovianity. On the other hand we see that the algorithm suggests a reduced average gate fidelity for the parallel CNOT, and we observe qualitative differences in the estimated Lindbladian decompositions. See for example Figures 17A to 17C, which compares the canonical decompositions of the ideal unitary CNOT gate with the fitted Lindbladians after Gate Set Flip-Flop for the noisy CNOT gate implemented on qubit pair (13,14) on *ibm_cairo.* Note that the estimated decomposition for the noisy CNOT differs depending on whether the CNOT was implemented in isolation while the rest of the device was left idle or in parallel with CNOT gates implemented elsewhere. In particular we see increased overrotation about the $Z ⊗ I$ axis for the parallel case, and an increase in the strength of dissipative noise.

**Table 4: Distances between the tomographic channel estimates and corresponding ideal transfer matrices E^{ideal} and estimated Markovian channels e^{L}, respectively, from gate cross-talk analysis on ibm_cairo qubits. For each process P*, the tomographically estimated transfer matrix estimate E = B(g*)⁻¹P*B⁻¹ is evaluated in the final gauge B obtained from the flip-flop algorithm. We find that in all cases, the Markovian channel estimate gives a better fit to the data than assuming the gate is ideal.**

| Process | ∥*E - E^{ideal}*∥ | ∥*E* - *e^{L}*∥ |
|---|---|---|
| CNOT_{single} | 0.23 | 0.18 |
| $T ⊗ I$ | 0.19 | 0.18 |
| $I ⊗ T$ | 0.20 | 0.17 |
| CNOTₚₐᵣₐₗₗₑₗ | 0.37 | 0.17 |
| $\sqrt{X} ⊗ I$ | 0.20 | 0.17 |
| $I ⊗ \sqrt{X}$ | 0.19 | 0.17 |

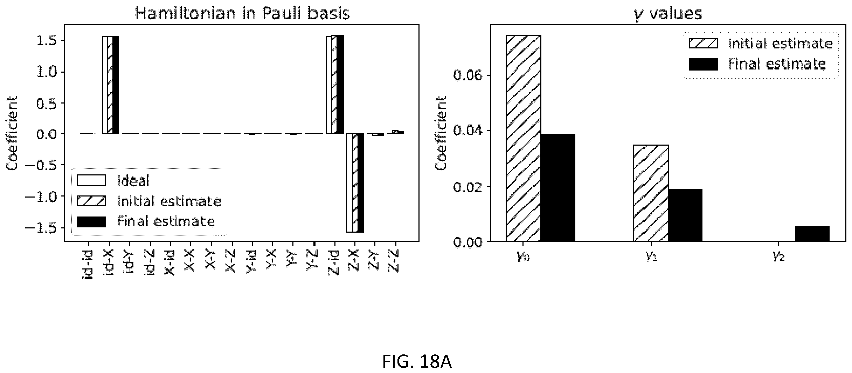

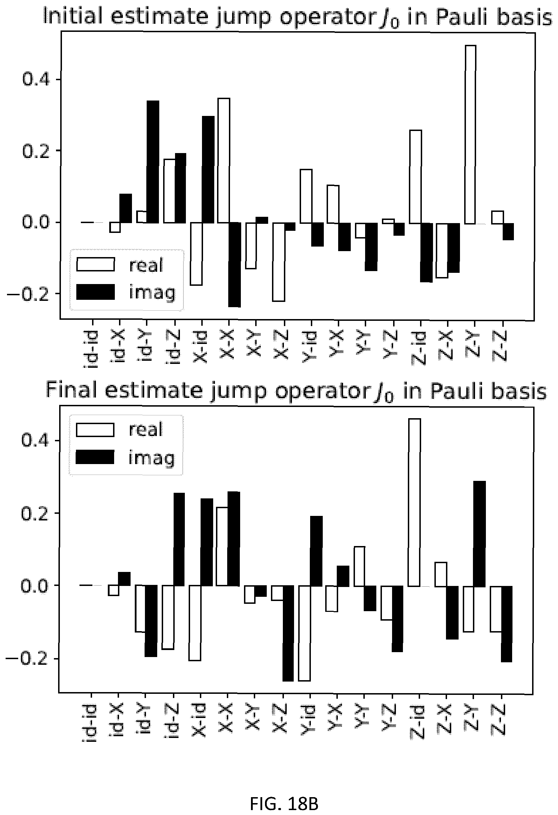

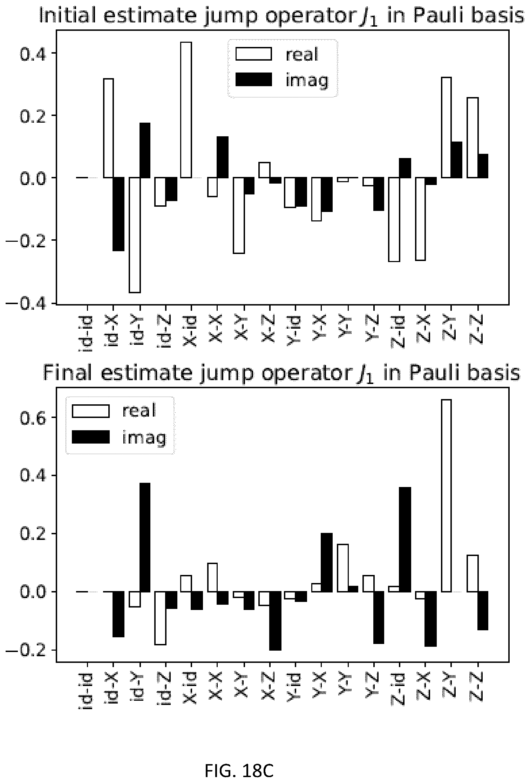

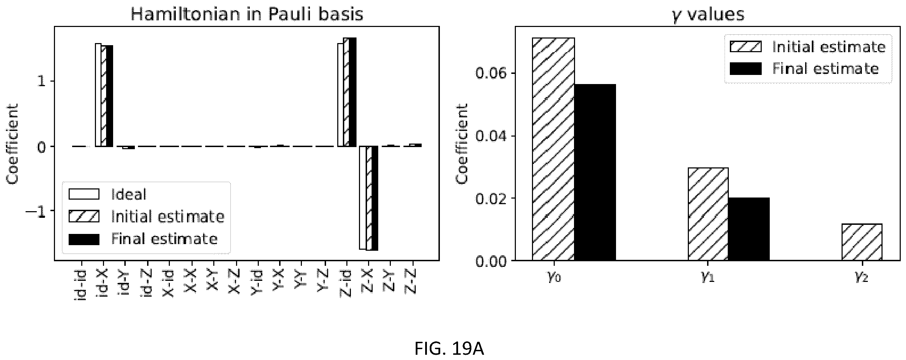

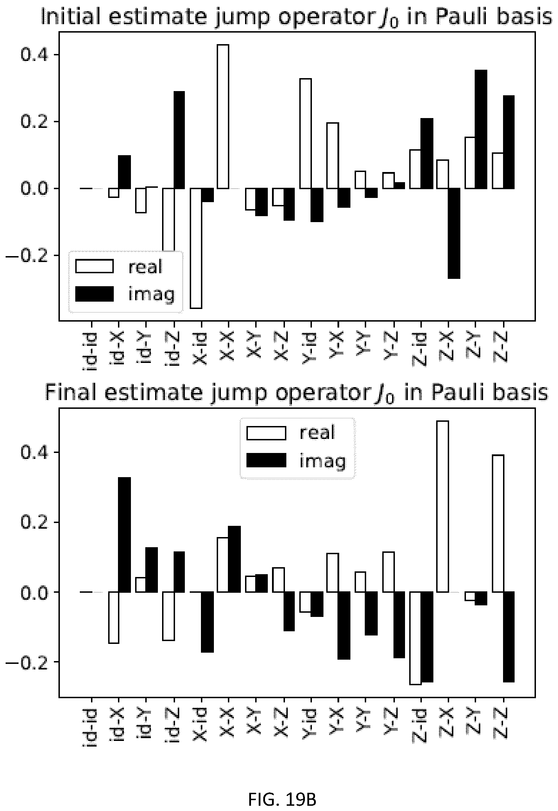

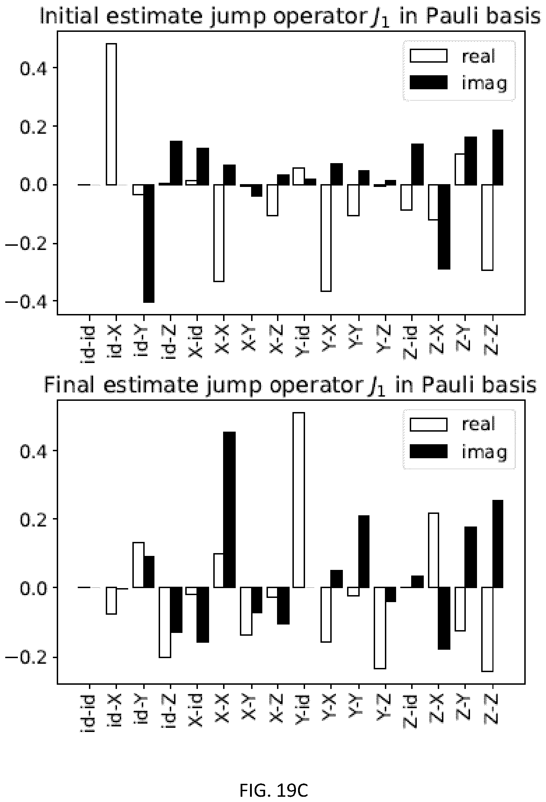

For completeness, in Figures 18A to 19C we compare the initial and final estimates for each implementation of the CNOT. The estimated canonical decomposition of the estimated Lindbladian generators for the CNOT implemented on on qubit pair (13,14) on *ibm_cairo* in Figure 18. Here we compare the ideal unitary process with experimental estimates before and after Gate Set Flip-Flop, for the case where the gate was implemented on (13,14) alone while the rest of the device was left idle. Figure 19 shows the canonical decomposition of the estimated Lindbladian generators for the CNOT implemented on qubit pair (13,14) on *ibm_cairo.* Here we compare the ideal unitary process with experimental estimates before and after Gate Set Flip-Flop, for the case where the gate was implemented in parallel with CNOT gates being applied simultaneously to pairs (10,12) and (16,19). We notice that in both cases, the Hamiltonian part of the Lindbladian remains relatively stable, but the final choice of gauge output by the flip-flop algorithm yields an apparent reduction in the strength of the dissipative part.

### Idling Cross-talk Experiment on ibm_perth

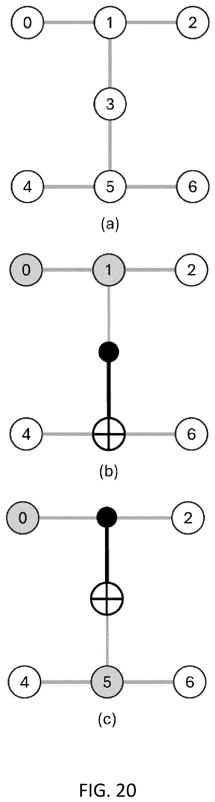

Here we investigate the noisy idling process on pairs of qubits. We take as the gate set, $G = \left\{\begin{matrix}CNOT , T ⊗ I , I ⊗ T , \sqrt{X} ⊗ I , I ⊗ \sqrt{X} , \\ D , {D}^{5} , {D}_{X} , {D}_{X}^{5} , {D}_{CNOT} , {D}_{CNOT}^{5}\end{matrix}\right\}$ where is the two-qubit channel obtained by sending a delay instruction to the quantum device. We used a delay length of 380ns to approximately match the time taken to implement a CNOT gate on the device. 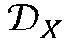 are 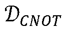 are obtained by sending the same length of delay to the target qubit pair, while either X or CNOT gates, respectively, are applied to nearby qubits. In this section we give a demonstration of our algorithm for two different pairs on the *ibm_perth* device, namely the pairs labelled (0,1) and (0,5). In Figure 20 we show the device layout and highlight which qubits are targeted for tomography, and where the CNOT is applied in the case of the 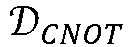 process. The leftmost part of Figure 20 shows the qubit layout on *ibm_perth.* Numbered vertices show qubit locations, edges show connections where CNOT gates are available. In the central part of Figure 20, qubits 0 and 1 show the position of the pair targeted for process tomography in the (0,1) run. For the 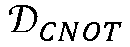 process, the CNOT is applied on pair (3,5) as shown. The rightmost part of Figure 20 shows tomography of the 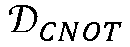 process on qubits (0,5), the CNOT is applied between qubits 1 and 3.

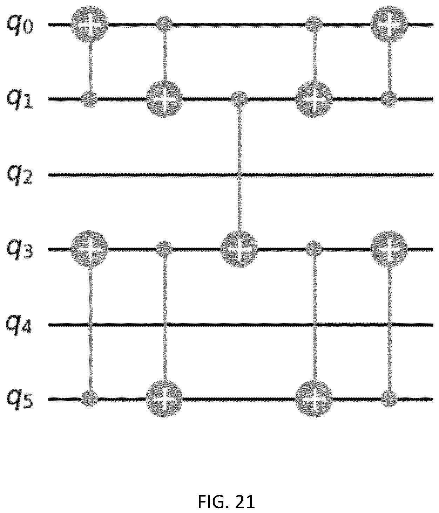

For the 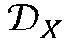 processes, X gates are applied to all qubits not targeted for tomography. For example, when characterising the 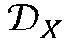 idling process on qubit pair (0,1), the X gate is applied to qubits 2, 3, 4, 5 and 6. For the (0,1) pair, the CNOT used to aid gauge optimisation is available on the device as an elementary gate. However for the gate set targeting (0,5), a direct connection is not available. We instead implement the CNOT for this pair using the circuit decomposition shown in Figure 21.

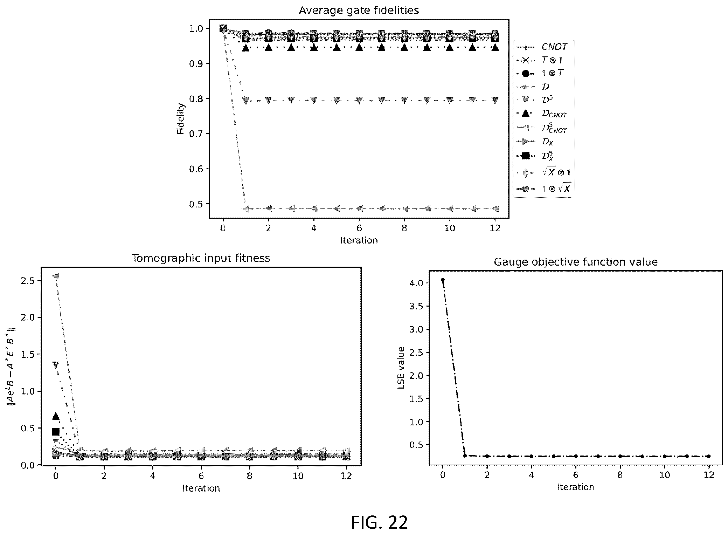

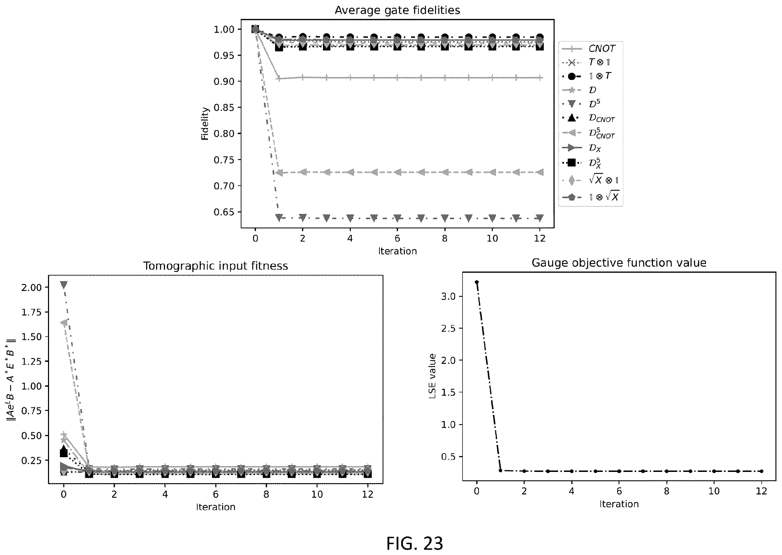

Once again, we use the Alternating Projections method for fitting the CNOT, and Convex Solve on the principal branch for all others. We show the convergence for pairs (0,1) and (0,5) in Figures 22 and 23. Figure 22 shows Gate Set Flip-Flop figures for the idling experiment on qubits (0,1) from *ibm_perth.* The top panel shows the average gate fidelity between the ideal gate and the estimated Markovian process at each iteration, computed using equation (**44**). The bottom left panel shows the distance between raw tomographic data and the equivalent data for the estimated Markovian process assuming the current gauge. The bottom right panel shows the gauge objective function as defined in equation (38).

Figure 23 shows Gate Set Flip-Flop figures for the idling experiment on qubits (0,5) from *ibm_perth.* The top panel shows the average gate fidelity between the ideal gate and the estimated Markovian process at each iteration, computed using equation (44). The bottom left panel shows the distance between raw tomographic data and the equivalent data for the estimated Markovian process assuming the current gauge. The bottom right panel shows the gauge objective function as defined in equation (38).

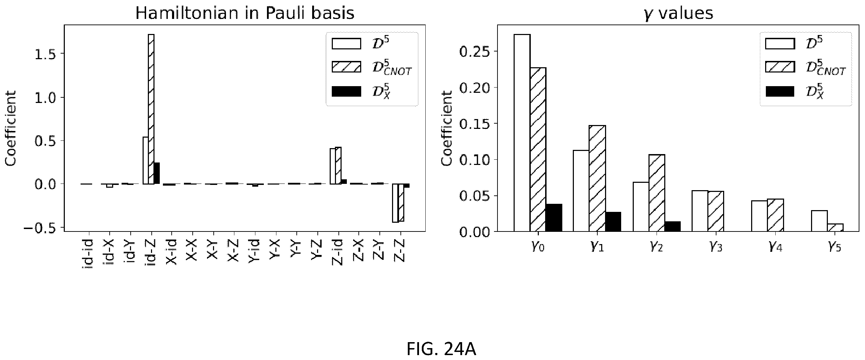

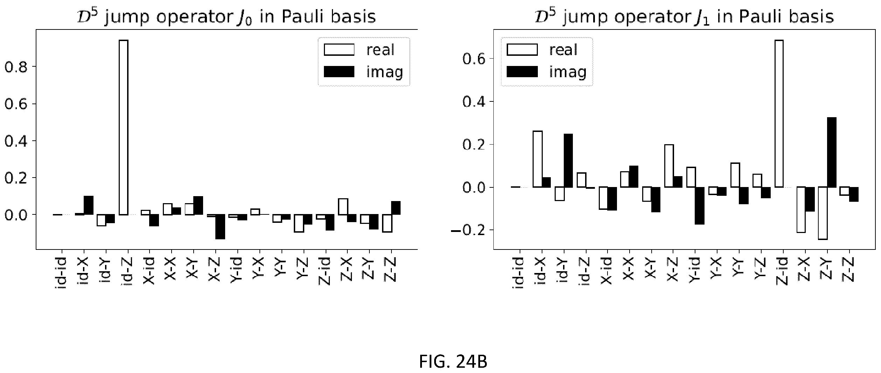

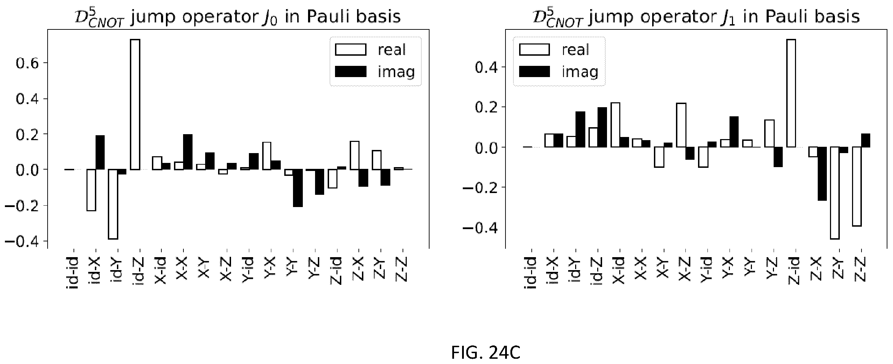

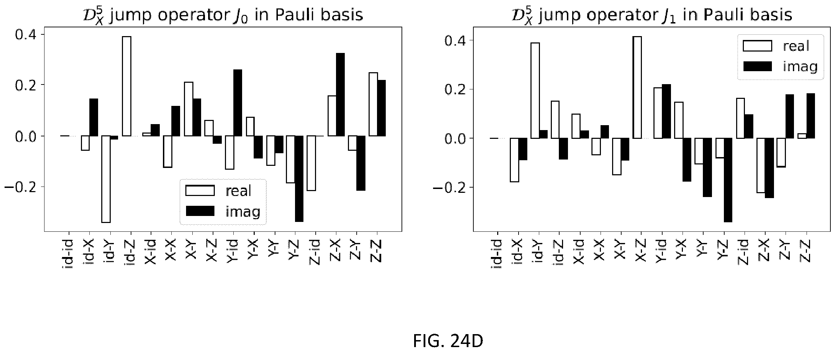

We remark that the approach of using Convex Solve on a single branch is still successful in achieving convergence to a good set of solutions, despite the fact that several of the idling processes turn out to be very far from the identity channel, as evidenced in Table 5. The distances of the 1900 ns idling processes from the ideal were observed to be much larger than any seen for the two-qubit gates analysed, whereas distances to the estimated Markovian channel were comparable to other cases. The Lindbladian decompositions are plotted in Figures 24A to 25D.

Specifically, Figures 24A to 24D show the canonical decompositions of the estimated Lindbladian for three variants of the idling process on the adjacent qubit pair (0,1) (see Figure 18) on *ibm_perth.* The ideal process (i.e. the generator of the identity channel) is not shown, since the Hamiltonian and jump operators would all be zero. The estimates are output from the Gate Set Flip-Flop algorithm once converged. The 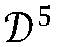 dataset is collected while the whole device is left to idle for 5 repetitions of the 380ns delay instruction. The ${D}_{CNOT}^{5}$ dataset is collected with pair (0,1) idle for the same length of time while a CNOT is applied in parallel to pair (3,5) for 5 repetitions (see Figure 20). The ${D}_{X}^{5}$ dataset is collected while pair (0,1) idles while the X gate is applied 5 times to all other qubits.

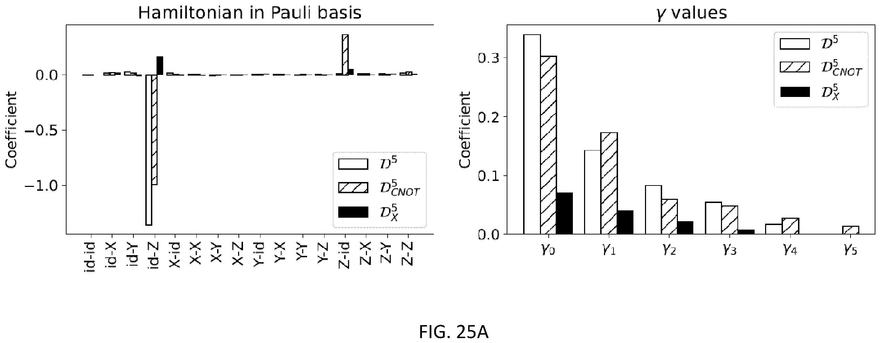

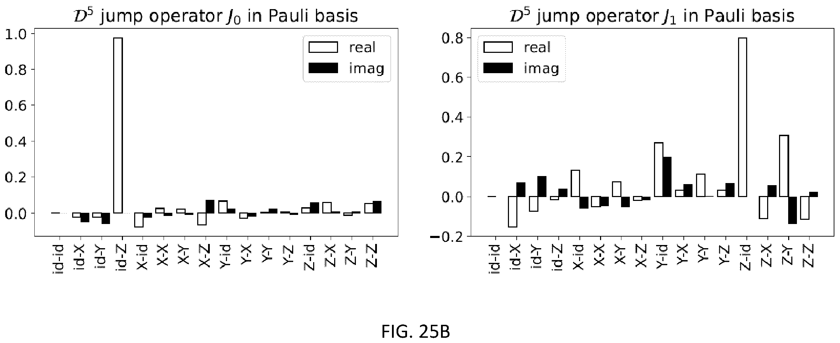

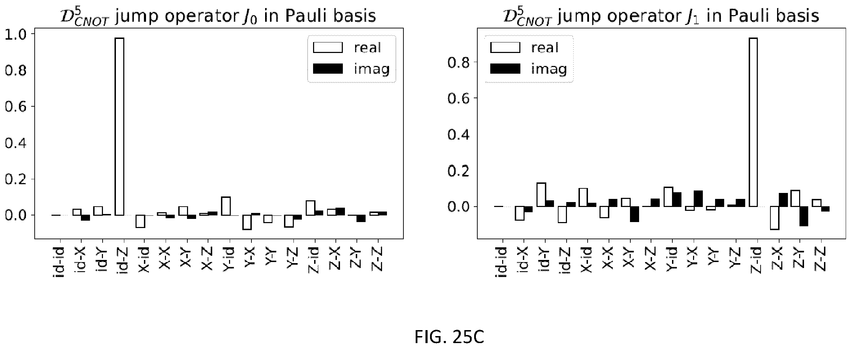

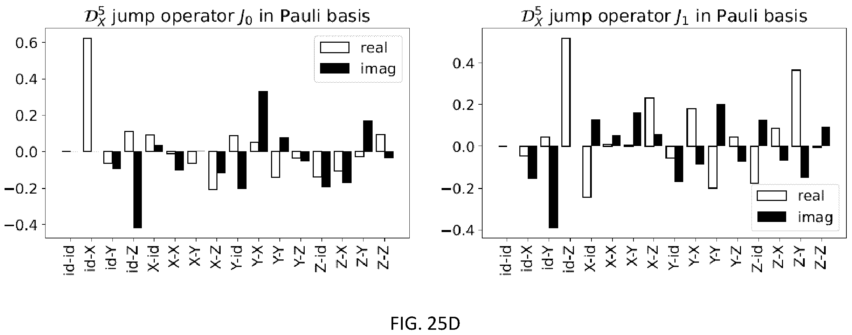

In Figures 25A to 25D we show canonical decompositions of idling processes for the separated qubit pair (0,5) on *ibm_perth* (Figure 20), estimated using Gate Set Flip-Flop. The 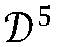 dataset is collected while the whole device is left to idle for 5 repetitions of the 380ns delay instruction. The ${D}_{CNOT}^{5}$ dataset is collected with pair (0,5) idle for the same length of time while a CNOT is applied in parallel to pair (2,3) for 5 repetitions (see Figure 20). The ${D}_{X}^{5}$ dataset is collected while pair (0,5) idles while the X gate is applied 5 times to all other qubits.

We find that the noise differs significantly in character depending on the qubit choice and the gates applied in parallel. Remarkably, for both pairs, the noise is reduced dramatically when X gates are applied to the other qubits, compared to the case where all qubits are left to idle. One possible explanation is that repeatedly applying X pulses to neighbouring qubits might act as a rudimentary dynamical decoupling sequence. For the (0,1) pair, repeatedly applying a CNOT on qubits 3 and 5 appears to induce the build up of a coherent Z error on qubit 1, while both the 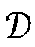 and 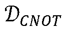 processes exhibit a ZZ coupling between the target qubits. In contrast, the more separated (0,5) pair shows no significant ZZ coupling. Meanwhile application of CNOTs on the pair (1,3), situated between the target qubits (0,5), appears to reduce the effective coherent Z error on qubit 5 while increasing it on qubit 0.

Key parameters from these results are summarised in Tables 5(a) and 5(b), below for the (0,1) and (0,5) pairs respectively.

| Process | ∥*E - E^{ideal}*∥ | ∥*E* - *e^{L}*∥ |
|---|---|---|
| CNOT | 0.28 | 0.23 |
| $T ⊗ I$ | 0.25 | 0.22 |
| $I ⊗ T$ | 0.25 | 0.23 |
| 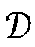 | 0.57 | 0.22 |
| 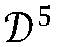 | 2.08 | 0.18 |
| 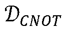 | 1.08 | 0.21 |
| ${D}_{CNOT}^{5}$ | 4.07 | 0.22 |
| 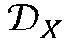 | 0.33 | 0.24 |
| ${D}_{X}^{5}$ | 0.75 | 0.21 |
| $\sqrt{X} ⊗ I$ | 0.27 | 0.22 |
| *Table* 5(a) | | |
| CNOT | 0.76 | 0.24 |
| $T ⊗ I$ | 0.30 | 0.23 |
| $I ⊗ T$ | 0.28 | 0.25 |
| 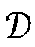 | 0.77 | 0.21 |
| 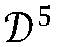 | 3.23 | 0.23 |
| 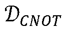 | 0.66 | 0.26 |
| ${D}_{CNOT}^{5}$ | 2.63 | 0.18 |
| 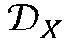 | 0.35 | 0.24 |
| ${D}_{X}^{5}$ | 0.55 | 0.20 |
| $\sqrt{X} ⊗ I$ | 0.31 | 0.24 |
| *Table 5(b)* | | |

| | | |
|---|---|---|
| *Distances between the tomographic channel estimates and corresponding ideal transfer matrices E^{ideal} and estimated Markovian channels e^{L}*, *respectively, from idling analysis on ibm_perth, on qubit pairs - Table 5(a) for qubits (0,1), and Table 5(b) for qubits (0,5). For each process P**, *the tomographically estimated transfer matrix estimate E = B*(*g**)⁻¹*P*B*⁻¹ *is evaluated in the final gauge B obtained from the flip-flop algorithm.* | | |

### Final comments

In this disclosure, we have presented two new algorithms for the problem of fitting Lindbladian models to tomographic data. We first introduced the Alternating Projections algorithm. By making use of an initial best guess for the model describing the target process, we avoid global random basis searches for the case where the ground truth channel has degenerate spectrum, massively reducing the run-time for the logarithm search method in these difficult cases. On the other hand, we have argued that in many cases where the noise in quantum dynamical processes is weak, we can sidestep the problems associated with degenerate spectrum altogether. In particular, we argue that problematic eigenspace splitting occurs only when some of the eigenvalues of the transfer matrix are real and negative. Otherwise, under modest assumptions that are often reasonable for quantum logic gates on current hardware, it is possible to find a good solution by Convex Solve on the principal branch alone. We proved that this holds in the absence of statistical error, and provided numerical and experimental evidence that it remains an effective strategy in more realistic settings. Nevertheless, there exist important cases where eigenspace splitting does occur, such as CNOT, ISWAP and tensor products of certain elementary gates. In these cases, we demonstrated numerically that the Alternating Projections algorithm was effective for synthetic data with a variety of realistic gate noise models. We have therefore demonstrated that logarithm search methods for Lindbladian fitting can be made practical for the important case of two-qubit quantum logic gates on noisy hardware.

We also introduced the Gate Set Flip-Flop algorithm. This protocol augments the Lindbladian fitting procedure with techniques from gate set tomography to filter out state preparation and measurement errors. In our implementation we use either Alternating Projections or Convex Solve as the Lindbladian fitting subroutine, depending on the type of process, but we note that any other Lindbladian fitting method such as direct numerical search could be substituted. We demonstrated that flip-flop with Alternating Projections/Convex Solve consistently improves the Lindbladian fit after a small number of iterations in the presence of realistic SPAM errors and statistical noise. Finally we demonstrated that the algorithm can also be effective in practice for real experimental data, by applying it to tomographic data collected from IBM superconducting-qubit hardware.

## Claims

1. A method of estimating a Lindbladian generator of a quantum channel representing a noisy implementation of a quantum dynamical process on a system of dimension *d*, the method comprising:
(1) providing a *d*² × *d*² transfer matrix, *E,* representing the noisy quantum channel and computing a set of eigenvalues, *µⱼ*, and corresponding right and left unit eigenvectors *rⱼ* and *lⱼ* of *E,* where *j* ∈ {1, ... , *d*²};
(2) for each *µⱼ*, calculating *λⱼ* = ln(*µⱼ*), such that *e^{λ^{j}}* = *µⱼ* and |Im(*λⱼ*)| ≤ *π*;
(3) identifying a set of *n* ≤ *d*² distinct eigenvalues and computing an eigenspace projector Π*ₖ* for an eigenspace associated with each distinct eigenvalue, where *k* ∈ {1, ... ,*n*};
(4) providing a logarithmic branch shift list, *M* = {*mⱼ*}, indicating which logarithmic branch is to be considered for each *λⱼ* and modifying each *λⱼ* by adding its respective logarithmic branch shift to provide *λ̂ⱼ* = *λⱼ* + 2*πmⱼi,* wherein each *mⱼ* is an integer between -*mₘₐₓ* and *mₘₐₓ*;
(5) providing an initial guess of a Lindbladian, *L*₀ and randomly perturbing *L*₀ to provide *L̃*₀;
(6) computing eigenvalues *λ̃*₁ ... *λ̃*_{*d*₂} and corresponding eigenvectors *ṽ*₁ ... *ṽ*_{*d*₂} of *L̃*₀;
(7) noting the rank, *wₖ,* of each of the *n* projectors, Π*ₖ* and computing a cost, ∥*ṽⱼ* - Π*ₖ*ṽ*ⱼ*∥ for each possible pairing of *j* and *k* and finding the lowest cost assignment of {*ṽⱼ* : *j* ∈ {1, ... , *d*²}} onto {Π*ₖ* : *k* ∈ {1, ...,*n*}};
(8) constructing a *d*² × *d*² matrix, *K* by, for each k:
(i) noting the set of eigenvectors ${{v}^{˜}}_{{i}_{k , 1}} … {{v}^{˜}}_{{i}_{k , {w}_{k}}}$ assigned to each Π*ₖ* in step (7);
(ii) computing a cost |*λ̂_{i_{k,a}}* - *λ̃_{i_{k,b}}*| for each 1 ≤ *a* ≤ *wₖ* and 1 ≤ *b* ≤ *wₖ*;
(iii) identifying a minimum cost perfect matching *Wₖ* between the sets $\left\{{\hat{λ}}_{{i}_{k , 1}},…,{\hat{λ}}_{{i}_{k , {w}_{k}}}\right\}$ and $\left\{{{λ}^{˜}}_{{i}_{k , 1}},…,{{λ}^{˜}}_{{i}_{k , {w}_{k}}}\right\}$: and
(iv) for {*λ̃_{i_{k,a}}*,*λ̃_{i_{k,b}}*} ∈ *Wₖ,* setting the *i_{k,a}*-th column of *K* to Π*ₖṽ*_{*i*_{*k*,*b*}};
(9) constructing a matrix *D̂* = Diag(*λ̂*₁ ... *λ̂*_{*d*₂}), computing *A̅ = KD̂K*⁻¹, and computing an optimal solution *L̅* to a convex optimisation problem by solving *L̅* = min ∥*L* - *A̅*∥ subject to the constraint that *L* is a Lindbladian;
(10) checking whether ∥*e^{L̅}* - *E*∥ ≤ ∥*e*^{*L*⁰} - *E*∥; and
(11) if ∥*e^{L̅} - E*∥ < ∥*e*^{*L*⁰} *- E*∥ outputting *L̅* as the estimated Lindbladian generator.

2. The method of claim 1, further comprising, prior to executing step (11) performing steps (6) to (10) in order an additional *T* ≥ 1 times; wherein for each additional execution of steps (6) to (10):
in step (6) *L̃*₀ is replaced by *L̅* from the most recent execution of step (9); and
in step (9) a check is made as to whether ∥*e^{L̅t}* - *E*∥ < ∥*e^{L̅t-1}* - *E*||, where 1 ≤ *t* ≤ *T* indexes the number of additional executions of steps (6) to (10).

3. The method of claim 2, wherein the method halts in the event that:
∥*e^{L̅t}* - *E*∥ ≥ ∥*e*^{*L̅t*-1} *- E*∥, in which case *L̅*_{*t-*1} is output as the Lindbladian generator; or
*t = T,* in which case *L̅ₜ = L̅_{T}* is output as the Lindbladian generator.

4. The method of any preceding claim, further comprising repeating the entire method at least one further time using a different random perturbation in step (5); and wherein the Lindbladian generator having the lowest value of ∥*e^{L̅} - E*∥ across all executions is output as the Lindbladian generator.

5. The method of any preceding claim, wherein the perturbation has the form: ${{L}^{˜}}_{0} = {L}_{0} + R ;$ or ${{L}^{˜}}_{0} = {L}_{0} + {H}^{⊗ 2 n} {RH}^{⊗ 2 n} ;$
wherein the quantum dynamical process is associated with a system of *n* qubits, *R* is a random diagonal matrix with a small norm, and *H* is the Hadamard gate; and/or
wherein |*mₘₐₓ*| ≤ 1.

6. The method of any preceding claim wherein in step (3) any two eigenvalues, *µⱼ, µₖ* are declared as degenerate when |*µⱼ - µₖ*| ≤ *β*, and otherwise are declared as distinct, where *β* is a predetermined precision parameter.

7. The method of any preceding claim, wherein the lowest cost assignment in step (7) is solved using a minimum cost, maximum flow optimisation procedure.

8. The method of claim 7, wherein the minimum cost, maximum flow optimisation procedure includes:
constructing a directed graph having 2 *+ d*² + n vertices, wherein each eigenvector *ṽⱼ : j* ∈ {1, ... , *d*²}, and each eigenspace projector Π*ₖ* : *k* ∈ {1, ... , *n*} is associated with a different vertex, the remaining two vertices being a source vertex, s and a sink vertex, *t;*
joining each vertex associated with each eigenvector *ṽⱼ* to the source vertex, *s,* with edges each having capacity 1 and weight 0;
joining each vertex associated with each eigenvector *ṽⱼ* to each vertex associated with each eigenspace projector Π*ₖ* with edges each having capacity 1 and weight proportional to ∥*ṽⱼ -* Π*ₖṽⱼ*∥ for the two vertices which that edge joins;
joining each vertex associated with each eigenspace projector Π*ₖ* to the sink vertex, *t,* with edges each having capacity equal to the rank of the eigenspace projector Π*ₖ* to which each edge joins and weight 0.

9. A method of estimating state preparation and measurement, SPAM, errors in quantum gate set tomography, the method comprising:
(a) receiving an initial guess for a gauge matrix, *B*₀, a measured gram matrix *g,* a tomographic data matrix, *M,* encoding the measurement data for each possible state preparation and measurement setting in process tomography of a quantum dynamical process;
(b) computing an estimate of a channel representing the quantum dynamical process in the current gauge by computing *T = B*₀*g*⁻¹*MB*₀⁻¹;
(c) receiving a best guess Lindbladian *L* representative of noise in the quantum dynamical process;
(d) using a gauge optimisation procedure using *e^{L}* as a target process, and *B*₀ to obtain a new gauge, *Bᵢ*; and
(e) outputting *Bᵢ*.

10. The method of claim 9, wherein the best guess Lindbladian *L* is provided by estimation or calculation based on tomographic data in a gauge **characterised by** the gauge matrix *B*₀; and/or wherein the best guess Lindbladian *L* is derived by the method of any one of claims 1 to 8.

11. The method of claim 9 or 10, wherein *Bᵢ* from step (e) is used to extract a transfer matrix *E'* and wherein the method further includes executing the method of any one of claims 1 to 8 using the transfer matrix *E'* in place of the transfer matrix *E* in step (1) to output an improved *L̅*.

12. The method of claim 11, further including repeating the method of any one of claims 9 to 11 one or more additional times, to iteratively update the approximation for *Bᵢ* and *L̅*.

13. The method of any of claims 9 to 12, wherein SPAM errors are estimated on a set of *k* quantum dynamical processes, and wherein the gauge optimisation procedure comprises:
optimising a function, *h*, across all *k* quantum dynamical processes, wherein *h* is of the form: $h = \frac{1}{t} ln \left({\sum }_{i = 1}^{k} exp\left(t\left‖{E}_{i}-{e}^{{L}_{i}}\right‖\right)\right)$
wherein *Lᵢ* is the current Lindbladian for the *i^{th}* quantum dynamical process, *Eᵢ* is an estimated transfer matrix of the *i^{th}* quantum dynamical process in the current gauge, and *t* is a constant scaling factor.

14. A computer system operable to enact the method of any one of the preceding claims; optionally wherein the computer system further includes a quantum computer operable to supply measurements for constructing the transfer matrix, *E.*

15. A computer program which when executed on a computer causes the computer to enact the method of any one of claims 1 to 13.
